# EUROPÄISCHE PATENTSCHRIFT

(11) **EP 2 874 922 B1**
(45) Veröffentlichungstag und Bekanntmachung des Hinweises auf die Patenterteilung: **31.08.2016**
(21) Anmeldenummer: 13739930.9
(22) Anmeldetag: 17.07.2013
(51) Int. Cl.: B65G 17/32, B29C 49/42, B65G 47/86, B65G 47/90

(54) **GREIFER**
GRIPPER
DISPOSITIF DE PRÉHENSION

(30) Priorität: 23.07.2012 CH 11102012
(43) Veröffentlichungstag der Anmeldung: 27.05.2015
(73) Patentinhaber: Ferag AG, 8340 Hinwil (CH)
(72) Erfinder: MÄDER, Carl, Conrad, CH-8335 Hittnau (CH)
(74) Vertreter: Frei Patent Attorneys
(86) Internationale Anmeldenummer: PCT/CH2013/000133
(87) Internationale Veröffentlichungsnummer: WO 2014/015445

(56) Entgegenhaltungen:
- EP-A1- 0 577 569
- DE-A1- 10 059 951
- DE-U1- 29 602 798
- US-A- 5 261 520

## Beschreibung

Die Erfindung liegt auf dem Gebiet der Fördertechnik. Sie betrifft einen Greifer zum Ergreifen und gehaltenen Fördern von Gegenständen, wobei der Greifer ein Steuerelement zum Betätigen des Greifers aufweist. Die Erfindung betrifft ausserdem eine Förderanlage mit einer Mehrzahl von Greifern mit Steuerelementen zum Betätigen der Greifer.

Zur besseren Veranschaulichung der Erfindung beschreiben wir in den folgenden Abschnitten verschiedene Beispiele eines Greifers, welcher insbesondere zum Ergreifen und Fördern von räumlich ausgedehnten, symmetrischen Gegenständen, Gegenständen mit einem Haltering, hohlen Gegenständen, Gegenständen mit unterschiedlichen Formen und/oder Grössen geeignet ist. Der Greifer eignet sich besonders zum Ergreifen und Fördern von Preformlingen für die Produktion von Behältnissen aus Kunststoff, z.B. PET-Flaschen

Beispielsweise werden solche Greifer eingesetzt, um Preformlinge (Vorformlinge) für das Formblasen von Behältern aus Kunststoff und die hergestellten Behälter zwischen verschiedenen Stationen einer Blasformanlage zu fördern. Die Preformlingen sind einseitig offene Hohlkörper aus einem thermoplastischen Kunststoff mit einer im Wesentlichen rotationssymmetrischen Form. Sie weisen in der Regel ein Gewinde und einen Haltering auf.

Bekannte Greifer für Preformlinge sind nach Art einer Zange gestaltet. Die Greiferbacken sind in einer Ebene angeordnet, die senkrecht zur Rotationsachse des Preformlings liegt. Sie untergreifen den Haltering nach Art einer Gabel durch Annäherung von der Seite. Fördervorrichtungen mit solchen Greifern brauchen daher im Aufnahmebereich relativ viel Platz. Die Greiferbacken haben in dem Bereich, in dem sie den Gegenstand erfassen (Klemmbereich), eine konkave Form und sind damit an die zylinderförmige Form unterhalb des Halterings angepasst. Gegenstände mit unterschiedlichen Durchmessern können so jedoch nur innerhalb gewisser Maximal- und Minimaldurchmesser ergriffen werden. Beispiele für bekannte Preform-Greifer sind in der US 2010/0278959, US 6,612,634 oder der DE 10325693 beschrieben. Alternativ kommen Klemmdorne zum Einsatz, die zur Halterung in einen Mündungsbereich des Vorfomilings einführbar sind. Die Dokumente EP 0 577 569 A1 und DE 2 960 27 98 U1 offenbaren auch solche gattungsgemäßen Greifer.

Aus der US 4,921,294 ist ein Greifer zum Ergreifen von flächigen Produkten, insbesondere Druckereiprodukten, bekannt, der einen Greiferkörper, eine feststehende und eine bewegliche Greiferbacke umfasst. Der Aufbau ist spiegelsymmetrisch. Die bewegliche Greiferbacke ist durch einen spiegelsymmetrischen Drahtbügel aus federstahl gebildet. Der Drahtbügel ist in seinen Endbereichen zu jeweils einer Helix geformt. Ausserdem bildet er, ausgehend von den Helices, zwei Haltezungen aus. Diese sind senkrecht zur Achse der Helices orientiert und voneinander beabstandet. Zwischen den Haltezungen ist der Bügel so gebogen, dass er ein längliches, gerades Bügelteil ausbildet, das sich der Nähe der gemeinsamen Achse der Helices befindet und als Presselement wirkt. Die Helices sind auf Zapfen aufgesteckt, die an einander gegenüberliegenden Seiten am Greiferkörper angeordnet sind und miteinander fluchten. Indem die Helices im Greiferkörper fixiert sind, wird der Drahtbügel gegen die feststehende Greiferbacke vorgespannt. Durch die Zapfen wird eine Schwenkachse festgelegt, um die sich die Greiferbacke drehen kann. Die Greiferbacke wird durch zwei Steuerelemente betätigt, die jeweils auf den Drahtbügel im Bereich der Haltezunge drücken. Diese Steuerelemente drücken die bewegliche Greiferbacke von der festen Greiferbacke weg, wenn sie gemeinsam betätigt werden. Sie sind dazu gegen die bewegliche Greiferbacke vorgespannt.

Diese Konstruktion ist aufgrund der Ausformung des Bügels mit zwei vorstehenden Zungen und einem länglichen Presselement an flächige Gegenstände angepasst. Zum Fördern von räumlich ausgedehnten Gegenständen mit unterschiedlicher Form eignet sie sich nicht. Der Betätigungsmechanismus besteht aus mehreren Teilen und ist daher aufwändig in der Fertigung und Wartung.

Die nachfolgend als Beispiel aufgeführten Greifer dienen einer besseren Veranschaulichung der Erfindung und sind enstprechend der Patentanmeldung WO 2012/142719 A1 ausgebildet. Die Greifer stellen eine Fördereinrichtung und ein Betriebsverfahren zur Verfügung, bei dem bzw. der die oben genannten Nachteile vermieden werden. Der Greifer ist insbesondere geeignet, räumlich ausgedehnte Gegenstände mit unterschiedlicher Form, z.B. Preformlinge, zuverlässig zu greifen und zu fördern. Der Greifer ist einfach und kostengünstig herstellbar und möglichst robust.

Im Folgenden werden ein Greifer, eine Förderanlage mit solchen Greifern und ein Betriebsverfahren für eine solche Förderanlage beschrieben. Dabei sind in der Beschreibung und in den Zeichnungen verschiedene vorteilhafte Weiterbildungen der Erfindung beschrieben.

Der Greifer umfasst einen Greiferkörper, eine erste Greiferbacke und eine zweite Greiferbacke. Die Greiferbacken weisen jeweils wenigstens einen Klemmbereich auf, in dem sie im Anwendungsfall mit dem Gegenstand zusammenwirken. Sie können relativ zueinander einen offenen und einen geschlossenen Zustand einnehmen und zum Halten eine Klemmkraft auf den zu ergreifenden Gegenstand ausüben.

Es ist wenigstens ein Steuerelement vorhanden, das mit einem Schaltmittel zusammenzuwirken imstande ist, und wenigstens indirekt auf eine der Greiferbacken wirkt, um diese zu bewegen.

Wenigstens eine der Greiferbacken umfasst einen Backenkörper, der elastisch verformbar ist und so am Greiferkörper gelagert ist, dass der Backenkörper ohne Krafteinwirkung auf das Steuerelement eine definierte räumliche Position einnimmt und sich bei Krafteinwirkung auf das Steuerelement elastisch verformt.

Der Backenkörper wird durch geeignete Lagerung im Greiferkörper vorzugsweise nicht nur entlang einer Linie verformt, sondern über seine gesamte Ausdehnung. Durch die elastische Verformung wird die Greiferbacke aus der definierten Position ausgelenkt, und der Greifer öffnet oder schliesst sich. Der Greifer hält den Gegenstand im Formschluss, Kraftschluss und/oder Reibschluss.

Vorzugsweise ist der Backenkörper an wenigstens drei Punkten, die nicht entlang einer gemeinsamen Achse liegen, oder wenigstens zwei verschiedenen Achsen am Greiferkörper gelagert.

Die Achsen sind beispielsweise parallel oder windschief relativ zueinander.

Hierdurch wird erreicht, dass sich die Greiferbacke bei Betätigen des Steuerelements relativ zur anderen Greiferbacke bewegt, so dass sich der Greifer beispielsweise öffnet oder schliesst.

Die Greiferbacke macht daher keine genaue Schwenkbewegung um eine eindeutig definierte Schwenkachse, sondern eine Bewegung, die sich durch eine Schwenkbewegung um eine Achse annähern lässt (im Folgenden: Bewegung um eine ungefähre Schwenkachse).

Unter Belastung, z.B. wenn durch das Steuerelement ein Drehmoment auf den Backenkörper übertragen wird, wird der Backenkörper mindestens in einzelnen Abschnitten verdreht (Torsion).

Durch die oben beschriebene Lagerung entlang zweier Achsen bzw. an wenigstens drei Punkten kann der Backenkörper keine reine Torsionsbewegung ausführen, sondern wird wenigstens bereichsweise auch auf Biegung belastet. Hierdurch lassen sich relativ grosse elastische Energien in einem einfachen mechanischen Element, z.B. einem asymmetrischen schlaufenartigen Drahtbügel, speichern. Diese führen auch in dieser sehr einfachen Konstruktion zu grossen Rückstellkräften und damit zu einer guten Haltewirkung.

Die asymmetrische Lagerung und die einseitige Betätigung führt dazu, dass der Drahtbogen quer zur ungefähren Schwenkachse gesehen ungleichmässig geöffnet wird, d.h. an der Seite des Steuerelements mehr als an der vom Steuerelement beabstandeten Seite. Dieser Effekt kann genutzt werden, wenn Gegenstände in Richtung der ungefähren Schwenkachse aufgenommen werden sollen, indem sich der Greifer mit der etwas mehr geöffneten Seite voraus an den Gegenstand annähert.

Der Backenkörper umfasst vorzugsweise ein elastisch verformbares Material, insbesondere einen Federstahl-Draht. Er kann ein- oder mehrstückig ausgeführt sein und aus einem oder mehreren Materialien bestehen.

Vorzugsweise ist der Backenkörper ein Bügel aus einem draht- oder rohrförmigen Werkstoff, z.B. Metall oder Kunststoff, mit rundem, rechteckigem, quadratischem oder sonst wie geformten Querschnitt. Als "draht- oder rohrförmig" werden Elemente (im Folgenden vereinfacht "Drahtbügel" genannt) bezeichnet, deren Länge im gestreckten Zustand um ein Vielfaches grösser ist als ihre Dicke bzw. ihr Durchmesser. Eine solche Greiferbacke lässt sich einfach und kostengünstig herstellen.

Die für den Greifer wichtigen Funktionen, wie die Lagerung im Greiferkörper, das elastische Verformen beim Öffnen oder Schliessen und das Festhalten/Klemmen von Gegenständen, werden durch den Drahtbügel in einem gemeinsamen Bauteil realisiert.

Der Drahtbügel kann zur Vereinfachung der Herstellung auch aus mehreren verbundenen Teilen bestehen.

Der Durchmesser bzw. die Dicke des Drahtmaterials ist so gewählt, dass der Backenkörper ausreichend stabil zum Halten der gewünschten Gegenstände ist und ausreichend elastisch zum Öffnen und Schliessen durch elastisches Verformen.

Typischerweise liegt der Durchmesser des Drahtmaterials im Bereich von 1 bis 20 mm, vorzugsweise 3 bis 8 mm. Insbesondere liegt der Durchmesser des Drahtmaterials im Bereich von 1 bis 10 mm, vorzugsweise 1.1 bis 3.5 mm.

Vorzugsweise hat der Bügel die Form einer Schlaufe, die im Wesentlichen in einer Ebene liegt.

Die Enden der Schlaufe befinden sich vorzugsweise in räumlicher Nähe zueinander.

Ein Teil des Bügels ist so geformt, dass er einen Klemmbereich ausbildet. Der Klemmbereich ist vorzugsweise so geformt, dass im geschlossenen Zustand zusammen mit der weiteren Greiferbacke eine Aufnahme mit einer definierten Mindestgrösse ausgebildet wird.

Der Klemmbereich ragt dazu vorzugsweise bogenförmig aus der Ebene der Schlaufe hinaus und hat eine sich mit zunehmendem Abstand von der Ebene verjüngende Kontur, insbesondere eine halbkreisförmige, dreieckige oder mehreckige Kontur.

Die sich verjüngende Form dient zur sicheren Aufnahme von Gegenständen mit unterschiedlichen Grössen und Formen. Die Gegenstände zwingen den Greifer zu einer unterschiedlich weiten Öffnung der Greiferbacken, werden aber unabhängig vom Öffnungsgrad sicher gehalten, da der Klemmbereich durch die sich nach Aussen verjüngende Kontur von mehreren Seiten auf den Gegenstand drückt.

Alternativ zur sich verjüngenden Kontur oder zusätzlich dazu kann der Klemmbereich elastisch verformbare Klemmelemente mit einer höheren Elastizität als der Backenkörper aufweisen, die den Gegenstand beim Aufnehmen von mehreren Seiten halten.

Das Klemmelement ist beispielsweise ein elastisches Element, z.B. ein Gummistreifen oder eine Schraubenfeder, das innerhalb des Klemmbereichs positioniert und gegebenenfalls zwischen dem dort auskragend gebogenen Drahtbügel aufgespannt sind. Das Einsatzspektrum des Greifers wird weiter erhöht, wenn diese Klemmelemente auswechselbar sind, so dass je nach Anforderungen unterschiedliche Elastizitäten und Klemmkräfte realisiert werden können.

Der Bügel weist wenigstens zwei voneinander beabstandete Befestigungsabschnitte auf, mit denen er in bzw. an Lagerbereichen des Greiferkörpers gelagert ist.

Die Lagerbereiche und damit die Befestigungsabschnitte sind im Greiferkörper vorzugsweise entlang unterschiedlicher Achsen ausgerichtet, die vorzugsweise parallel verlaufen.

Die Lagerbereiche sind beispielsweise Löcher und/oder durchgehende Aussparungen im Greiferkörper, in die die Endbereiche des Bügels eingesteckt und der Bügel damit eingespannt werden kann.

Der Klemmbereich befindet sich insbesondere entlang des Drahtes gesehen zwischen den Befestigungsabschnitten. Durch diese Lagerung wird erreicht, dass sich der Bügel im Wesentlichen entlang seiner gesamten Ausdehnung verformt, wenn er an einer Stelle durch lokale Krafteinwirkung ausgelenkt wird. Der Greifer öffnet oder schliesst sich daher, selbst wenn nur an einer Stelle punktuell eine Kraft ausgeübt wird.

Die Gestaltung eines Steuerelements, das mit einem externen Schaltmittel zusammenwirkt, ist beim oben beschriebenen Bügel besonders einfach: Der Bügel weist dazu vorzugsweise in einem Endbereich einen Betätigungsabschnitt auf, welcher direkt mit einem mechanischen Schaltmittel zusammenzuwirken imstande ist oder als Träger einer Steuerrolle dient, die ihrerseits an dem Schaltmittel abrollt.

Der Betätigungsabschnitt ist dazu vorzugsweise relativ zum angrenzenden Befestigungsabschnitt abgebogen und weist vorzugsweise in eine Richtung, die senkrecht auf der ungefähren Schwenkachse der Greiferbacke steht. Durch den so gebildeten Hebel kann ein Drehmoment besonders gut auf den Bügel übertragen werden.

Alternativ zur Bügelform kann der Backenkörper auch ein in sich elastisch verformbares flächiges Element sein, z.B. eine Federstahlplatte, die im Greiferkörper eingespannt ist und einen geeignet geformten Klemmbereich ausbildet.

Vorzugsweise hat der Greifer zwei im Wesentlichen baugleich gestaltete Greiferbacken, die einzeln steuerbar sind.

Die Greiferbacken sind relativ zueinander spiegelsymmetrisch oder achssymmetrisch am Greiferkörper angeordnet.

Durch das gezielte Öffnen der einen oder der anderen Greiferbacke oder das gemeinsame Bewegen beider Greiferbacken kann die Richtung beeinflusst werden, in welche die ergriffenen Gegenstände abgegeben werden, insbesondere wenn sich der Greiferkörper, in Richtung der Schwerkraft gesehen, bei der Abgabe der Gegenstände unterhalb des Gegenstands befindet. Durch die gerichtete Abgabe erhält die Gesamtanlage trotz ausgesprochen einfacher Konstruktion der Greifer einen neuen Freiheitsgrad.

Die Steuerelemente für die beiden Greiferbacken befinden sich vorzugsweise an unterschiedlichen Seiten des Greiferkörpers, was die Anordnung der jeweiligen Schaltmittel vereinfacht.

Die Greifer können sich im Betrieb oberhalb, unterhalb oder neben den aufgenommenen Gegenständen befinden.

Die Gegenstände werden von oben oder von unten gegriffen oder durch Annäherung des Greifers an den Gegenstand seitlich entlang der Richtung der ungefähren Schwenkachse.

Ohne Krafteinwirkung auf das Steuerelement nehmen die Greiferbacken beispielsweise folgende Stellungen ein: Im Klemmbereich aneinander liegend (auch mit Vorspannung); im Klemmbereich mit einem geringen Abstand; Im Klemmbereich mit maximalem Öffnungsabstand. In den ersten beiden Fällen werden die Greiferbacken zum Öffnen aktiviert und umschliessen Gegenstände von Aussen. Im letzten Fall werden die Greiferbacken zum Schliessen aktiviert und ergreifen Gegenstände, indem sie im geschlossenen Zustand in eine Aussparung im Gegenstand einfahren und diesen von Innen festklemmen.

In einer weiteren vorteilhaften Ausgestaltung ist der Greifer selbstöffnend: Eine oder beide Greiferbacken werden geöffnet, wenn ein Gegenstand seitlich, d.h. in Richtung der ungefähren Schwenkachse, gegen die Greiferbacken drückt.

Die Greiferbacken werden ausgelenkt, so dass der Gegenstand zwischen sie eingeführt werden kann. Sobald sich der Gegenstand in der Aufnahme befindet, bewegen sich die Greiferbacken aufgrund ihrer Elastizität wieder aufeinander zu und umfassen den Gegenstand in klemmender Weise.

Die Greiferbacken weisen dazu vorzugsweise weitere Betätigungselemente auf oder sind mit solchen gekoppelt. Die weiteren Betätigungselemente sind so geformt, dass die Greiferbacken nach Aussen ausweichen, wenn ein Gegenstand in Richtung der ungefähren Schwenkachse, die in der Regel auch der Förderrichtung entspricht, gegen die Betätigungselemente bewegt wird.

Als optionales Merkmal weist der Greifer mindestens zwei erste Greiferbacken und mindestens zwei zweite Greiferbacken auf.

Dabei kann jede erste Greiferbacke relativ zu mindestens einer zweiten Greiferbacke einen offenen und einen geschlossenen Zustand einnehmen und eine Klemmkraft auf den zu ergreifenden Gegenstand ausüben und/oder es kann umgekehrt auch jede zweite Greiferbacke relativ zu mindestens einer ersten Greiferbacke einen offenen und einen geschlossenen Zustand einnehmen und eine Klemmkraft auf den zu ergreifenden Gegenstand ausüben.

Damit ist beispielsweise gemeint, dass jede erste Greiferbacke derart ausgebildet und angeordnet ist, dass sie relativ zu mindestens einer zweiten Greiferbacke einen offenen und einen geschlossenen Zustand einnehmen kann und auf einen ergriffenen Gegenstand eine Klemmkraft ausübt und/oder umgekehrt auch jede zweite Greiferbacke derart ausgebildet und angeordnet ist, dass sie relativ zu mindestens einer ersten Greiferbacke einen offenen und einen geschlossenen Zustand einnehmen kann und auf einen ergriffenen Gegenstand eine Klemmkraft ausübt.

Durch eine Mehrzahl von ersten und zweiten Greiferbacken können pro Greifer gleichzeitig mehrere Gegenstände ergriffen werden.

Dies hat eine Erhöhung der Förderkapazität der Greifer und/oder andere verfahrenstechnische Vorteile zur Folge, wie etwa die Möglichkeit einer voneinander unabhängigen Verwendung und/oder einer voneinander verschiedenen Bestückung der mehreren ersten und zweiten Greiferbacken durch verschiedene Gegenstände und/oder eine gleichzeitige Förderung von verschiedenen Gegenständen über räumlich und/oder zeitlich verschiede Distanzen.

Optional kann jeweils eine Greiferbacke relativ zu mehreren anderen Greiferbacken einen offenen und/oder einen geschlossenen Zustand einnehmen und eine Klemmkraft auf den zu ergreifenden Gegenstand bzw. die zu ergreifenden Gegenstände ausüben.

Als weiteres optionales Merkmal kann bei einem Greifer mit mindestens zwei ersten und mindestens zwei zweiten Greiferbacken jede erste Greiferbacke relativ zu einer einzigen zweiten Greiferbacke einen offenen und einen geschlossenen Zustand einnehmen und eine Klemmkraft auf den zu ergreifenden Gegenstand ausüben, und kann gleichzeitig auch jede zweite Greiferbacke relativ zu einer einzigen ersten Greiferbacke einen offenen und einen geschlossenen Zustand einnehmen und eine Klemmkraft auf den zu ergreifenden Gegenstand ausüben.

In diesem Fall weist, ausgehend von einem Greifer mit einer Mehrzahl von Greiferbacken, also jede einzelne Greiferbacke nur eine einzige weitere Greiferbacke auf, bezüglich welcher sie einen offenen und einen geschlossenen Zustand einnehmen kann und mit welcher sie eine Klemmkraft auf den zu ergreifenden Gegenstand ausübt.

Der Greifer verfügt damit über mindestens zwei separate Greiferbackenpaare.

Unter einem Greiferbackenpaar ist in der gesamten Anmeldung eine Anordnung von zwei Greiferbacken gemeint, welche miteinander zusammenwirken können. Die Greiferbacken eines Greiferbackenpaares können dabei gleich oder verschieden ausgestaltet sein. Insbesondere kann ein Greiferbackenpaar mindestens zeitweise mindestens einen Gegenstand durch Anlegen einer Klemmkraft ergreifen.

Eine Mehrzahl von Greiferbackenpaaren erlaubt einen vielseitigen Einsatz des Greifers und erhöht die Förderkapazität des Greifers. Die weiter oben erwähnten Vorteile einer Mehrzahl von Greiferbacken gelten für einen Greifer mit einer Mehrzahl von Greiferbackenpaaren ebenfalls.

Alternativ können auch Greiferbacken verschiedener Anzahl miteinander zusammenwirken (also relativ zueinander einen offenen und einen geschlossenen Zustand einnehmen und eine Klemmkraft auf den zu ergreifenden Gegenstand ausüben).

Beispielsweise können zwei oder auch mehr erste Greiferbacken mit nur einer zweiten Greiferbacke zusammenwirken. Umgekehrt kann eine erste Greiferbacke beispielsweise auch mit zwei oder mehr zweiten Greiferbacken zusammenwirken. Für die zweiten Greiferbacken gilt bezüglich der ersten Greiferbacken dasselbe.

Als weiteres optionales Merkmal weist ein Greifer, bei welchem mehrere erste Greiferbacken durch ein gemeinsames Steuerelement ausgelenkt werden und/oder mehrere zweite Greiferbacken durch ein gemeinsames, anderes Steuerelement ausgelenkt werden, eine Anzahl von Steuerelementen auf, welche grösser oder gleich der Anzahl der ersten Greiferbacken und/oder grösser oder gleich der Anzahl der zweiten Greiferbacken ist.

Eine Anzahl von Steuerelementen, welche mindestens gleich gross oder grösser ist als die Anzahl der ersten und/oder der zweiten Greiferbacken, erlaubt eine flexible Steuerung von einzelnen Greiferbacken und erhöht die Flexibilität und Vielseitigkeit der Einsatzmöglichkeiten des Greifers.

Alternativ kann auch eine kleinere Zahl von Steuerelementen verwendet werden. Dabei können mehrere Greiferbacken durch ein einziges Steuerelement gesteuert werden und/oder Greiferbacken werden gar nicht über Steuerelemente gesteuert, sondern beispielsweise selbstöffnend betrieben.

Als weiteres optionales Merkmal steht in einem Greifer ein erstes Greiferbackenpaar in geschlossenem Zustand in einem Winkel von 40 bis 140 Grad, insbesondere von 60 bis 120 Grad und insbesondere von 80 bis 100 Grad zu einem zweiten Greiferbackenpaar. Dabei umfasst ein Greiferbackenpaar eine erste Greiferbacke und eine zweite Greiferbacke, welche eine Klemmkraft auf den zu ergreifenden Gegenstand ausüben können.

Mit anderen Worten umfasst ein Greiferbackenpaar eine erste Greiferbacke und eine zweite Greiferbacke, welche derart ausgestaltet und eingerichtet sind, eine Klemmkraft auf den zu ergreifenden Gegenstand auszuüben.

Die Greiferbacken eines Greiferbackenpaars wirken miteinander zusammen. In geschlossenem Zustand stehen ein erstes und ein zweites Greiferbackenpaar in einem Winkel von 40 bis 140 Grad zueinander. Der Winkel kann insbesondere 60 bis 120 Grad betragen. Der Winkel kann insbesondere auch 80 bis 100 Grad betragen. Insbesondere stehen das erste und das zweite Greiferbackenpaar rechtwinklig zueinander. Der Winkel zwischen den Greiferbackenpaaren in geschlossenem Zustand entspricht beispielsweise dem Winkel zwischen Längsmittelachsen von Gegenständen, welche von diesen Greiferbackenpaaren ergriffen sind.

Eine zueinander angewinkelte Anordnung von Greiferbackenpaaren (in geschlossenem Zustand) erlaubt einen einfachen und raschen Zugang zum Greifer aus verschiedenen Raumrichtungen. Dies kann ein Ergreifen und/oder Abgeben von Gegenständen durch den Greifer vereinfachen und beschleunigen. Die Einsatzmöglichkeiten des Greifers werden dadurch ebenfalls vergrössert. Alternativ können die Greiferbackenpaare aber auch in Winkeln kleiner als 40 Grad und/oder grösser als 140 Grad zueinander stehen. Insbesondere können die Greiferbackenpaare alternativ auch parallel zueinander stehen.

Die in den vorangehenden Absätzen zuletzt beschriebenen Beispiele von Greifern zur besseren Veranschaulichung der Erfindung weisen zum Öffnen des Greifers Steuerelemente in Form von geraden Betätigungsabschnitten auf. Diese Greifer öffnen und/oder schliessen sich durch eine im Wesentlichen gleichmässige Bewegung der Greiferbacken, wobei die Geschwindigkeit der Greiferbacken im Wesentlichen konstant ist. Dies hat den Nachteil, dass die Bewegung der Greiferbacken nicht an verschiedene Phasen eines Ergreifens und/oder Abgebens des Gegenstands angepasst ist.

So ist beispielsweise von Vorteil, wenn beim Ergreifen eines Gegenstandes eine erste Phase einer Schliessbewegung der Greiferbacken, also die Phase vor Kontaktschluss der Greiferbacken mit dem Gegenstand, in kurzer Zeit und dadurch mit hoher Geschwindigkeit der Greiferbacken erfolgt. Damit werden eine hohe Taktfrequenz und eine rasche Verarbeitung der Gegenstände erreicht. Dies hat aber den Nachteil, dass eine zweite Phase der Schliessbewegung, also die Phase nach Kontaktschluss der Greiferbacken mit dem Gegenstand, ebenfalls in kurzer Zeit und dadurch mit hoher Geschwindigkeit der Greiferbacken erfolgt. Dies kann beispielsweise den Gegenstand und/oder die Greiferbacke strapazieren bzw. belasten, eine Beschädigung und/oder Abrieb verursachen und/oder etwa die Greiferbacken einen nachgiebigen Gegenstand nicht sicher ergreifen lassen.

Analog kann beispielsweise bei einer Abgabe des Gegenstands eine zweite Phase dieser Abgabe (also eine Öffnungsbewegung der Greiferbacken ohne Kontaktschluss der Greiferbacken mit dem Gegenstand) vorteilhafterweise in kurzer Zeit erfolgen. Dies kann sich aber wiederum negativ auswirken, weil dadurch auf eine erste Phase der Abgabe (also wenn die Greiferbacken noch in Kontaktschluss mit dem Gegenstand stehen) ebenfalls in kurzer Zeit erfolgt. Dies kann ebenfalls beispielsweise den Gegenstand und/oder die Greiferbacke strapazieren bzw. belasten, eine Beschädigung und/oder Abrieb verursachen und/oder aber etwa die Greiferbacken einen Gegenstand unkontrolliert abgeben lassen.

Umgekehrt kann die zweite Phase des Ergreifens vorteilhafterweise langsam und dadurch mit geringer Geschwindigkeit der Greiferbacken erfolgen, damit der Gegenstand und/oder die Greiferbacke geschont wird, keine Beschädigung und/oder kein Abrieb entsteht und/oder etwa ein nachgiebiger Gegenstand sicher ergriffen werden kann (etwa weil der nachgiebige Gegenstand sich nur langsam in eine sichere Haltekonfiguration verformt). Dadurch erfolgt hingegen auch die erste Phase des Ergreifens langsam, was unnötig ist, den gesamten Prozess des Ergreifens sowie alle damit verknüpften Abläufe verlangsamt und dadurch die Effizienz einer Vorrichtung gering hält und möglicherweise sogar limitiert. Analog dazu kann sich eine vorteilhafterweise langsam erfolgende erste Phase der Abgabe des Gegenstandes negativ auswirken, indem eine zweite Phase der Abgabe ebenfalls langsam erfolgt und dieselben oben genannten Nachteile verursacht.

Die in den ersten Absätzen beschriebenen Greifer weisen beispielsweise gar kein Steuerelement auf, weil sich die Greifer bei Kontakt mit dem Gegenstand explizit (US 6,612,634) oder implizit (DE 10325693) von selbst durch eine entsprechende Bewegung des Gegenstands öffnen oder schliessen. Der in US 4,921,294 beschriebene Greifer weist als Steuerelement Räder auf, welche über (in der erwähnten Schrift nicht dargestellte) stationäre Kulissen laufen und den Greifer auf diese Weise öffnen. Räder als Steuerelemente am Greifer haben den Nachteil, dass diese durch eine benötigte frei drehbare Befestigung technisch aufwendig und kompliziert, störanfällig und teuer sind. Eine mit diesen Rädern zusammenwirkende stationäre Kulisse ist zudem hohem Verschleiss ausgesetzt. Der in US 2010/0278959 beschriebene Greifer weist als Steuerelement ein nockenförmiges Halteelement auf, welches optional durch eine nicht näher beschriebene Nockensteuerung bewegt werden kann. Das nockenförmige Halteelement ist ebenso wie die entsprechende Nockensteuerung grossem Verschleiss ausgesetzt, und eine gezielte Variation der Bewegung der Greiferbügel ist nur bedingt möglich und technisch nicht einfach zu realisieren.

In der Fördertechnik besteht daher in einem ersten Aspekt das Bedürfnis nach einfach und kostengünstig herzustellenden sowie robusten Greifern, die Gegenstände kontrolliert, rasch, schonend und zuverlässig ergreifen, fördern und/oder wieder abgeben können. Dabei ist insbesondere bei hohen Verarbeitungsgeschwindigkeiten und/oder Verarbeitungsmengen auch eine verschleissarme Ausgestaltung der Greifer ein Bedürfnis.

Die meisten der weiter oben beschriebenen Fördereinrichtungen können geförderte Gegenstände nicht gezielt an verschiedenen Stellen derselben Umlaufbahn abgeben, und insbesondere nicht abhängig von deren Sorte. Die in DE 10325693 beschriebene Fördereinrichtung fördert zwar Gegenstände verschiedener Sorten, fördert diese aber auf verschiedenen Umlaufbahnen und verwendet dafür technisch komplizierte, aufwendige und teure Vorrichtungen. Beim in den ersten Absätzen beschriebenen Greifer ist es zwar möglich, Gegenstände gezielt in verschiedene Richtungen abzugeben, aber dazu muss jede Greiferbacke über ein Steuerelement verfügen. Zudem müssen die Öffnungsstellen entsprechend der Abgaberichtung angeordnet sein. Die Öffnungsstellen müssen auch durch eine Steuerung aktiv die Abgabe der Gegenstände an dieser Stelle auslösen, um eine Sortierung zu erreichen. Eine aktive Steuerung ist aufwendig, teuer und störanfällig.

Insbesondere besteht darum in der Fördertechnik in einem zweiten, nicht beanspruchten Aspekt das Bedürfnis nach einer einfach und kostengünstig herzustellenden sowie robusten Fördereinrichtung, die entlang derselben Umlaufbahn verschiedene Sorten von Gegenständen ergreifen, fördern und abhängig von Ihrer Sorte wieder abgeben kann. Dabei kann das Abgeben insbesondere durch gezieltes Öffnen der entsprechenden Greifer an vorbestimmten Öffnungsstellen erfolgen.

In einem dritten, nicht beanspruchten Aspekt ist das Verbessern einer Förderanlage ein Bedürfnis, insbesondere was das Fördern von verschiedenen Gruppen von Gegenständen von jeweils gleicher Sorte betrifft. Als weiteres Bedürfnis kann dabei gleichzeitig eine Erhöhung der Fördermenge und dadurch eine Steigerung der Effizienz einer Fördereinrichtung angestrebt werden.

Der Erfindung liegt daher die Aufgabe zugrunde, Steuerelemente und eine Fördereinrichtung mit Greifern zur Verfügung zu stellen, bei denen bzw. bei der die oben genannten Nachteile des Standes der Technik mindestens teilweise vermieden werden.

Die Aufgabe wird bezüglich des ersten Aspekts mindestens teilweise durch einen Greifer zum Ergreifen und gehaltenen Fördern von Gegenständen gelöst. Dieser Greifer weist eine erste Greiferbacke und ein zweite Greiferbacke auf, die relativ zueinander einen offenen und einen geschlossenen Zustand einnehmen können. Auf die erste Greiferbacke und auf die zweite Greiferbacke wirkt eine rücktreibende Kraft in Richtung des geschlossenen Zustands. Die erste Greiferbacke und die zweite Greiferbacke können eine Klemmkraft auf den zu ergreifenden Gegenstand ausüben. Der Greifer weist wenigstens ein Steuerelement auf, das als eine Steuerkulisse ausgebildet ist und das auf die erste Greiferbacke und/oder zweite Greiferbacke wirkt. Das Steuerelement ist zudem imstande, mit einem Schaltmittel zusammenzuwirken. Das Steuerelement weist eine funktionale Kontur mit mindestens einem gekrümmten Kontursegment auf.

Als eine funktionale Kontur des Steuerelements wird der Teil einer Kontur eines Steuerelements bezeichnet, welcher während eines Zusammenwirkens mit einem Schaltmittel direkt mit diesem Schaltmittel in Kontakt tritt. Mit anderen Worten ist die funktionale Kontur des Steuerelementes also der Teil der Kontur des Steuerelementes, auf welchen das Schaltmittel direkt einwirkt und auf welchen das Schaltmittel beispielsweise die Kraft zum elastischen Verformen des Backenkörpers direkt überträgt.

Insbesondere ist das Steuerelement auf eine solche Weise mit mindestens einem Backenkörper verbunden, dass durch jede auf das Steuerelement einwirkende Kraft eine Kraftwirkung auf den mindestens einen Backenkörpers folgt und umgekehrt.

Somit verursacht jede Bewegung (d.h. z.B. jede Verschiebung, Verbiegung, Dehnung, Stauchung und/oder Rotation) des Steuerelementes eine Bewegung des Backenkörpers und/oder eine Änderung der auf den Backenkörper wirkenden resultierenden Kraft.

Die auf den Backenkörper wirkende resultierende Kraft ist dabei die Summe aller auf den Backenkörper wirkenden Kräfte (also beispielsweise auch einer Gegenkraft von einer vom Backenkörper ausgewirkten Kraft). Dabei kann die vom Backenkörper ausgewirkte Kraft beispielsweise auf einen zu fördernden Gegenstand, einen anderen Backenkörper und/oder auf einen Anschlag bzw. Auslenkungsbegrenzer wirken. Der zu fördernde Gegenstand, ein anderer Backenkörper und/oder der Anschlag bzw. Auslenkungsbegrenzer können etwa aber auch Kraft auf den Backenkörper auswirken.

Umgekehrt verursacht auch jede Bewegung des Backenkörpers eine Bewegung des Steuerelementes und/oder eine Änderung der auf das Steuerelement wirkenden resultierenden Kraft. Dabei kann die vom Steuerelement ausgewirkte Kraft beispielsweise auf ein Schaltmittel und/oder einen Anschlag bzw. Auslenkungsbegrenzer wirken. Das Schaltmittel und/oder der Anschlag bzw. Auslenkungsbegrenzer können etwa aber auch Kraft auf den Backenkörper auswirken.

Mit anderen Worten sind Steuerelement und Backenkörper derart aneinander gekoppelt, dass jede Bewegung des einen Elementes eine Krafteinwirkung auf das andere Element auslöst. Die Krafteinwirkung wirkt sich dabei auf das andere Element durch eine Bewegung des anderen Elementes oder durch eine Änderung der auf das andere Element wirkenden resultierenden Kraft aus.

Optional liegt die funktionale Kontur des Steuerelements im Wesentlichen in einer Ebene. Insbesondere liegt die funktionale Kontur dabei in einer Ebene, welche eine Parallele zur Förderrichtung einschliesst.

Das Steuerelement kann bezüglich der durch sie ausgelenkten Greiferbacke in Förderrichtung vorlaufend und/oder nachlaufend angeordnet sein.

Als Kontursegment wird ein Bereich der Kontur bezeichnet, welcher sich durch eine mathematische Kurve mit einer konstanten Krümmung oder einer regelmässigen Krümmungsänderung beschreiben lässt, also etwa Geraden, Kreise, Kreissegmente, Spiralen (insbesondere arithmetische, logarithmische und hyperbolische Spiralen) und Segmente dieser Spiralen, sowie Kegelschnitte bzw. Kegelschnittsegmente.

Das Steuerelement ist als Steuerkulisse ausgebildet. Eine Steuerkulisse weist eine spezifische Formgebung auf, welche durch Zusammenwirken mit dem Schaltmittel einen vorbestimmten und definierten zeitlichen und räumlichen Verlauf der Auslenkung der Greiferbacken und/oder einen vorbestimmten und definierten zeitlichen Verlauf der auf die Greiferbacken wirkenden resultierenden Kräfte sicherstellt. Durch diese spezifische Formgebung ist das Steuerelement als Steuerkulisse ausgebildet.

Die auf die Greiferbacken wirkende resultierende Kraft ändert sich insbesondere beim Anlegen einer Klemmkraft auf den zu fördernden Gegenstand (also während des Ergreifens des Gegenstandes) und/oder beim Lösen einer Klemmkraft vom zu fördernden Gegenstand (also während des Abgebens des Gegenstandes).

Die auf die Greiferbacke wirkende resultierende Kraft ändert sich insbesondere beim Erreichen und/oder Verlassen der geschlossenen Position der Greiferbacken. Dabei kann beispielsweise der zu fördernde Gegenstand und/oder ein Anschlag bzw. Auslenkungsbegrenzer mit der Greiferbacke zusammenwirken.

Dabei beinhaltet der vorbestimmte und definierte zeitliche und räumliche Verlauf der Auslenkung der Greiferbacken beispielsweise mindestens einen, insbesondere mindestens zwei, und insbesondere mindestens drei Wechsel von Geschwindigkeit, Beschleunigung und/oder Bewegungsrichtung der Greiferbacken. Jeder Wechsel kann dabei unabhängig von einem anderen Wechsel die Geschwindigkeit, Beschleunigung und/oder Bewegungsrichtung betreffen.

Der vorbestimmte und definierte zeitliche und räumliche Verlauf der Auslenkung der Greiferbacken entspricht einer Dynamik der Bewegung der Greiferbacken nach einem vorgegebenen Muster und mit einem definierten Verlauf. Mit anderen Worten kann der vorbestimmte und definierte zeitliche und räumliche Verlauf der Auslenkung der Greiferbacken als eine Folge von Bewegungen und Bewegungsänderungen nach einem vorgegebenen Muster verstanden werden.

Der vorbestimmte und definierte zeitliche und räumliche Verlauf der Auslenkung der Greiferbacken erfolgt dabei insbesondere während einer Auslenkung der Greiferbacken von einem geschlossenen zu einem offenen Zustand. Insbesondere kann dieser vorbestimmte und definierte zeitliche und räumliche Verlauf der Auslenkung der Greiferbacken aber auch während einer Auslenkung der Greiferbacken von einem offenen zu einem geschlossenen Zustand erfolgen. Optional kann dies aber auch sowohl beim Auslenken von einem geschlossenen zu einem offenen Zustand als auch beim Auslenken von einem offenen zu einem geschlossenen Zustand erfolgen.

Optional ist das Steuerelement aus einem draht- oder rohrförmigen Werkstoff ausgebildet.

Ist das Steuerelement aus einem draht- oder rohrförmigen Werkstoff geformt, kann eine funktionale Kontur besonders einfach und kostengünstig hergestellt werden. Alternativ kann das Steuerelement aber auch gegossen, mit spanenden Methoden hergestellt oder zusammengesetzt werden.

Optional ist das Steuerelement einteilig mit einer Greiferbacke ausgebildet.

Eine Greiferbacke, welche einteilig mit dem Steuerelement ausgebildet ist, ist günstig und einfach herzustellen. Eine Greiferbacke kann beispielsweise aber auch als vom Steuerelement separates Element ausgebildet werden.

Ein Vorteil eines Steuerelements mit einer wie oben beschriebenen funktionalen Kontur liegt darin, dass zum Zusammenwirken mit diesem Steuerelement ein einfaches Schaltmittel ausreicht. Da die funktionale Kontur des Steuerelements der Greifer die Dynamik der ausgelenkten Greiferbacke kontrolliert, kann das Schaltmittel bzw. der Teil des Schaltmittels, welcher mit der funktionalen Kontur des Steuerelements zusammenwirkt, einfach ausgebildet sein.

Ein einfaches Schaltmittel kann beispielsweise geometrisch einfach ausgebildet sein, beispielsweise durch eine Stange, Platte, Quader, abgerundete Elemente, Kugeln, Scheiben, Räder und dergleichen. Ein Schaltmittel kann insbesondere durch drehbar gelagerte Scheiben, Räder, Kugeln, Kalotten und/oder Kugelscheiben ausgebildet sein. Ein Schaltmittel kann in einer Fördervorrichtung starr und unbeweglich befestigt, beweglich (insbesondere drehbar) befestigt oder gefedert befestigt sein.

Einfache Schaltmittel können günstig und robust ausgestaltet werden. Einfache Schaltmittel weisen einen kleineren Verschleiss auf als kompliziert ausgeformte. Zudem können einfache Schaltmittel kostengünstig produziert werden. Ein Ersetzen, Warten und/oder Justieren von einfachen Schaltmitteln ist im Vergleich mit kompliziert ausgeformten Schaltmitteln ebenfalls leichter.

Das Schaltmittel braucht keine funktionale Kontur aufzuweisen, wenn das Steuerelement eine funktionale Kontur aufweist. In einem typischen Fall wirken viele Greifer mit wenigen Schaltmitteln zusammen. Der Verschleiss der funktionalen Kontur wird somit vorteilhafterweise auf eine grosse Anzahl von Greifern verteilt anstatt auf ein Schaltmittel konzentriert.

Optional weist die funktionale Kontur des Steuerelements mindestens zwei aufeinander folgende und insbesondere mindestens drei aufeinander folgende Kontursegmente auf, wobei sich mindestens zwei und insbesondere mindestens drei der Kontursegmente in Krümmung, Krümmungsrichtung und/oder Krümmungsänderung unterscheiden.

Optional weist die funktionale Kontur des Steuerelements mindestens vier aufeinander folgende Kontursegmente auf, wobei sich mindestens zwei oder insbesondere mindestens drei oder insbesondere mindestens vier dieser Kontursegmente in Krümmung, Krümmungsrichtung und/oder Krümmungsänderung unterscheiden.

Optional umfasst die funktionale Kontur des Steuerelements mindestens ein Kontursegment, dessen funktionale Kontur physische Veränderungen des Steuerelements bei einer Krafteinwirkung auf das Steuerelement in seiner Formgebung berücksichtigt und insbesondere ein Verbiegen des Steuerelements bei der Krafteinwirkung auf das Steuerelements in seiner Formgebung berücksichtigt.

Mit physischen Veränderungen ist in dieser Anmeldung eine reversible mechanische Änderung gemeint, z.B. eine elastische Verformung durch Biegen, Drehen (beispielsweise auch Torsion), Stauchen und/oder Dehnen. Mit "in seiner Formgebung berücksichtigt" ist im Rahmen dieser Anmeldung gemeint, dass die erwartete physische Veränderung des Steuerelements durch eine angepasste Formgebung der funktionalen Kontur vorweggenommen und aufgehoben wird und das Steuerelement dadurch trotz physischer Veränderung des Steuerelements während des Zusammenwirkens derart (beispielsweise mit einem Schaltmittel) zusammenwirken kann, um einem vorgegebenen Verlauf zu folgen.

Durch die Berücksichtigung der physischen Veränderung in der Form der funktionalen Kontur wird die physische Veränderung antizipiert und kompensiert. Ein Steuerelement bewirkt durch eine die physische Veränderung berücksichtigende Form mindestens eines Segments der funktionalen Kontur also trotz der physischen Veränderung des Steuerelements dieselbe Dynamik der Greiferbacken wie ein Steuerelement, welches eine grössere, kleinere oder keine physische Veränderung erfährt und eine entsprechend andere Form aufweist.

Beispielsweise wird bei einem leicht biegbaren Steuerelement die funktionale Kontur des leicht biegbaren Steuerelements derart angepasst, dass eine durch ein Zusammenwirken des leicht biegbaren Steuerelements mit einem Schaltmittel ausgelenkte Greiferbacke dieselbe Position aufweist (oder denselben Druck anlegt) wie beim Zusammenwirken eines nicht biegbaren Steuerelement mit demselben Schaltmittel. Auf diese Weise wirken Materialeigenschaften und Dimensionierung (beispielsweise eine Dicke) des Steuerelements und eine Form der funktionalen Kontur bzw. eine Anordnung der Kontursegmente des Steuerelements zusammen.

Eine gezielte Formgebung des Steuerelements kompensiert also eine Verformung des Steuerelements beispielsweise während des Zusammenwirkens mit dem Schaltmittel. Dadurch folgt die Auslenkung der Greiferbacken dem vorbestimmten und definierten zeitlichen und räumlichen Verlauf. Der vorbestimmte und definierte zeitliche und räumliche Verlauf der Greiferbacken wird also nicht durch die physische Veränderung des Steuerelements beeinflusst.

Dies hat den Vorteil, dass das Steuerelement aus einer Vielzahl von Materialien in vielen Dimensionierungen hergestellt werden kann, und dass die erwünschte Dynamik der Greiferbacken unabhängig davon erzielt wird. Beispielsweise können auf diese Weise dünne und dadurch leicht biegbare Steuerelemente ohne Funktionseinbusse gegenüber dicken und nicht biegbaren Steuerelementen ausgebildet werden. Dies spart beispielsweise Produktionskosten und bedeutet auch eine Gewichtsreduktion bei den Greifern. Eine Gewichtsreduktion der Greifer wiederum wirkt sich positiv auf den Betrieb der Förderanlage aus: weniger Masse bewegen zu müssen bedeutet, dass weniger Energie benötigt wird und kleinere Motoren und Bremsen ausreichen. Zudem erhöht sich potentiell die Sicherheit, wenn weniger Masse bewegt wird, weil bei einem Unfall weniger kinetische Energie unkontrolliert freigesetzt wird.

Optional umfasst die funktionale Kontur des Steuerelements ein erstes Kontursegment, dessen funktionale Kontur ein Lösen einer Klemmkraft mindestens einer Greiferbacke mit einer ersten Geschwindigkeit bewirkt, und ein zweites Kontursegment, dessen funktionale Kontur ein Öffnen der mindestens einen Greiferbacke mit einer zweiten Geschwindigkeit bewirkt, wobei das Öffnen der mindestens einen Greiferbacke zeitlich auf das Lösen der Klemmkraft der mindestens einen Greiferbacke folgt und wobei insbesondere die zweite Geschwindigkeit höher oder tiefer als die erste Geschwindigkeit ist.

Mit Klemmkraft ist eine Kraft gemeint, mit welcher eine Greiferbacke auf einen damit ergriffenen Gegenstand einwirkt, d.h. mit welcher Kraft der Greifer den darin ergriffenen Gegenstand ergreift. Falls kein Gegenstand ergriffen ist, wirkt auch keine Klemmkraft.

Mit Klemmkraft ist eine Kraft gemeint, mit welcher eine Greiferbacke auf einen ergriffenen Gegenstand einwirkt, d.h. mit welcher Kraft ein Greifer den ergriffenen Gegenstand ergreift. Falls kein Gegenstand ergriffen ist, können Greiferbacken in einem geschlossenen Zustand eine Klemmkraft aufeinander ausüben. Insbesondere üben Greiferbacken in geschlossenem Zustand, wenn sie keinen Gegenstand ergreifen, keine Klemmkraft aufeinander aus.

Die oben beschriebene gezielte Formgebung der funktionalen Kontur des Steuerelements kontrolliert eine Auslenkung mindestens einer Greiferbacke von einem geschlossenen zu einem offenen Zustand, wobei diese Auslenkung zuerst mit einer ersten Geschwindigkeit erfolgt, insbesondere zum langsamen Lösen einer Klemmkraft der mindestens einen Greiferbacke, und danach mit einer zweiten Geschwindigkeit erfolgt, welche höher als die erste Geschwindigkeit ist und insbesondere ein rasches Öffnen des Greifers bewirkt. Mit anderen Worten kann beispielsweise ein rasches Öffnen des Greifers nach einem langsamen Lösen der Klemmkraft des Greifers erreicht werden. Im Gegensatz zu einer uniformen Dynamik einer schlagartigen Öffnung von Greifern wie im Stand der Technik bietet dies den Vorteil, ein kontrolliertes und sanftes Öffnen mit einer dennoch insgesamt kurzen Öffnungsdauer zu ermöglichen.

Eine wie oben beschriebene funktionale Kontur des Steuerelements erlaubt somit eine kontrollierte Dynamik der Bewegung mindestens einer Greiferbacke. Dadurch kann eine kontrollierte Abgabe des ergriffenen Gegenstandes ohne Querbeschleunigung bezüglich der Förderrichtung oder mit einer genau definierten Querbeschleunigung bezüglich der Förderrichtung erreicht werden. Die Querbeschleunigung des Gegenstandes beim Öffnen des Greifers wird beispielsweise durch die Klemmkraft verursacht, welche während dem Öffnen des Greifers auf den Gegenstand wirkt. Bewirkt die Klemmkraft beispielsweise eine Federbewegung (also ein Einfedern) der Greiferbacken im geschlossenen Zustand des Greifers mit ergriffenem Gegenstand, und öffnet der Greifer durch eine durch ein Steuerelement bewirkte Auslenkung von nur einer Greiferbacke, so federt die nicht durch das Steuerelement ausgelenkte Greiferbacke nach und verursacht bei einem unkontrollierten raschen Öffnen des Greifers eine Querbeschleunigung.

Durch eine angepasste Dynamik der Bewegung der Greiferbacken kann eine ungewollte Querbeschleunigung verhindert werden, wobei der Greifer sich trotzdem raschestmöglich öffnet. Oder aber es kann durch eine angepasste Dynamik auch eine vorbestimmte erwünschte Querbeschleunigung präzis und reproduzierbar erreicht werden, beispielsweise wenn eine Auswurfbewegung in eine bestimmte Richtung, mit einer bestimmten Rotation und/oder mit einer bestimmten Geschwindigkeit erwünscht ist.

Optional umfasst die funktionale Kontur des Steuerelements ein erstes Kontursegment, dessen funktionale Kontur ein Schliessen mindestens einer Greiferbacke mit einer ersten Geschwindigkeit bewirkt, und ein zweites Kontursegment, dessen funktionale Kontur ein Anlegen einer Klemmkraft der Greiferbacken mit einer zweiten Geschwindigkeit bewirkt, wobei das Anlegen der Klemmkraft der mindestens einen Greiferbacke zeitlich auf das Schliessen der mindestens einen Greiferbacke folgt und wobei insbesondere die zweite Geschwindigkeit kleiner oder grösser als die erste Geschwindigkeit ist.

Mit einer wie oben beschriebenen funktionalen Kontur kann beispielsweise ein rasches Schliessen des Greifers mit einer schnellen ersten Schliessbewegung und einem darauf folgenden langsamen Anlegen der Klemmkraft des Greifers erreicht werden. Eine angepasste Dynamik der Bewegung mindestens einer Greiferbacke kann eine ungewollt rasche Erhöhung der Klemmkraft beim Ergreifen eines Gegenstandes verhindern, wobei dennoch ein insgesamt rasches Schliessen des Greifers möglich ist. Eine Beschädigung durch zu rasches Anlegen der Klemmkraft kann dadurch verhindert werden, was beispielsweise besonders bei weichen oder spröden Gegenständen von Vorteil ist. Zudem kann bei einem langsamen Anlegen der Klemmkraft der Gegenstand gegebenenfalls auch noch seine Position verändern, beispielsweise bei selbstzentrierend ausgelegten Greiferbacken.

Optional umfasst die funktionale Kontur des Steuerelements mindestens ein Kontursegment und insbesondere mindestens zwei Kontursegmente, deren funktionale Kontur in einem Bereich zu Beginn und/oder einem Bereich am Ende einer Krafteinwirkung auf das Steuerelement eine kontinuierliche Zunahme oder eine kontinuierliche Verringerung der Geschwindigkeit der Auslenkung mindestens einer Greiferbacke bewirkt.

Mit einer kontinuierlichen Zunahme oder Verringerung der Geschwindigkeit der Auslenkung wird ein sanftes Anfahren oder ein sanftes Abbremsen der mindestens einen Greiferbacke erreicht, was insbesondere bei hohen Öffnungs- und Schliessgeschwindigkeiten von Vorteil ist. Dies ist materialschonend für die Greiferbacke bzw. für den Greifer und/oder für den vom Greifer ergriffenen Gegenstand. Eine kontinuierliche Zunahme oder Verringerung kann beispielsweise im mathematischen Sinn stetig, monoton und/oder streng monoton verlaufen.

Die Erfindung kann auch eine Vorrichtung umfassen, welche einen wie weiter oben beschriebenen Greifer sowie ein Schaltmittel umfasst. Dabei weist das Schaltmittel eine Scheibe und insbesondere ein Rad auf, welches mit der funktionalen Kontur des Steuerelements zusammenwirkt.

Bekannte Schaltmittel in Form von stationären Kulissen, welche mit einem einfach ausgebildeten Steuerelement des Greifers (beispielsweise einer Rolle oder einem Rad) zusammenwirken und dabei eine vorbestimmte Dynamik der Greiferbacken bewirken sollen, sind im Vergleich mit einer Scheibe oder beispielsweise auch einem Rad als Schaltmittel kompliziert ausgebildet.

Zudem weisen stationäre Kulissen einen hohen Verschleiss auf. Insbesondere hoch ist der Verschleiss an den Stellen, an welchen durch die stationäre Kulisse eine Änderung der auf die Greiferbacke wirkenden Kraft bewirkt werden soll, da jeder mit dieser stationären Kulisse zusammenwirkende Greifer die stationäre Kulisse durchläuft und belastet. Mit anderen Worten sind kompliziert ausgestaltete stationäre Kulissen, welche analog zur funktionalen Kontur des Steuerelements ausgebildete Stellen aufweisen, an welchen eine Änderung der auf die Greiferbacke wirkenden Kraft bewirkt werden soll, besonders stark belastet.

Ein Schaltmittel in Form einer stationären Kulisse ist also stärker belastet als eine Steuerkulisse an einem Greifer, wenn die Förderanlage mehr Greifer als Schaltmittel umfasst.

Eine Scheibe oder ein Rad als Schaltmittel hingegen ist einfach und robust ausgebildet und kann einer Belastung durch häufiges Zusammenwirken mit vielen Steuerelementen gut widerstehen.

Um eine vorbestimmte Dynamik der Greiferbacken zu bewirken, ist das Steuerelement des Greifers als Steuerkulisse mit einer funktionalen Kontur ausgebildet. Auf diese Weise bewegen sich die Greiferbacken entsprechend einer vorbestimmten Dynamik, aber der Verschleiss ist stark reduziert, da jeder einzelne Greifer über eine Steuerkulisse mit einer funktionalen Kontur verfügt, welche nur jeweils beim zusammenwirken des einzelnen Greifer mit dem Schaltmittel belastet wird.

Dem gegenüber steht der Stand der Technik, welcher mit einer stationären Kulisse mit funktionaler Kontur einen hohen Verschleiss aufweist: weil eine Förderanlage typischerweise deutlich mehr Greifer als Schaltmittel umfasst, wird eine funktionale Kontur einer stationären Kulisse sprich eines Schaltmittels deutlich häufiger belastet und weist daher einen höheren Verschleiss auf als eine funktionale Kontur einer Steuerkulisse eines einzelnen Greifers.

Aufgrund der runden Form und der Drehung des Schaltmittels bzw. des Rades ergibt sich seitens des Schaltmittels keine besonders verschleissanfällige Stelle wie z.B. bei starr befestigen, stationären Kulissen, wo beispielsweise eine Stelle, an welcher die stationäre Kulisse mit dem Steuerelement zusammenzuwirken beginnt oder etwa bei Knicken oder anderen Formänderungen der stationären Kulisse besonders grosse Belastungen und/oder Verschleisserscheinungen auftreten.

Ein Schaltmittel, welches ein Rad aufweist, ist also besonders einfach und günstig zu realisieren sowie weniger störanfällig und einfacher zu warten bzw. zu ersetzen. Weitere Vorteile eines einfach ausgestalteten Schaltmittels wurden bereits weiter oben beschrieben.

Optional ist das Schaltmittel als ein Rad mit einer Nut auf der Umfangseite ausgebildet.

Durch eine Nut auf der Umfangseite kann ein Steuerelement vorteilhaft geführt werden. Eine Gefahr eines Abrutschens während des Zusammenwirkens wird stark verringert.

Insbesondere weist die Nut einen konkaven Querschnitt auf. Weist die Nut einen konkaven Querschnitt auf, kann das Steuerelement beim Zusammenwirken mit dem Schaltmittel innerhalb der Nut positioniert werden, beispielsweise durch ein Zentrieren bezüglich des Querschnitts der Nut. Alternativ kann der Querschnitt der Nut auch andere Formen aufweisen, beispielsweise eckig, stufenartig oder teilweise konvex.

Zur besseren Veranschaulichung der Erfindung beschreiben wir in den folgenden Abschnitten eine Förderanlage entsprechend der Patentanmeldung WO 2012/14 2719 A1. Die Förderanlage umfasst ein Antriebsorgan, das entlang einer geschlossenen Umlaufbahn bewegbar ist, und welche eine Mehrzahl von Greifern umfasst, die an das Antriebsorgan angekoppelt oder daran ankoppelbar sind. Das Antriebsorgan ist beispielsweise ein kontinuierliches Förderorgan, das in einer Führung bewegt wird z.B. eine Kette in einem Kanal, insbesondere in einem Führungskanal. Alternativ kann das Antriebsorgan auch durch einen Rotationskörper oder durch einzelne Wagen realisiert sein.

Als optionales Merkmal umfasst die oben genannte Förderanlage zusätzlich einen Überführungsmechanismus. Der Überführungsmechanismus kann einen ergriffenen Gegenstand aus einem ersten Greifer der Förderanlage in einen zweiten Greifer der Förderanlage überführen. Dabei wird insbesondere der ergriffene Gegenstand aus einer ersten Position bezüglich des ersten Greifers in eine zweite Position bezüglich des zweiten Greifers überführt, und die erste und die zweite Position unterscheidet sich bezüglich des jeweiligen Greifers in Kontaktstellen mit dem Greifer, Lage des Gegenstands bezüglich des Greifers und/oder Orientierung des Gegenstands bezüglich des Greifers.

Der Überführungsmechanismus erlaubt ein Überführen eines ergriffenen Gegenstandes von einem ersten Greifer in einen zweiten Greifer auf derselben Umlaufbahn in derselben Förderanlage. Durch ein Überführen von ergriffenen Gegenständen können die ergriffenen Gegenstände bei einem einmaligen Durchlaufen der geschlossenen Umlaufbahn Teile der geschlossenen Umlaufbahn überspringen und/oder mehrfach durchlaufen und/oder insbesondere selektiv mehrfach durchlaufen. Dies erhöht die Einsatzmöglichkeiten der Förderanlage und macht sie flexibler. Alternativ kann auf einen Überführungsmechanismus verzichtet werden. Alternativ kann ein Überführen von ergriffenen Gegenständen auch ohne Überführungsmechanismus erfolgen. Auf ein Überführen von ergriffenen Gegenständen kann auch verzichtet werden.

Dass sich eine erste und eine zweite Position des ergriffenen Gegenstands bezüglich des jeweiligen Greifers vor und nach dem Überführen innerhalb derselben Förderanlage voneinander unterscheidet, erlaubt einen noch flexibleren und vielseitigeren Einsatz der Förderanlage. Der Unterschied der ersten und der zweiten Position kann in den Kontaktstellen des Gegenstands mit dem Greifer, der Lage des Gegenstands bezüglich des Greifers und/oder Orientierung des Gegenstands bezüglich des Greifers liegen. Durch unterschiedliche Kontaktstellen, unterschiedliche Lage und/oder unterschiedliche Orientierung kann auf den ergriffenen Gegenstand beispielsweise verschieden eingewirkt und/oder von verschiedenen Raumrichtungen auf den ergriffenen Gegenstand eingewirkt werden. Insbesondere in Kombination mit der Möglichkeit, Teile der geschlossenen Umlaufbahn zu übersprungen und/oder selektiv mehrfach zu durchlaufen, vergrössem sich die Einsatzmöglichkeiten und die Flexibilität der Förderanlage. Alternativ können die Positionen der ergriffenen Gegenstände bezüglich des jeweiligen Greifers vor und nach dem Überführen auch gleich sein.

Bei der Förderanlage werden vorzugsweise Greifer eingesetzt, die eine einzeln steuerbare erste Greiferbacke und eine im wesentlichen baugleich gestaltete zweite Greiferbacke und diesen zugeordnete erste und zweite Steuerelemente aufweisen. Die Anlage hat ausserdem erste und zweite Schaltmittel, welche zum gezielten Öffnen der ersten und/oder zweiten Greiferbacke mit den ersten bzw. zweiten Steuerelementen zusammenwirken. Die Schaltmittel können an verschiedenen Öffnungsstellen entlang der Umlaufbahn angeordnet sein oder auch an der gleichen, um den Greifer bzw. eine einzelne Greiferbacke dort gezielt zu öffnen.

Vorzugsweise ist eine Öffnungsstelle vorhanden, an welcher ein erstes und ein zweites Schaltmittel angeordnet sind. Die Schaltmittel können durch eine Steuereinrichtung aktiviert und deaktiviert werden, um wahlweise die erste oder die zweite Greiferbacke zu öffnen. Hierdurch kann die Richtung, in die der Gegenstand abgegeben wird, beeinflusst werden.

Die Greifer sind am Antriebsorgan so befestigt, dass sie die Gegenstände vorzugsweise im Wesentlichen von oben, d.h. am Antriebsorgan hängend, aufnehmen: Das geöffnete Greifermaul weist beim Aufnehmen vorzugsweise in vertikaler Richtung nach unten, und der Gegenstand kann dazwischen eingeführt werden. Die Gegenstände können daher an der Aufnahmestelle stehend angeordnet sein, und die Förderanlage kann sich über anstatt neben der Aufnahmestelle befinden. Dadurch wird in seitlicher Richtung Platz gespart. In anderen Bereichen der Bahn können die Greifer andere Orientierungen einnehmen.

Die Förderanlage eignet sich insbesondere zum Ergreifen, Fördern und Loslassen von räumlich ausgedehnten Gegenständen nahezu beliebiger Form. Sie ist vor allem geeignet für symmetrische Gegenstände und/oder solche mit einem Haltering und/oder Gegenstände mit einer Hohlform. Ein bevorzugter Anwendungsfall ist das Fördern von Preformlingen für das Formblasen von Behältern aus Kunststoff, insbesondere von PET-Flaschen. Mit baugleichen Greifern können Gegenstände mit unterschiedlichen Formen und/oder Grössen im zu erfassenden Bereich gefördert werden. Aufgrund der grossen Anpassungsfähigkeit der Greifer ist auch ein gemischter Betrieb möglich, bei dem sich unterschiedliche Gegenstände gleichzeitig in der Förderanlage gefördert werden. Durch Greifer mit zwei baugleichen, individuell aktivierbaren Greiferbacken können die Gegenstände gezielt in verschiedene Richtungen abgegeben und damit verschiedenen weiterverarbeitenden Stationen zugeführt werden.

Durch die gerichtete Produktabgabe ist ein Sortieren der Gegenstände möglich. In Abhängigkeit von vorbestimmten Merkmalen, wie z.B. der Grösse, können die Gegenstände in Förderrichtung gesehen nach rechts oder nach links abgegeben und unterschiedlichen weiteren Stationen oder Förderwegen zugeführt werden. Diese Sortierfunktion ist mit einfachen Mitteln realisierbar.

Eine wie oben beschriebene Förderanlage kann optional durch ein Verfahren betrieben werden, in welchem in einem ersten Schritt ein zu ergreifender Gegenstand von einem ersten Greifer der Förderanlage ergriffen wird. In einem zweiten Schritt wird der ergriffene Gegenstand vom ersten Greifer der Förderanlage an einen zweiten Greifer der Förderanlage überführt. Und in einem dritten Schritt wird der ergriffene Gegenstand vom zweiten Greifer der Förderanlage abgegeben.

Als zusätzliche Option wird im zweiten Schritt des oben beschriebenen Verfahren der ergriffene Gegenstand aus einer ersten Position bezüglich des ersten Greifers in eine zweite Position bezüglich des zweiten Greifers überführt, wobei sich die erste und die zweite Position bezüglich des jeweiligen Greifers in Kontaktstellen mit dem Greifer und/oder Lage des Gegenstands bezüglich des Greifers und/oder Orientierung des Gegenstands bezüglich des Greifers unterscheiden.

Die Vorteile und Alternativen einer Förderanlage, welche durch ein die oben beschriebenen drei Schritte umfassendes Verfahren betrieben wird, sind bereits weiter oben bei der Beschreibung des Überführungsmechanismus beschrieben worden. Analoges gilt für die Vorteile und Alternativen von sich unterscheidenden Positionen von ergriffenen Gegenständen bezüglich des entsprechenden Greifers vor und nach dem zweiten Schritt (also vor und nach dem überführen). Optional durchläuft dabei ein nach dem zweiten Schritt des Verfahrens ergriffener Gegenstand mindestens teilweise einen gleichen Abschnitt der geschlossenen Umlaufbahn der Förderanlage wie ihn derselbe ergriffene Gegenstand vor dem zweiten Schritt des Verfahrens bereits durchlaufen hat. Mit anderen Worten durchläuft derselbe Gegenstand durch den zweiten Greifer ergriffen mindestens teilweise dieselbe Umlaufbahn, welche er bereits durch den ersten Greifer ergriffen durchlaufen hat.

Die Vorteile von mehrfach durchlaufenen und von insbesondere selektiv mehrfach durchlaufenen Teilen der geschlossenen Umlaufbahn sind ebenfalls bereits weiter oben beschrieben. Alternativ können Teile der Umlaufbahn aber auch übersprungen, also ausgelassen oder abgekürzt werden. Insbesondere können auf diese Weise abgeschaltete Bearbeitungsstationen umgangen werden bzw. entsprechende Teile der Umlaufbahn überbrückt werden. Die gleiche Umlaufbahn der Förderanlage kann somit wesentlich vielseitiger, flexibler und auch effizienter und kostengünstiger eingesetzt und betrieben werden.

Die Aufgabe wird bezüglich des zweiten, nicht beanspruchten Aspekts mindestens teilweise durch eine im folgenden Abschnitt beschriebene Förderanlage gelöst.

Diese Förderanlage weist eine Mehrzahl von Greifen auf, welche entlang einer Umlaufbahn bewegbar sind. Dabei weist jeder Greifer mindestens eine erste Greiferbacke, mindestens eine zweite Greiferbacke und mindestens ein Steuerelement auf, und das mindestens eine Steuerelement zum gezielten Öffnen der ersten und/oder zweiten Greiferbacke wirkt mit einem Schaltmittel zusammen. Zudem weist die Förderanlage entlang der Umlaufbahn mindestens eine erste Öffnungsstelle mit einem Schaltmittel eines ersten Typs und eine zweite Öffnungsstelle mit einem Schaltmittel eines zweiten Typs auf. Und jeder Greifer der Förderanlage weist mindestens ein Steuerelement auf, welches derart konfiguriert ist, dass es entweder mit einem Schaltmittel ersten Typs oder mit einem Schaltmittel zweiten Typs zusammenwirkt.

Schaltmittel verschiedenen Typs unterscheiden sich dadurch, dass sie jeweils nur mit einer spezifischen Auswahl an Steuerelementen zusammenwirken. Beispielsweise unterscheiden sich Schaltmittel verschiedenen Typs durch verschiedene räumliche Anordnungen, durch zeitlich verschiedene Phasen des Zusammenwirkens und/oder durch verschiedene Wirkungsweisen bzw. Arten des Zusammenwirkens.

Ein Beispiel für Schaltmittel verschiedenen Typs mit einer verschiedenen räumlichen Anordnung sind je eine drehbar gelagerte Scheibe umfassende Schaltmittel, wobei die Scheiben mit verschieden grossem Abstand und/oder auf verschiedenen Seiten von den vorbei geförderten Greifern angeordnet sind. Je nach Abstand der funktionalen Kontur des Steuerelements vom Greifer wirkt ein Greifer nur mit einem Typ von Schaltmittel zusammen.

Ein Beispiel für Schaltmitteln verschiedenen Typs mit zeitlich verschiedenen Phasen des Zusammenwirkens sind je eine drehbar gelagerte Scheibe umfassende Schaltmittel, wobei die Scheiben Aussparungen in der Umfangseite aufweisen und sich die Scheiben an ihrer Umfangseite mit gleicher Geschwindigkeit wie die Greifer drehen. Steuerelemente, welche beim Vorbeifördern an den Schaltmitteln auf die Aussparungen der Scheiben der Schaltmittel treffen, können durch fehlenden Kontakt mit dem Schaltmittel nicht mit dieser Zusammenwirken. Durch Anordnen einer Mehrzahl derartiger Schaltmittel hintereinander in Förderrichtung können zeitlich verschobene Phasen des Zusammenwirkens von Schaltmitteln mit Greifern der Förderanlage ausgebildet werden.

Die Greifer der Förderanlage können ein Steuerelement, zwei Steuerelemente oder mehr auf aufweisen, wobei die Anzahl der Steuerelemente pro Greifer variieren kann. Die Steuerelemente können derart ausgebildet sein, dass sie mit nur einem Typ von Schaltmittel zusammenwirken oder mit mehreren Typen von Schaltmitteln zusammenwirken.

Die Greifer der Förderanlage bezüglich des zweiten Aspekts können Steuerelemente aufweisen, welche als Steuerkulissen ausgebildet sind. Die Greifer der Förderanlage können alternativ aber auch Steuerelemente aufweisen, welche nicht als Steuerkulissen ausgebildet sind. Die Greifer der Förderanlage können auch Steuerelemente aufweisen, welche teilweise als Steuerkulissen und teilweise nicht als Steuerkulissen ausgebildet sind.

Eine Förderanlage kann mindestens zwei, mindestens drei oder insbesondere mindestens vier Öffnungsstellen aufweisen. Dabei weisen die Öffnungsstellen mindestens je ein Schaltmittel auf, insbesondere aber auch mindestens je zwei Schaltmittel, insbesondere mindestens je drei Schaltmittel oder mehr.

Die Förderanlage weist mindestens ein Schaltmittel ersten Typs und ein Schaltmittel zweiten Typs auf, welche je an verschiedenen Öffnungsstellen angeordnet sind. Die Förderanlage kann auch Schaltmittel von drei verschiedenen Typen oder noch mehr verschiedenen Typen aufweisen, welche an gleichen und/oder verschiedenen Öffnungsstellen angeordnet sind.

Eine Förderanlage mit Öffnungsstellen, welche Schaltmittel verschiedenen Typs aufweisen, kann ergriffene Gegenstände gezielt an verschiedene Öffnungsstellen fördern. Dies erlaubt beispielsweise ein Sortieren von geförderten Gegenständen, indem diese an verschiedenen Öffnungsstellen durch gezieltes Öffnen der Greifer ausgeworfen oder dem Greifer entnommen werden. Beispielsweise können durch eine solche Förderanlage auch verschiedene Bearbeitungsstationen für etwa eine Weiterverarbeitung je nach Bedarf mit Gegenständen versehen werden. Auch Abfüll- und/oder Verpackungsstationen und/oder Vorrichtungen für eine Weiterförderung können nach Bedarf mit von der Förderanlage geförderten Gegenständen versehen werden.

Optional weist die Förderanlage eine Mehrzahl von Greifern auf, die eine einzeln steuerbare erste Greiferbacke und eine im Wesentlichen baugleich gestaltete zweite Greiferbacke und diesen zugeordnete erste und/oder zweite Steuerelemente aufweisen, und mit Schaltmitteln ersten und zweiten Typs, welche mit den ersten bzw. zweiten Steuerelementen zusammenwirken, zum gezielten Öffnen der ersten und/oder zweiten Greiferbacke.

Greifer mit im wesentlich baugleich gestalteten Greiferbacken können günstig ausgebildet werden, und Wartung und Ersatz ist aufgrund von im Wesentlichen baugleichen Ersatzteilen einfach und unkompliziert.

Die Greiferbacken können aber auch unterschiedlich ausgestaltet sein. Insbesondere können die Greiferbacken sich nur dadurch unterscheiden, dass die Steuerelemente derart ausgebildet sind, dass die Steuerelemente je mit Schaltmitteln verschiedenen Typs zusammenwirken. Insbesondere sind die Steuerelemente dazu in unterschiedlichen Entfernungen zu den jeweiligen Greiferbacken angeordnet.

Optional weist die Förderanlage entlang ihrer Umlaufbahn mindestens ein Erfassungsgerät auf, welches dazu ausgebildet ist, der Förderanlage Informationen über Greifer und insbesondere über ergriffene Gegenstände zu liefern.

Das Erfassungsgerät kann insbesondere einen Sensor aufweisen und/oder an einen bezüglich der Förderanlage internen und/oder externen Sensor gekoppelt sein.

Das Erfassungsgerät entlang der Umlaufbahn bietet den Vorteil, dass das Erfassungsgerät der Förderanlage Informationen liefert, welche die Förderanlage weiterverarbeiten kann, beispielsweise zur gezielten Steuerung von Greifern, zum Automatisieren von Abläufen, zur Qualitätskontrolle und/oder zur Überwachung bzw. als Sicherheitskontrolle.

Die Information kann beispielsweise eine Information über einen Öffnungszustand des Greifers, die Klemmkraft des Greifers, einen Befüllungszustand des Greifers, eine Qualität und/oder Art eines ergriffenen Gegenstandes und/oder über eine Sorte des ergriffenen Gegenstandes darstellen. Mit Sorte ist gemeint, dass beispielsweise Gegenstände gleicher Art aber verschiedener Sorte sein können, also etwa verschiedener Grösse, Farbe, Dicke, Lackierung und/oder Beschaffenheit.

Das Erfassungsgerät kann beispielsweise der Förderanlage die Information übermitteln, ob ein ergriffener Gegenstand eine bestimme Qualität aufweist oder nicht, beispielsweise eine Deformation oder einen Riss oder eine ungenügende Dicke aufweist.

Bei ungenügender Qualität kann die Förderanlage entsprechende Massnahmen ergreifen, etwa ein Öffnen des entsprechenden Greifers an einer bestimmten Öffnungsstelle. Auf diese Weise kann die Förderanlage mit einer Qualitätskontrolle versehen werden, welche Ausschuss automatisch aussortiert.

Optional weist die Förderanlage entlang ihrer Umlaufbahn neben einer ersten Öffnungsstelle mit einem Schaltmittel eines ersten Typs und einer zweiten Öffnungsstelle mit einem Schaltmittel eines zweiten Typs eine weitere Öffnungsstelle mit sowohl einem Schaltmittel ersten Typs als auch einem Schaltmittel zweiten Typs auf.

Eine weitere Öffnungsstelle mit Schaltmitteln ersten und zweiten Typs kann sicherstellen, dass ein Greifer mit Steuerelementen, welche mit Schaltmitteln ersten und/oder zweiten Typs zusammenwirkt, geöffnet wird. Die weitere Öffnungsstelle wird im Folgenden als dritte Öffnungsstelle bezeichnet. Die dritte Öffnungsstelle kann bei Verwendung von mehr als zwei Typen von Schaltmitteln gleichzeitig alle Typen von Schaltmitteln aufweisen.

Die dritte Öffnungsstelle kann dazu dienen, einen vorbei geförderten Greifer auf jeden Fall zu öffnen und dadurch alle Greifer des Förderorgans an dieser Stelle zu öffnen. Insbesondere kann dies dazu verwendet werden, an einer bestimmten Stelle alle ergriffenen Gegenstände aus allen Greifern zu entfernen.

Optional ist mindestens eines der Schaltmittel einer der oben beschriebenen Förderanlagen durch eine Steuereinrichtung aktivierbar und deaktivierbar, damit dieses Schaltmittel wahlweise mit Steuerelementen von vorbei geförderten Greifern zusammenwirkt oder nicht.

Die Steuereinrichtung kann automatisch gesteuert und/oder manuell geschaltet werden. Die Steuereinrichtung kann beispielsweise durch die Förderanlage selber oder von ausserhalb der Förderanlage stammenden Signalen gesteuert werden.

Optional weist die Förderanlage entlang ihrer Umlaufbahn mindestens ein steuereinrichtungsfreies Schaltmittel jeden Typs auf, welches mit jedem vorbei geförderten und entsprechend konfigurierten Steuerelement zusammenwirkt.

Weist die Förderanlage entlang ihrer Umlaufbahn mindestens ein steuerungsfreies Schaltmittel jeden Typs auf, so wirkt jedes Steuerelement im Verlauf eines Durchlaufs der Umlaufbahn mindestens an einer Öffnungsstelle mit einem Schaltmittel zusammen. Dies stellt sicher, dass ein Greifer bei einem vollständigen Durchlauf der Umlaufbahn mindestens ein Mal mit einem Schaltmittel zusammenwirkt. Auf diese Weise ist sicher gestellt, dass jeder Greifer bei einem vollständigen Durchlauf der Umlaufbahn beispielsweise geöffnet wird. Dies kann etwa zur Sicherung einer vollständigen Entleerung der Förderanlage während eines vollständigen Durchlaufs der Umlaufbahn benutzt werden.

Optional weist die Umlaufbahn mindestens eine Behandlungsstrecke auf, insbesondere eine wendelförmig verlaufende Behandlungsstrecke.

Die Behandlungsstrecke ist eine Teilstrecke der Umlaufbahn, wobei die geförderten Produkte auf der Teilstrecke behandelt werden. Die Produkte können auf der Behandlungsstrecke beispielsweise lackiert, oberflächenbehandelt, thermisch behandelt (gekühlt und/oder erwärmt), bestrahlt (z.B. mit ionisierender und/oder nicht ionisierender Strahlung bestrahlt), chemisch behandelt, sterilisiert und/oder in Ozon geduscht werden. Alle Behandlungen können ein- oder mehrmals und auch in Kombination miteinander und/oder aufeinander folgend angewendet werden. Insbesondere ist die Behandlungsstrecke eine Kühlstrecke, auf welcher die geförderten Produkte abkühlen können oder abgekühlt werden.

Die Behandlungsstrecke kann beispielsweise schraubenförmig verlaufen, die Form einer Helix aufweisen oder auch in nur einer einzigen Ebene verlaufen. Die Behandlungsstrecke kann auch andere Formen aufweisen, etwa eine Gerade oder geschwungene Formen in einer Ebene oder aber auch in mehreren Ebenen über- und/oder nebeneinander.

Optional weist die Förderanlage einen Überführungsmechanismus sowie Greifer mit mindestens zwei Greiferbackenpaaren auf.

Die entsprechenden Vorteile des Überführungsmechanismus sowie von Greifern mit mindestens zwei Greiferbackenpaaren sind weiter oben beschrieben.

Die Aufgabe wird bezüglich des dritten, nicht beanspruchten Aspekts mindestens teilweise durch eine im folgenden Absatz beschriebene Förderanlage gelöst.

Förderanlage, welche ein mehrere Glieder umfassendes Antriebsorgan aufweist, wobei jedes Glied eine Mehrzahl von Greiferbackenpaaren umfasst, Gegenstände verschiedener Sorten entlang des Antrieborgans in Gruppen von Gegenständen gleicher Sorte angeordnet sind, wobei Gruppen von Gegenständen gleicher Sorte von Greiferbackenpaaren ergriffen sind, welche mindestens bei einer Gruppe von Gegenständen gleicher Sorte an mindestens zwei Gliedern des Antriebsorgans angeordnet sind. Dieser dritte Aspekt lässt sich in Kombination mit den anderen Aspekten, oder aber gänzlich unabhängig realisieren. Mit anderen Worten reichen gemäss dem dritten Aspekt Gruppen von Gegenständen gleicher Sorte über Grenzen von Gliedern des Antrieborgans hinaus.

Die Greifer der Förderanlage bezüglich des dritten Aspekts können Steuerelemente aufweisen, welche als Steuerkulissen ausgebildet sind. Die Greifer der Förderanlage können alternativ aber auch Steuerelemente aufweisen, welche nicht als Steuerkulissen ausgebildet sind. Die Greifer der Förderanlage können auch Steuerelemente aufweisen, welche teilweise als Steuerkulissen und teilweise nicht als Steuerkulissen ausgebildet sein.

Insbesondere sind bezüglich des drittens Aspekts Greiferbackenpaare, durch welche Gegenstände mindestens zweier Sorten in Gruppen jeweils gleicher Sorte ergriffen sind, in allen Gruppen einer ersten Sorte von Gegenständen an mindestens zwei Gliedern des Antrieborgans angeordnet.

Optional sind bezüglich des drittens Aspekts Greiferbackenpaare, durch welche Gegenstände mindestens zweier Sorten in Gruppen jeweils gleicher Sorte ergriffen sind, in allen Gruppen der ersten Sorte sowie in allen Gruppen einer zweiten Sorte von Gegenständen an mindestens zwei Gliedern des Antrieborgans angeordnet.

Optional sind bezüglich des drittens Aspekts Greiferbackenpaare, durch welche Gegenstände mindestens zweier Sorten in Gruppen jeweils gleicher Sorte ergriffen sind, in allen Gruppen jeder Sorte von Gegenständen an mindestens zwei Gliedern des Antrieborgans befestigt.

Eine solche Förderanlage bezüglich des drittens Aspekts bietet den Vorteil, dass Gegenstände verschiedener Sorten gruppenweise transportiert werden können, ohne dass eine Anordnung und Grösse der Gruppen durch eine Anordnung und Grösse der Glieder des Antriebsorgans eingeschränkt und/oder bestimmt wird.

Beispielsweise kann auch durch eine Erhöhung der Anzahl der Greiferbackenpaare pro Greifer die Effizienz und Förderleistung der Förderanlage erhöht werden, ohne dass durch diese Erhöhung eine Einschränkung und/oder Vorbestimmung der Art der geförderten Gegenstände und insbesondere der Grösse und/oder Anordnung der Gruppen von geförderten Gegenständen gleicher Sorte erfolgt.

Beispielsweise weist bezüglich des drittens Aspekts ein Glied des Antrieborgans zwei Greiferbackenpaare auf.

Bezüglich des drittens Aspekts kann ein Glied des Antriebsorgans beispielsweise aber auch drei, vier und insbesondere fünf Greiferbackenpaare aufweisen. Die Anzahl der Greiferbackenpaare pro Glied kann beispielsweise auch von Glied zu Glied variieren. Eine Mehrzahl von Greiferbackenpaaren pro Greifer erhöht die Effizienz und Förderleistung der Förderanlage und senkt Kosten bei Herstellung, Unterhalt und Reparaturen der Förderanlage.

Beispielsweise werden bezüglich des drittens Aspekts zwei Gruppen von jeweils drei Gegenständen gleicher Sorte in Förderrichtung abwechselnd nacheinander gefördert.

Die Anzahl von Gegenständen jeweils gleicher Sorte pro Gruppe kann bezüglich des drittens Aspekts beispielsweise auch vier, fünf und insbesondere sechs betragen. Die Anzahl von Gegenständen jeweils gleicher Sorte pro Gruppe kann beispielsweise auch von Gruppe zu Gruppe variieren.

Ein Fördern von Gegenständen jeweils gleicher Sorte in Gruppen erlaubt ein effizientes Fördern von Gegenständen, welche beispielsweise in Chargen oder als Los produziert werden und/oder zu mehreren verarbeitet oder benötigt werden.

Bezüglich des drittens Aspekts kann eine Gruppe von Gegenständen gleicher Sorte optional durch Greiferbackenpaaren ergriffen sein, welche pro Gruppe an höchstens zwei, insbesondere höchstens drei und insbesondere höchstens vier Gliedern des Antriebsorgans befestigt sind.

Eine Verteilung von Gruppen von mehreren Gegenständen jeweils gleicher Sorte auf mehrere Glieder des Antriebsorgans erlaubt ein stabiles und flexibles Fördern dieser Gruppe und/oder eine flexible Anpassung von Förderanlagen auf neue Aufgaben.

Bezüglich des drittens Aspekts weisen optional Greiferbackenpaare, durch welche eine Gruppe von Gegenständen gleicher Sorte ergriffen sind, mindestens ein Steuerelement auf, welches nur mit jeweils nach Sorte der Gegenstände unterschiedlichen und spezifischen Schaltmitteln zusammenwirken kann.

Insbesondere ist bezüglich des drittens Aspekts jedes Greiferbackenpaar fest programmiert. D.h. dass jedes Greiferbackenpaar derart ausgebildet ist, dass es nur mit Schaltmitteln eines bestimmten Typs und gegebenenfalls nur mit Schaltmitteln eines bestimmten Typs welche einer bestimmten Sorte von Gegenständen zugeordnet sind zusammenwirkt.

Der Vorteil von fest programmierten Greiferbackenpaaren besteht in tiefen Herstellungs- und Wartungskosten, einfacher Konstruktion und einfacher Funktionsweise.

Eine Lösung der Aufgabe bezüglich des dritten Aspekts lässt sich durch ein im folgenden Absatz beschriebenes Verfahren zum Betrieb einer Förderanlage realisieren.

Verfahren zum Betrieb einer Förderanlage, wobei die Förderanlage ein mehrere Glieder umfassendes Antriebsorgan aufweist, wobei jedes Glied eine Mehrzahl von Greiferbackenpaaren umfasst, wobei Gegenstände verschiedener Sorten entlang des Antrieborgans in Gruppen von Gegenständen gleicher Sorte gefördert werden, und Gruppen von Gegenständen gleicher Sorte von Greiferbackenpaaren gefördert werden, welche mindestens bei einer Gruppe von Gegenständen gleicher Sorte an mindestens zwei Gliedern des Antriebsorgans angeordnet sind.

Merkmale der Erfindung sind mit Merkmalen der zur besseren Veranschaulichung der Erfindung beschriebenen Beispielen kombinierbar und umgekehrt, sofern dies nicht aus technischen Gründen ausgeschlossen ist.

Insbesondere sind Merkmale von verschiedenen Aspekten miteinander kombinierbar. Insbesondere können beispielsweise alle oben beschriebenen Greifer Steuerelemente mit einer funktionalen Kontur mit mindestens einem gekrümmten Kontursegment aufweisen.

Beispiele der Erfindung sind in den Figuren dargestellt und nachfolgend beschrieben. Es zeigen rein schematisch:
- Fig. 1a-d: einen Greifer mit zwei Greiferbacken in Form von Bügeln in verschiedenen Ansichten;
- Fig. 2a-c: den Greifer aus Fig. 1a-d in geschlossenem, einseitig und beidseitig geöffnetem Zustand;
- Fig. 3a-e: einen alternativen Greifer mit zwei Greiferbacken in Form von Bügeln in verschiedenen Ansichten;
- Fig. 4: einen Greifer mit nach Innen vorgespannten Greiferbacken;
- Fig. 5: einen Greifer mit zusätzlichen elastischen Klemmelementen im Klemmbereich;
- Fig. 6a-d: einen weiteren alternativen Greifer mit zwei Greiferbacken in Form von Bügeln und verschiedene Momentaufnahmen dieses Greifers beim Aufnehmen von Gegenständen;
- Fig. 7a+b: einen Greifer beim Abgeben eines Gegenstands durch wahlweises Öffnen einer ersten bzw. einer zweiten Greiferbacke;
- Fig. 8: eine Förderanlage;
- Fig. 9: einen Ausschnitt einer Förderanlage mit Greifern mit zwei Greiferbackenpaaren;
- Fig. 10: einen ersten Querschnitt durch die Förderanlage aus Fig. 9;
- Fig. 11: einen zweiten Querschnitt durch die Förderanlage aus Fig. 9;
- Fig. 12: einen Teil der Umlaufbahn der Förderanlage aus Fig. 9;
- Fig. 13: eine Querschnitt durch die Umlaufbahn der Förderanlage aus Fig. 12;
- Fig. 14: einen Greifer mit einem Steuerelement, welches eine funktionale Kontur aufweist;
- Fig. 15: einen weiteren Greifer mit einem Steuerelement, welches eine funktionale Kontur aufweist, sowie ein dazugehöriges Schaltmittel;
- Fig. 16: den Greifer und das Schaltmittel aus Fig. 15 in Seitenansicht;
- Fig. 17a-d: Greifer mit verschieden angeordneten Steuerelementen;
- Fig. 18: eine Förderanlage mit fünf Öffnungsstellen;
- Fig. 19: die Förderanlage aus Fig. 18 von oben;
- Fig. 20: ein Schaltmittel mit Aussparungen;
- Fig. 21a-f: schematisch dargestellte Anordnungen von Schaltmitteln entlang einer Umlaufbahn einer Förderanlage;

Fig. 22 ein Teil einer Förderanlage zum Fördern von förderelementübergreifenden Gruppen von Gegenständen gleicher Sorte.

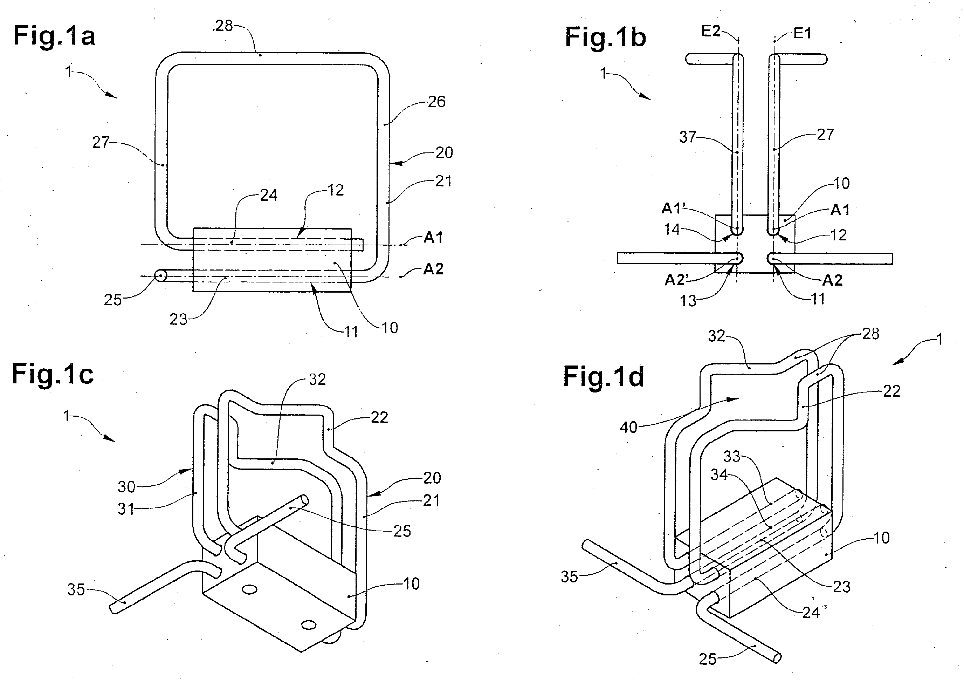

Fig. 1 bis 8 und 12 bis 13 zeigen zur besseren Veranschaulichung der Erfindung Ausführungsformen entsprechend der Patentanmeldung WO 2012/142719 A1.

Fig. 1a-d zeigt einen Greifer 1 mit einem Greiferkörper 10 und zwei Greiferbacken 20, 30 in Form von Bügeln 21, 31 in verschiedenen Ansichten im geschlossenen Zustand.

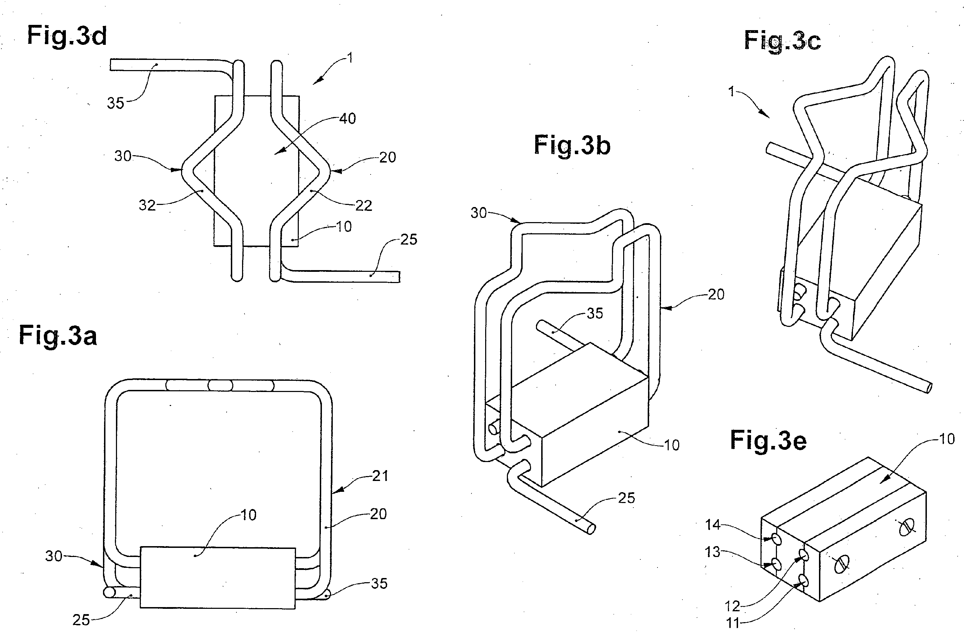

Der Greiferkörper 10 ist im Wesentlichen quaderförmig und weist vier in seiner Längsrichtung durchgehende, röhrenartige Aussparungen 11, 12, 13, 14 auf. Er kann, wie in Fig. 3e gezeigt, aus mehreren miteinander verbundenen Teilen bestehen, wobei die Aussparungen durch Nuten entlang der Verbindungsflächen dieser Teile gebildet sind. Je zwei der Aussparungen 11, 12 bzw. 13, 14 liegen in einer gemeinsamen Ebene E1 bzw. E2 und verlaufen parallel zueinander. Der Greiferkörper 10 umfasst hier nicht dargestellte zusätzliche Elemente, mit denen er an ein Antriebsorgan einer Förderanlage angekoppelt werden kann.

Die Greiferbacken 20, 30 haben die Form einer Schlaufe, die von in der Aufsicht (Fig. 1a) im Wesentlichen rechteckförmig ist und zwei zueinander parallel verlaufende, nebeneinander liegende Befestigungsabschnitte 23, 24 bzw. 33, 34 aufweist. Mit diesen Befestigungsabschnitten 23, 24 bzw. 33, 34 ist der Bügel 21, 31 in den Aussparungen 11, 12 bzw. 13, 14 im Greiferkörper 10 gelagert. Jeder der Befestigungsabschnitte 23, 24, 33, 34 geht in einen dazu etwa rechtwinklig orientierten Abschnitt 26, 27 bzw. 36, 37 über. Diese Abschnitte sind miteinander durch einen weiteren Abschnitt 28, 38 verbunden, der wieder etwa parallel zu den Befestigungsabschnitten des entsprechenden Bügels 21, 31 verläuft. Innerhalb des weiteren Abschnitts 28, 38 befindet sich der Klemmbereich 22, 32. Während die Abschnitte 23, 24, 26, 27 bzw. 33, 34, 36, 37 im Wesentlichen in der Ebene E1 bzw. E2 liegen, sind die Klemmbereiche 22, 32 senkrecht zu diesen Ebenen orientiert. Sie bilden dadurch zusammen eine Aussparung 40, in der ein Gegenstand aufgenommen und beispielsweise durch Untergreifen eines Halterings öder eines Anschlags gehalten werden kann. Im vorliegenden Beispiel sind die Klemmbereiche 22, 32 gebildet, indem der Bügel 21, 31 nach Art eines Dreiecks aus der Ebene E1 bzw. E2 nach Aussen ragt, so dass die Aussparung 40 sich nach Aussen hin verjüngt.

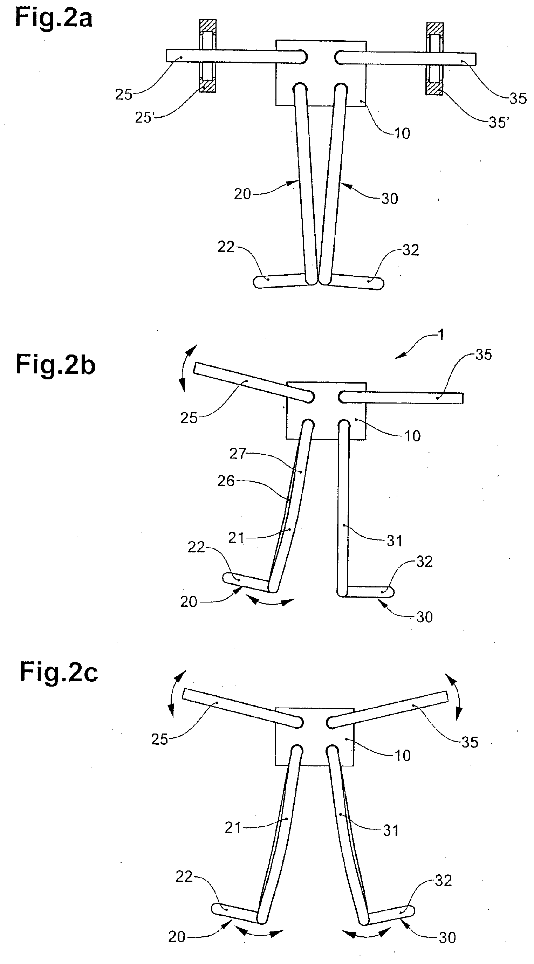

Die Bügel 21, 31 haben in einem Endbereich ausserdem einen Betätigungsabschnitt 25, 35, der aus der Ebene E1 bzw. E2 heraus ragt. Der Betätigungsabschnitt 25, 35 wirkt als Steuerelement direkt mit einem Schaltmittel zusammen oder trägt eine Steuerrolle 25', 35' (Fig. 2a), die an einem solchen Schaltmittel abrollt. Betätigungsabschnitt und Steuerelement bezeichnen dasselbe Element und werden synonym verwendet. Die Betätigungsabschnitte 25, 35 beider Greiferbacken 20, 30 sind in diesem Beispiel an derselben Seite des Greiferkörpers 10 angeordnet, aber weisen in entgegengesetzte Richtungen (spiegelsymmetrische Bauform). Im Beispiel von Fig. 3a-e befinden sie sich an gegenüberliegenden Seiten des Greiferkörpers 10 (achssymmetrische Bauform).

Der Greifer 1 funktioniert wie folgt: Die Befestigungsabschnitte 23, 24 bzw. 33, 34 befinden sich in den Aussparungen 11, 12 bzw. 13, 14 im Greiferkörper 10. Hierdurch nehmen die Bügel 21, 31 die in Fig. 1b-d gezeigte Ruheposition ein, in der sie sich in parallelen Ebenen E1, E2 befinden. Durch geeignete Vorspannung bzw. Vorformung der Bügel kann auch erreicht werden, dass die Bügel im unbelasteten Zustand (ohne Betätigung des Steuerelements) gegeneinander drücken, wie in Fig. 2a gezeigt ist. Die Befestigungsabschnitte 23, 24 bzw. 33, 34 eines Bügels 21, 31 sind nicht entlang einer gemeinsamen Achse gelagert, sondern entlang jeweils zweier vorzugsweise paralleler Achsen A1, A2, A1', A2', die jeweils durch die Aussparungen 11, 12 bzw. 13, 14 vorgegeben sind. Dadurch können die Bügel sich nicht frei drehen, sondern verformen sich, wenn durch Betätigen der hebelartigen Betätigungsabschnitte 25, 35 von Aussen eine Kraft auf sie ausgeübt wird. Die Bügel 21, 31 werden um eine ungefähre Schwenkachse verschwenkt, die etwa im Bereich der Mitte zwischen den beiden Achsen A1, A2 bzw. A1', A2' liegt. Fig. 2b zeigt das Auslenken und Tordieren der ersten Greiferbacke 20 bei Betätigung des Hebels 25. Fig. 2c zeigt Auslenken und Tordieren beider Greiferbacken 20, 30 bei Betätigung beider Hebel 25, 35. Bei Loslassen der Betätigungsabschnitte 25, 35 gehen die elastisch verformten Bügel 21, 31 wieder in die definierte Ausgangsposition zurück.

Die Bügel 21, 31 müssen nicht einstückig gefertigt sein, sondern können auch aus mehreren Elementen bestehen, die starr miteinander verbunden sind. Diese Elemente können beispielsweise auch aus unterschiedlichen Materialien bestehen.

Fig. 3a-e zeigt eine Variante des Greifers aus Fig. 1a-d, Fig. 2a-c, bei der sich die Betätigungsabschnitte 25, 35 an gegenüberliegenden Seiten des Greiferkörpers 10 befinden. Die Bügel 21, 31 und der Greiferkörper 10 sind ansonsten in Aufbau und Funktion gleich. Der Greiferkörper 10 kann mehrteilig sein (Fig. 3e). Fig. 3d zeigt eine Aufsicht von oben auf die Klemmbereiche 22, 32 der Bügel 21, 31.

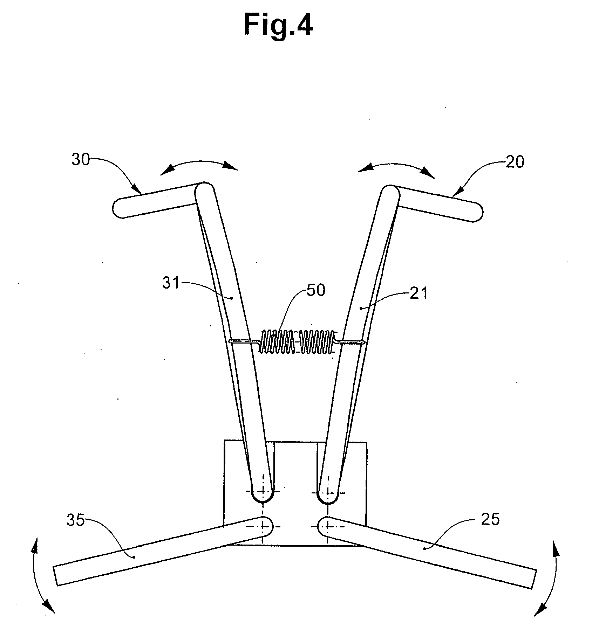

Fig. 4 zeigt einen Greifer 10 wie in Fig. 1a-d, bei dem die Bügel 21, 31 durch ein zusätzliches Vorspannelement 50, hier ein Federelement, gegeneinander vorgespannt sind.

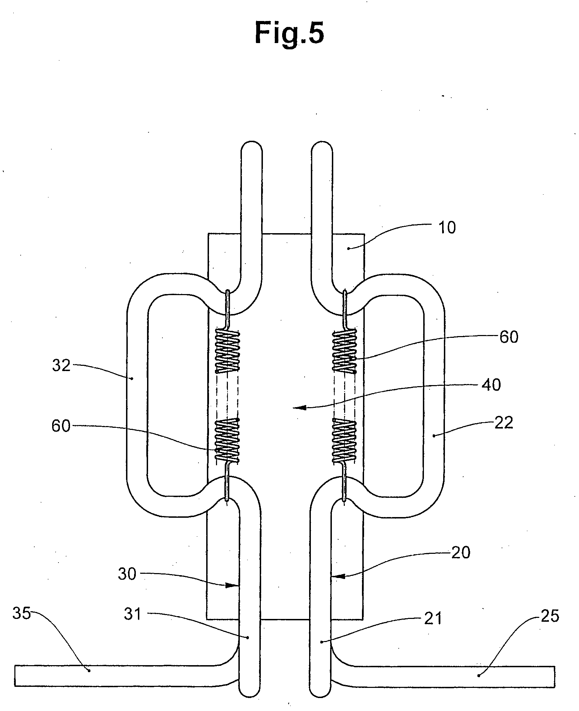

Fig. 5 zeigt einen weiteren Greifer in Aufsicht von oben auf die Klemmbereiche 22, 32 der Bügel 21, 31. Die Klemmbereiche 22, 32 sind U-förmig gebogen. Zwischen den beiden Schenkeln des U befindet sich ein Klemmelement 60, das eine grössere Elastizität als der Bügel 21, 31 hat. Es ist beispielsweise ein Federelement oder ein Gummielement. Die beiden Klemmelemente 60 dienen dazu, dass sich der Greifer 1 besser an verschiedene Umfänge und Formen der zu übernehmenden Gegenstände anpassen und den Gegenstand zuverlässiger halten kann. Die Aufnahme 40 ist genügend gross, dass die Federn nach Aussen ausweichen können. Durch geeignete Oberflächengestaltung des Klemmelements 60 können die Gegenstände auch im Reibschluss ergriffen werden.

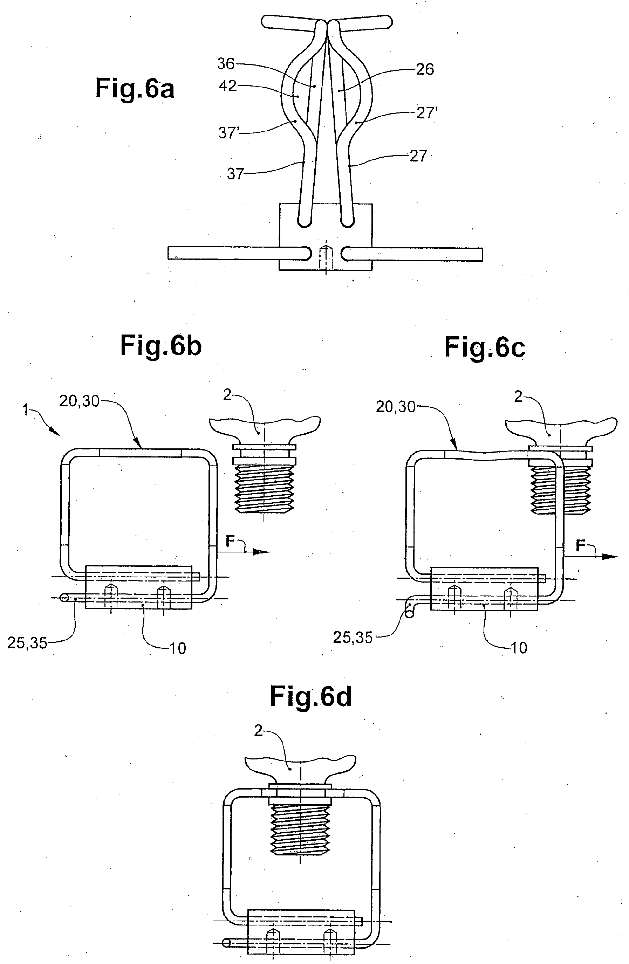

Fig. 6a-d zeigen eine Variante des Greifers aus Fig. 1a-d mit einer Selbstöffnungs-Funktion. Einer der seitlichen Abschnitte 27, 37 des Bügels 21, 31 ist bereichsweise U-förmig gebogen, so dass zwischen den Abschnitten 27, 37 eine Aussparung 42 gebildet ist. Diese U-förmigen Abschnitte dienen als Betätigungselement 27', 37' für das wenigstens teilweise Öffnen des Greifers 1 durch einen aufzunehmenden Gegenstand, wenn der Greifer von der Seite, d.h. in Fig. 6a senkrecht zur Bildebene und in Fig. 6b-d in Förderrichtung F, gegen den Gegenstand 2 bewegt wird (Fig. 6b). Der seitlich angenäherte Gegenstand 2 drückt die beiden Schenkel 27, 37 auseinander (Fig. 6c). Hierdurch öffnet sich der Greifer 1 etwas, so dass der Gegenstand in die Aufnahme 40 im Klemmbereich hineinbewegt und beim Zurückschnappen der Greiferbacken zwischen diesen aufgenommen wird (Fig. 6d). Die Betätigungsabschnitte 25, 35 werden nicht durch ein Schaltmittel, sondern nur indirekt über den Bügel 21, 31 bewegt.

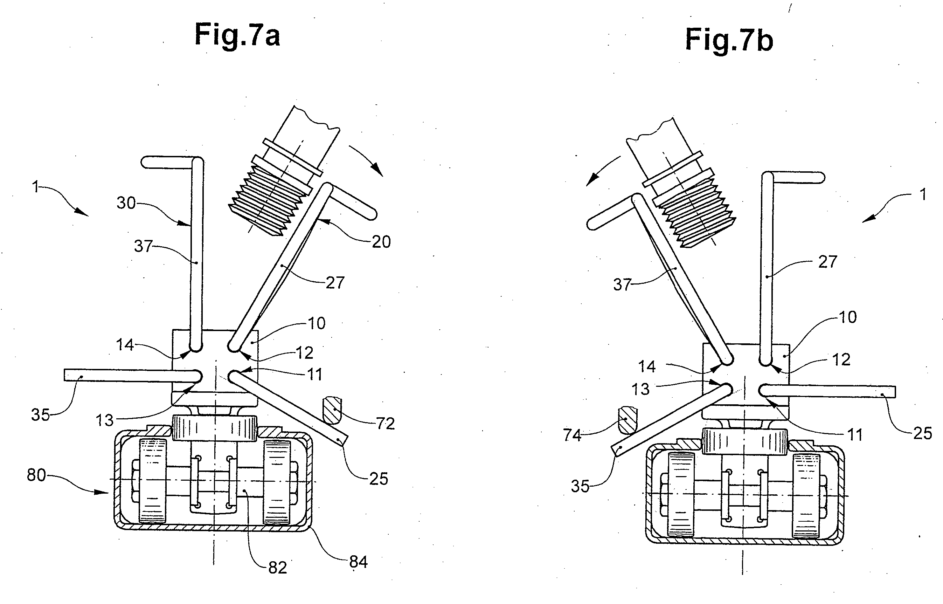

Fig. 7a+b zeigt einen Greifer 1 beim Abgeben eines Gegenstands 2 durch wahlweises Öffnen der ersten bzw. der zweiten Greiferbacke 20, 30 durch ein erstes bzw. zweites Schaltmittel 72, 74. Wird die linke Greiferbacke 30 aktiviert, wird sie nach links unten ausgelenkt. Der fällt dann Gegenstand 2 nach links (Fig. 7a). Beim Öffnen der rechten Greiferbacke fällt der Gegenstand entsprechend nach rechts (Fig. 7b). Auf diese Weise kann eine richtungsgesteuerte Abgabe und damit beispielsweise eine Sortierfunktion erreicht werden.

Fig. 7a+b zeigen ausserdem die Lagerung des Greifers 1 an einem Antriebsorgan 82 einer Förderanlage 80. Das Antriebsorgan 82 ist hier eine insbesondere kontinuierlich bewegte Kette, deren Bewegungsbahn durch einen Kanal 84 festgelegt wird. Die Förderrichtung ist senkrecht zur Bildebene. Die Kette 82 umfasst mehrere Kettenglieder, von denen beispielsweise jedes oder jedes zweite als Träger für den Greifer 1 dient.

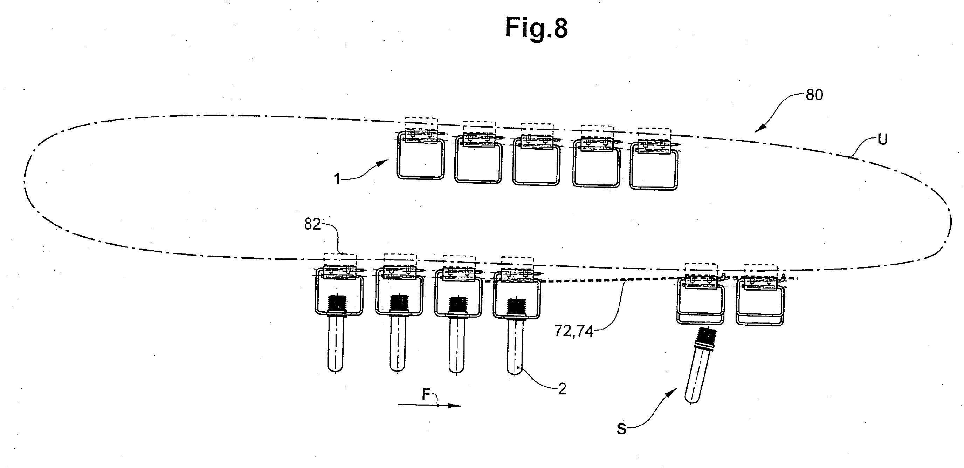

Fig. 8 zeigt eine erfindungsgemässe Förderanlage 80 mit einem Antriebsorgan 82, hier einer Kette, die entlang einer geschlossenen Umlaufbahn U bewegbar ist. Eine Mehrzahl von Greifern 1 sind an das Antriebsorgan 82 angekoppelt. Es sind ausserdem Schaltmittel 72, 74 vorhanden, die mit den Steuerelementen 25, 35 so zusammenwirken, dass die Greifer 1 an einer Öffnungsstelle S geöffnet werden. Durch Betätigung der ersten Steuerelemente 25 werden die in Förderrichtung F rechten Greiferbacken 20 geöffnet und durch Betätigung der zweiten Steuerelemente 35 die linken Greiferbacken 30. Die Schaltmittel 72, 74 sind vorzugsweise schaltbar, so dass wahlweise die eine oder die andere oder beide aktiviert werden können, um den Gegenstand 2 wie in Fig. 7a+b gezeigt an unterschiedliche Verarbeitungswege abzugeben.

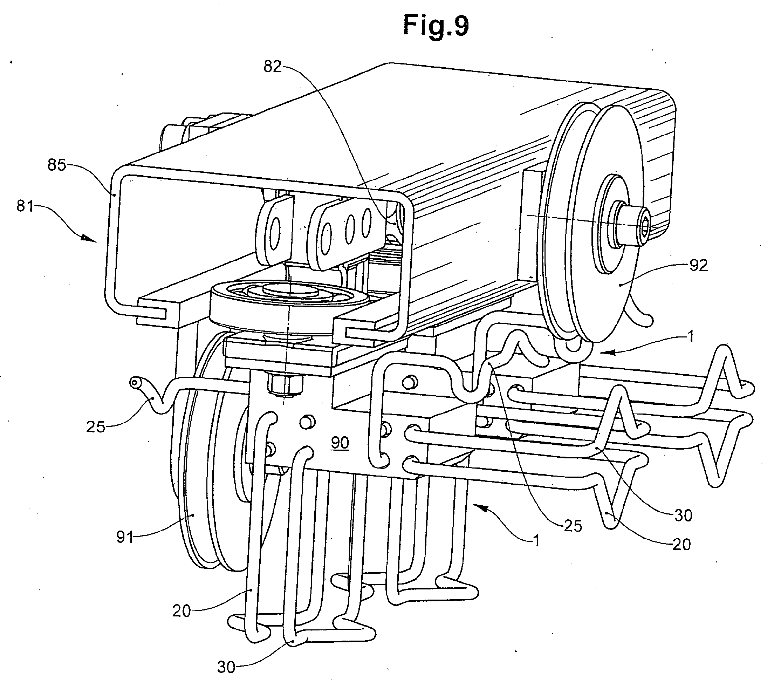

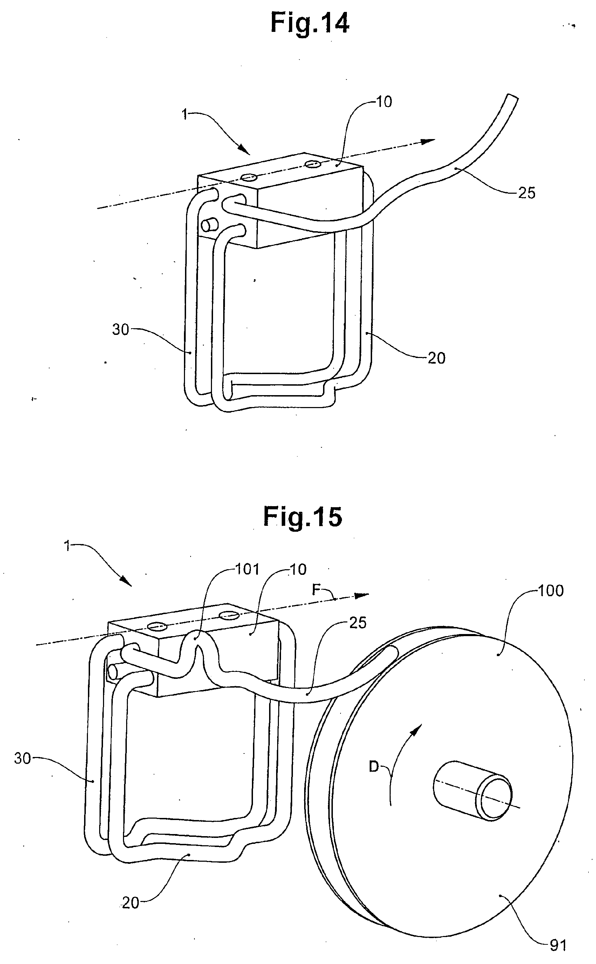

Figuren 9 bis 11 zeigen Ausführungsformen mit Steuerelementen mit funktionaler Kontur. Die Funktionsweise solcher funktionalen Konturen wird in der Beschreibung der Fig. 14 und folgenden erläutert.

Fig. 9 zeigt in perspektivischer Ansicht einen Ausschnitt einer Förderanlage 81, welche Greifer 1 mit zwei Greiferbackenpaaren umfasst. In Fig. 9 sind zwei Greifer 1 abgebildet, welche am Antriebsorgan 82 befestigt sind. Das Antriebsorgan 82 ist eine Kette und bewegt sich innerhalb eines Kanals, welcher hier als Führungskanal 85 ausgebildet ist. Die Kette 82 umfasst mehrere Kettenglieder, von denen beispielsweise jedes oder jedes zweite als Träger für den Greifer 1 dient. Ein Greifer 1 weist dabei einen L-förmigen Greiferkörper 90 mit einem langen und einem senkrecht dazu stehenden kurzen Schenkel auf. Eine Stirnseite des kurzen Schenkels des L-förmigen Greiferkörpers 90 ist am Antriebsorgan 82 befestigt.

Auf einer der Stirnseite des kurzen Schenkels des Greiferkörpers 90 gegenüberliegende Stelle des Greiferkörpers 90 ist ein erstes Greiferbackenpaar angeordnet. Das erste Greiferbackenpaar setzt sich aus einer ersten Greiferbacke 20 und einer zweiten Greiferbacke 30 zusammen. Die Greiferbacken 20, 30 sind baugleich mit den Greiferbacken des Greifers 1 in Fig. 1 und sind auf dieselbe Weise mit Greiferkörper 90 verbunden (d.h. in Aussparungen des Greiferkörpers 90 gelagert). Die erste Greiferbacke 20 weist einen Betätigungsabschnitt 25 mit einer funktionalen Kontur auf. Im in Fig. 9 gezeigten geschlossenen Zustand erstreckt sich oder weist das erste Greiferbackenpaar in Richtung einer Längsachse des kurzen Schenkels des Greiferkörpers 90. Mit anderen Worten weist beispielsweise eine Längsachse eines vom ersten Greiferbackenpaar ergriffenen Gegenstandes 2 in Richtung der Längsachse des kurzen Schenkels des Greiferkörpers 90.

Auf einer Stirnseite des langen Schenkels des Greiferkörpers 90 ist ein zweites Greiferbackenpaar angeordnet. Das zweite Greiferbackenpaar ist baugleich mit dem ersten Greiferbackenpaar und setzt sich ebenfalls aus einer ersten Greiferbacke 20 und einer zweiten Greiferbacke 30 zusammen. Auch hier weist die erste Greiferbacke 20 einen Betätigungsabschnitt 25 mit einer funktionalen Kontur auf. Im in Fig. 9 gezeigten geschlossenen Zustand erstreckt sich oder weist das zweite Greiferbackenpaar in Richtung einer Längsachse des langen Schenkels des Greiferkörpers 90. Mit anderen Worten weist eine Längsachse eines vom zweiten Greiferbackenpaar ergriffenen Gegenstandes 2 in Richtung der Längsachse des langen Schenkels des Greiferkörpers 90. Somit steht das zweite Greiferbackenpaar in geschlossenem Zustand senkrecht zum ersten Greiferbackenpaar.

Ein erstes Schaltmittel 91 und ein zweites Schaltmittel 92 sind beispielsweise am Führungskanal 85 der Förderanlage 81 befestigt. Fig. 9 zeigt die Förderanlage 81 an einer Öffnungsstelle S, da die Greifer 1 durch die Schaltmittel 91, 92 geöffnet werden können. Das erste Schaltmittel 91 ist derart angeordnet, dass es mit dem Betätigungsabschnitt 25 des ersten Greiferbackenpaares zusammenwirken kann. Das zweite Schaltmittel 92 ist derart angeordnet, dass es mit dem Betätigungsabschnitt 25 des zweiten Greiferbackenpaares zusammenwirken kann. Das erste Schaltmittel 91 und das zweite Schaltmittel 92 sind beide baugleich und sind als drehgelagerte Scheiben ausgebildet, deren radial aussenliegende Seite (also die Umfangseite der Scheiben) gegebenenfalls mit den Betätigungsabschnitten 25 zusammenwirkt.

In Fig. 9 sind das erste und zweite Schaltmittel 91 resp. 92 derart in einer Auslöseposition am Führungskanal 85 befestigt, dass sie bei einer Bewegung des Antriebsorgans 82 durch diesen Führungskanal 85 immer mit allen entsprechenden vorbeibewegten Betätigungsabschnitten 25 zusammenwirken. Das heisst, die Schaltmittel 91, 92 wirken mit allen entsprechenden Betätigungsabschnitten 25 zusammen, welche an diesem Antriebsorgan 82 befestigten Greifern 1 vorliegen, wenn diese entsprechenden Befestigungsabschnitte 25 durch die Bewegung dieses Antriebsorgans 82 bedingt an den Schaltmitteln 91 resp. 92 vorbeibewegt werden.

Mit "entsprechenden Betätigungsabschnitten 25" ist gemeint, dass in Fig. 9 jedes Schaltmittel 91, 92 derart ausgebildet und/oder angeordnet ist, dass diese Schaltmittel 91, 92 jeweils nur mit einer bestimmten Auswahl von Betätigungsabschnitten 25 (also so genannten "entsprechenden Betätigungsabschnitten 25") zusammenwirken. Dies ist im vorliegenden Beispiel in Fig. 9 durch eine getrennte räumliche Anordnung der Betätigungsabschnitte 25 des ersten und des zweiten Greiferbackenpaares und die getrennte Anordnung des ersten Schaltmittels 91 und des zweiten Schaltmittels 92 realisiert.

Alternativ können die Schaltmittel 91, 92 auch derart am Führungskanal 85 befestigt werden, dass die Schaltmittel die oben beschriebene Auslöseposition nur zeitweise einnehmen und zeitweise eine Nichtauslöseposition einnehmen, in welcher die Schaltmittel 91, 92 nicht mit vorbeibewegten entsprechenden Betätigungsabschnitten 25 zusammenwirken. Auf diese Weise kann ein Zusammenwirken der Schaltmittel 91, 92 mit den vorbeibewegten entsprechenden Betätigungsabschnitten 25 ein- und ausgeschaltet werden. Die Schaltmittel 91, 92 können beispielsweise durch eine Steuereinrichtung aktiviert und deaktiviert werden.

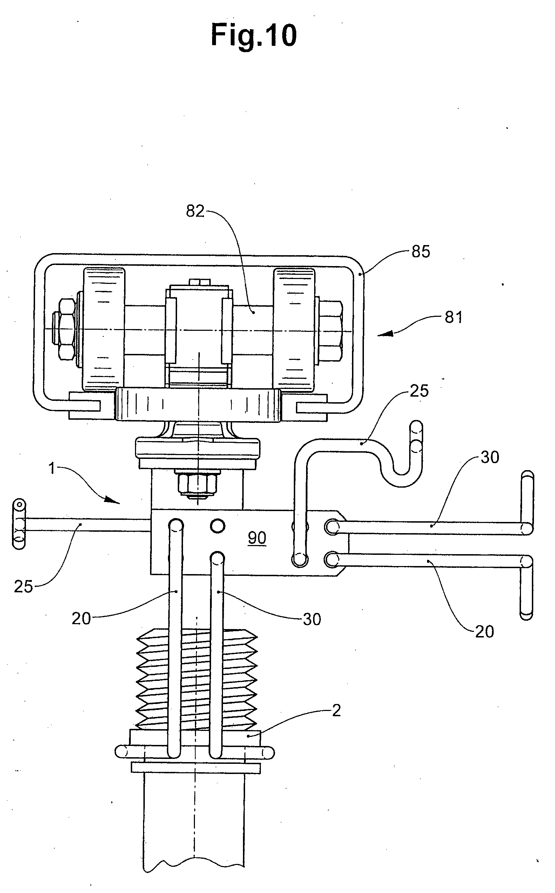

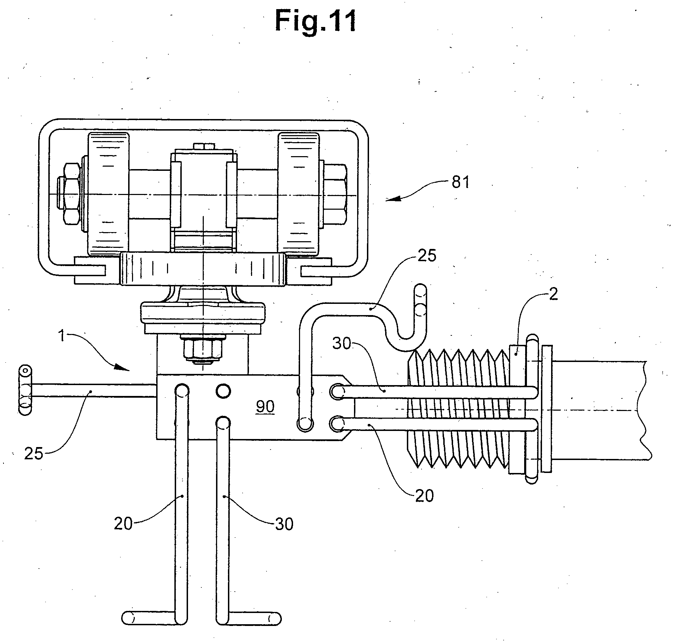

Fig. 10 und Fig. 11 zeigen beide einen Querschnitt durch die bereits in Fig. 9 gezeigte Förderanlage 81. In Fig. 10 ist ein erster Querschnitt gezeigt, in welchem ein Gegenstand 2 vom ersten Greiferbackenpaar des Greifers 1 ergriffen ist. Die Längsachse des vom ersten Greiferbackenpaar ergriffenen Gegenstands 2 zeigt in Richtung der Längsachse des kurzen Schenkels des Greiferkörpers 90. Die Längsachse des vom ersten Greiferbackenpaar ergriffenen Gegenstands 2 steht dabei senkrecht zur Richtung der Längsachse des langen Schenkels des Greiferkörpers 90.

In Fig. 11 ist ein zweiter Querschnitt gezeigt, in welchem ein Gegenstand 2 vom zweiten Greiferbackenpaar ergriffen ist. Die Längsachse des vom zweiten Greiferbackenpaar des Greifers 1 ergriffenen Gegenstands 2 zeigt in Richtung der Längsachse des langen Schenkels des Greiferkörpers 90. Die Längsachse des vom zweiten Greiferbackenpaar ergriffenen Gegenstands 2 steht dabei senkrecht zur Richtung der Längsachse des kurzen Schenkels des Greiferkörpers 90. Somit steht die Längsachse des vom zweiten Greiferbackenpaar ergriffenen Gegenstands 2 senkrecht zur Richtung der Längsachse eines vom ersten Greiferbackenpaar ergriffenen Gegenstandes 2.

In den gezeigten Ausführungsformen erstreckt sich die Längsachse eines ergriffenen Gegenstandes 2 jeweils in dieselbe Richtung, in welche sich jeweils die Greiferbacken erstrecken, respektive parallel zu dieser Richtung. Die Aussagen über die Richtung bezüglich der Längsachse eines ergriffenen Gegenstandes 2 gelten also auch bezüglich der Richtungen, in welche sich die Greiferbacken erstrecken.

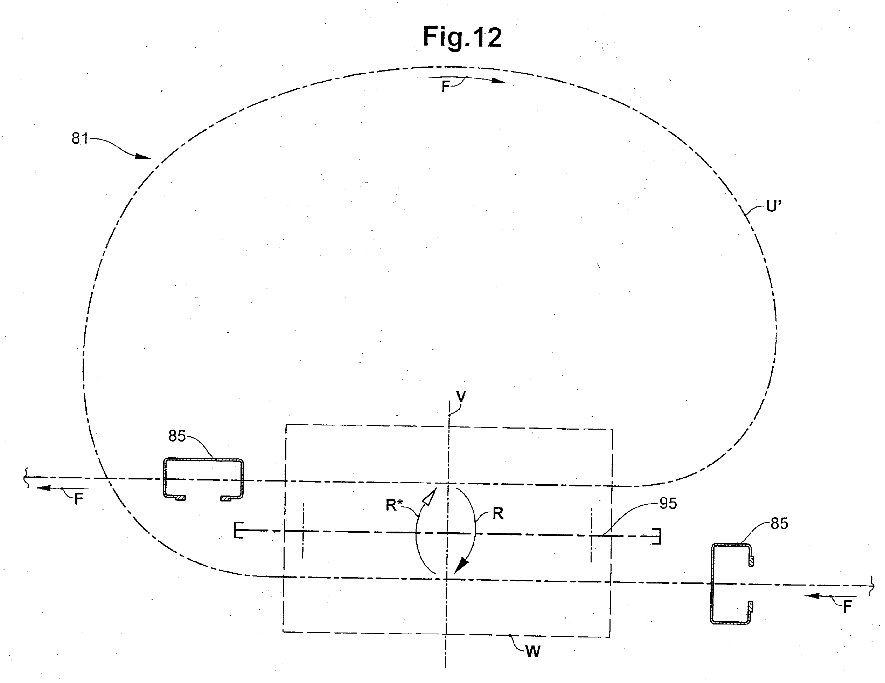

Fig. 12 zeigt einen Teil der Umlaufbahn U' der Förderanlage 81 aus Fig. 9 in Draufsicht. Die Förderrichtung F ist eingezeichnet und verläuft von Rechts nach Links mit einer entsprechend entgegen gesetzten Förderrichtung F im Bereich einer Schlaufe in der Umlaufbahn U'. Der Führungskanal 85 (und damit auch das Antriebsorgan 82 und die daran befestigten Greifer 1) dreht sich im Verlauf der Schleife der Umlaufbahn U' um 90 Grad um eine Drehachse, welche parallel zur Förderrichtung F steht. Ein Bereich der Umlaufbahn U' nach Beginn der Schlaufe und ein Bereich der Umlaufbahn U' vor Ende der Schlaufe verlaufen parallel zueinander. Diese Bereiche definieren eine Überführungszone W. In der Überführungszone W ist zwischen den parallel verlaufenden Bereichen der Umlaufbahn U' und parallel dazu ein Rundlauf 95 angeordnet.

Wie in Fig. 12 schematisch durch die Orientierung der gezeichneten Querschnitte der Kanäle 85 dargestellt, tritt der Greifer 1 in Förderrichtung F vom rechten Rand der Fig. 12 zum ersten Mal (für einen ersten Durchlauf) in die Überführungszone W ein, wenn das erste Greiferpaar des Greifers 1 in der Zeichnungsebene der Fig. 12 liegt. In Förderrichtung hinter der Schlaufe der Umlaufbahn U' liegend tritt der Greifer 1 in Förderrichtung F vom rechten Rand der Fig. 12 zum zweiten Mal (für einen zweiten Durchlauf) in die Überführungszone W ein. Die Orientierung des Greifers 1 bleibt beim Durchqueren bzw. Durchlaufen der Überführungszone sowohl beim ersten Durchlauf als auch beim zweiten Durchlauf unverändert.

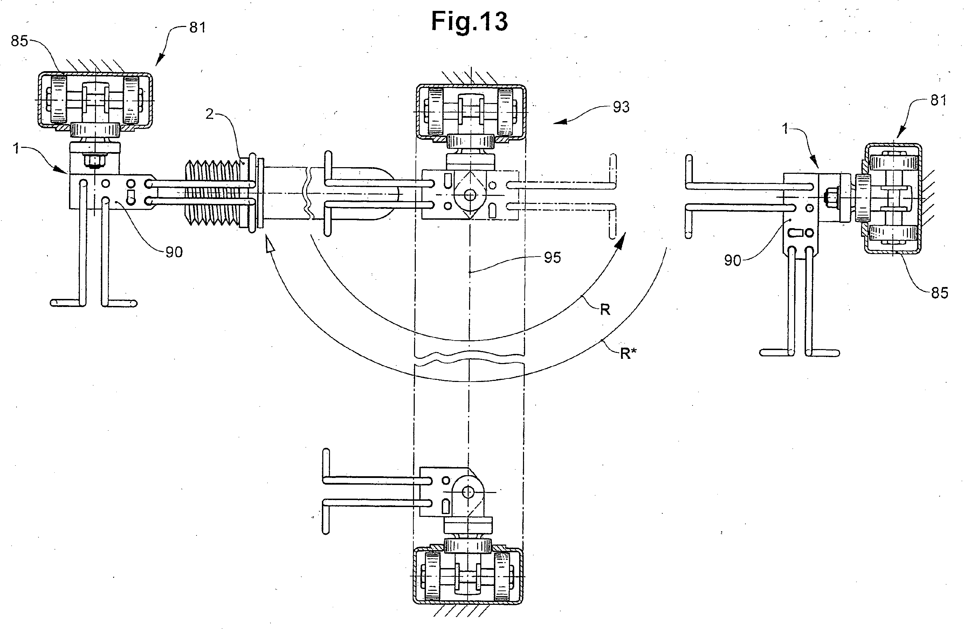

In der Überführungszone W wird ein von einem zweiten Greiferbackenpaar eines Greifers 1 ergriffener Gegenstand 2 in ein erstes Greiferbackenpaar eines anderen Greifers 1 überführt. Das Überführen des Gegenstandes 2 kann beispielsweise durch einen Überführungsmechanismus 93 in einer Überführungsrichtung R (dargestellt durch einen Pfeil mit leerer Spitze) erfolgen, wie zur einfacheren Darstellung nicht in Fig. 12, sondern in Fig. 13 in einem Querschnitt durch die in Fig. 12 eingezeichnete Schnittebene V gezeigt.

Wird ein Gegenstand 2 von einem Greifer 1 durch das zweite Greiferbackenpaar ergriffen und entlang der Umlaufbahn U' in Förderrichtung F gefördert, so durchläuft der Gegenstand die Überführungszone W ein erstes Mal. Dann durchläuft der Gegenstand 2 die Schlaufe der Umlaufbahn U' auch zum ersten Mal. Daraufhin durchläuft der Gegenstand 2 die Überführungszone W zum zweiten Mal und wird bei diesem zweiten Durchlauf der Überführungszone W vom zweiten Greiferbackenpaar des Greifers 1 in Überführungsrichtung R in ein erstes Greiferbackenpaar eines weiteren Greifers 1 überführt, wobei dieser weitere Greifer 1 zum ersten Mal die Überführungszone W durchläuft. Der nun vom ersten Greiferbackenpaar des weiteren Greifers 1 ergriffene Gegenstand durchläuft die Schlaufe der Umlaufbahn U' nun zum zweiten Mal und durchläuft schlussendlich die Überführungszone W ein drittes Mal, ohne dabei aber wieder in einen anderen Greifer 1 überführt zu werden.

Auf diese Weise durchläuft ein von der Förderanlage 81 geförderter Gegenstand 2 die Schlaufe der Umlaufbahn U' zweimal, während die Greifer 1 die Schlaufe nur einmal durchlaufen. Der Gegenstand 2 legt den doppelten Weg der Schlaufe in der Umlaufbahn U' zurück. Dies kann sehr vorteilhaft dazu benutzt werden, um etwa Förderanlagen zu verkürzen oder zu vereinfachen. Dies spart Kosten, Raum und Zeit (etwa bei der Wartung, Umrüstung und/oder Reinigung). Die Schlaufe kann dabei eine beliebige Gestalt oder Ausformung annehmen. Auch die Länge der Schlaufe kann variiert werden.

Beispielsweise kann durch das Überführen des geförderten Gegenstandes 2 eine Kühlstrecke in einer nur halb so langen Schlaufe ausgebildet werden (also in einer Schlaufe mit halber Wegstrecke im Vergleich mit einer Schlaufe ohne Überführen), ohne dass bei gleicher Fördergeschwindigkeit die Kühldauer hierbei verkürzt wird. Beispielsweise kann aber auch eine Reinigungsanlage zweimal durchlaufen werden, um den Reinigungsprozess zweimal anzuwenden, ohne allerdings zwei Reinigungsanlagen, sondern nur eine Reinigungsanlage dafür zu benötigen. Dasselbe gilt auch für alle anderen Prozesse und Anwendungen, welche mehrfach auf den Gegenstand 2 anzuwenden sind, beispielsweise etwa Bestrahlung mit sichtbarem Licht, UV-Licht, elektromagnetischen Strahlen anderer Wellenlänge und anderer ionisierender und/oder nichtionisierender Strahlung. Auch beispielsweise eine wiederholte Erwärmung und/oder Abkühlung oder eine wiederholte Beschichtung, Bemalung, und/oder Lackierung kann durch die Förderanlagen 81 vorteilhaft durchgeführt werden.

Alternativ kann die Umlaufbahn U' in einer der eingezeichneten Förderrichtung F entgegen gesetzten Richtung durchlaufen werden. Alternativ kann das Überführen auch in einer der Überführungsrichtung R entgegen gesetzten Überführungsrichtung R* erfolgen (in den Figuren mit einem Pfeil mit ausgefüllter Spitze bezeichnet). Durch ein Fördern entgegen der Förderrichtung F oder durch ein Überführen in Überführungsrichtung R* wird ein von einem zweiten Greiferbackenpaar eines Greifers 1 ergriffener Gegenstand 2 bereits beim ersten Durchlauf der Überführungszone W in ein erstes Greiferbackenpaar eines weiteren Greifers 1 überführt. Da dieser weitere Greifer 1 bereits die Schlaufe der Umlaufbahn U' durchlaufen hat, durchläuft der von ihm ergriffene Gegenstand 2 die Schlaufe überhaupt nicht. Die Schlaufe der Umlaufbahn U' wird also von Gegenstand 2 übersprungen oder mit anderen Worten übergangen oder überbrückt. Dies kann beispielsweise einem Umgreifen bzw. Umpositionieren des Gegenstandes 2 relativ zu den Greifern 1 der Förderanlage 81 dienen. So kann beispielsweise ein Gegenstand 2 horizontal ausgerichtet von einem Greifer 1 ergriffen, an einen weiteren (gedrehten) Greifer 1 übergeben und nach einem Zurückdrehen des weiteren Greifers 1 vertikal ausgerichtet weitergefördert werden.

Optional kann der Überführungsmechanismus 93 derart ausgebildet sein, dass er Gegenstände 2 sowohl in Überführungsrichtung R als auch der dazu entgegen gesetzten Überführungsrichtung R* überführen kann.

Ein Überführungsmechanismus 93 stellt bezüglich des Stromes der geförderten Gegenstände 2 eine Weiche dar, welche es je nach Ausbildung und Überführungsrichtung R bzw. R* erlaubt, dass geförderte Gegenstände 2 bei einem einmaligen Durchlaufen der geschlossenen Umlaufbahn der Förderanlage gewisse Teile oder Abschnitte dieser geschlossenen Umlaufbahn der Förderanlage auslassen bzw. überspringen oder diese Teile oder Abschnitte doppelt bzw. noch häufiger durchlaufen oder diese Teile oder Abschnitt der Umlaufbahn genau nur einmal durchlaufen (wobei im letzten Fall der Überführungsmechanismus 93 den Gegenstand 2 beispielsweise nicht überführt).

Optional können auch mehrere Überführungsmechanismen 93 in einer Überführungszone W angeordnet sein. Geförderte Gegenstände 2 können beispielsweise gewisse Teile oder Abschnitte einer geschlossenen Umlaufbahn der Förderanlage auch drei Mal oder mehr durchlaufen, indem sie in der Überführungszone W zwei Mal oder mehr überführt werden.

Fig. 13 zeigt einen Querschnitt durch die Umlaufbahn U' der Förderanlage 81 aus Fig. 12. Der Querschnitt verläuft dabei in der Überführungszone W entlang der in Fig. 12 eingezeichneten Schnittebene V-V. Fig. 13 zeigt den Überführungs-mechanismus 93. Der Überführungsmechanismus 93 umfasst einen Rundlauf 95 und entlang dem Rundlauf 95 bewegte Überführungselemente 94. Die Überführungselemente 94 bewegen sich während des Überfülurens entlang des Rundlauf 95 mit derselben Geschwindigkeit in derselben Richtung wie die Greifer 1 entlang der geschlossenen Umlaufbahn U'. Ein Überführungselement 94 ergreift auf der linken Seite der Fig. 13 einen Gegenstand 2, welcher zuerst von einem zweiten Greiferbackenpaar eines Greifers 1 ergriffen ist. Danach gibt dieser Greifer 1 den Gegenstand 2 ab, und das Überführungselement 94 bzw. der Überführungsmechanismus 93 schwenkt den Gegenstand 2 in Überführungsrichtung R zu einem weiteren Greifer 1. Dieser weitere Greifer 1 ergreift den Gegenstand 2 mit seinem ersten Greiferbackenpaar. Je nachdem, wie die Anlage betrieben wird, kann das auf der linken Seite auch das erste Greiferbackenpaar einen weiteren Gegenstand 2 halten, oder auf der rechten Seite auch das zweite Greiferbackenpaar einen weiteren Gegenstand 2 halten (nicht eingezeichnet).

Die Position eines ergriffenen Gegenstandes 2 bezüglich des Greifers 1 kann beispielsweise auch für eine spezifische Bearbeitung und insbesondere für bestimmte Bearbeitungsstationen wichtig sein. Dies ist etwa bei verschiedenen Orientierungen bei verschiedenen Herstellungs- und/oder Bearbeitungsschritten der Fall, beispielsweise bei einer Herstellung in vertikaler Lage und einer Bearbeitung in horizontaler Lage. Durch ein Überführen des ergriffenen Gegenstandes 2 von einem Greifer 1 in einen weiteren Greifer 1 derselben Umlaufbahn, wobei der ergriffene Gegenstand 2 seine Position bezüglich des jeweiligen Greifers 1 ändert, kann beispielsweise ein Zugriff auf den geförderten Gegenstand 2 oder eine Bearbeitung desselben erleichtert oder sogar erst ermöglicht werden.

Fig. 14 zeigt als Ausfühmngsform zur mindestens teilweisen Lösung der Aufgabe gemäss einem ersten Aspekt einen Greifer 1 mit einem Steuerelement 25, welches eine funktionale Kontur aufweist. Der Greifer 1 weist nur ein Steuerelement 25 auf. Das Steuerelement 25 lenkt die Greiferbacke 20 aus. Die andere Greiferbacke 30 wird durch kein Steuerelement ausgelenkt.

Fig. 15 zeigt einen weiteren Greifer 1 mit nur einem Steuerelement 25. Auch dieses Steuerelement 25 weist eine funktionale Kontur auf. Zudem ist in Fig. 15 ein Schaltmittel 91 gezeigt, welche mit dem Steuerelement 25 zusammenwirkt, wenn der Greifer 1 in Förderrichtung F bewegt wird. Das Schaltmittel 91 ist als frei drehbar gelagertes Rad ausgebildet. Das Schaltmittel 91 dreht sich während des Zusammenwirkens mit dem Steuerelement 25 in Drehrichtung D. Das Steuerelement 25 dreht das Schaltmittel 91 bei Berührung während des Zusammenwirkens in Drehrichtung D. Das Schaltmittel 91 ist nicht angetrieben und ist frei drehbar. Auf einer Umfangseite des Schaltmittels 91 ist eine Nut 100 ausgebildet. Die Nut 100 weist einen halbkreisförmigen, konkaven Querschnitt auf. Die Nut 100 dient einer sicheren Aufnahme und Führung des Steuerelements 25 während dessen Zusammenwirkens mit dem Schaltmittel 91.

Damit das Schaltmittel 91 nur mit einer funktionalen Kontur des Steuerelements 25 zusammenwirkt, ist am Steuerelement 25 eine Nase 101 ausgebildet. Die Nase 101 ist derart ausgebildet, dass die funktionale Kontur des Steuerelements 25 innerhalb der Nut 100 mit dem Schaltmittel 91 zusammenwirken kann, ohne dass beim Vorbeifördern des Steuerelements 25 am Schaltmittel 91 andere Teile des Steuerelements 25 als die funktionale Kontur das Schaltmittel 91 berühren. Die Nase 101 verläuft in Förderrichtung F betrachtet, beispielsweise bei Projektion in eine Ebene normal zur Förderrichtung F, um das Schaltmittel 91 herum. Die Nase 101 ist auf dem Steuerelement 25 zwischen der funktionalen Kontur des Steuerelements 25 und dem Greiferkörper 10 angeordnet.

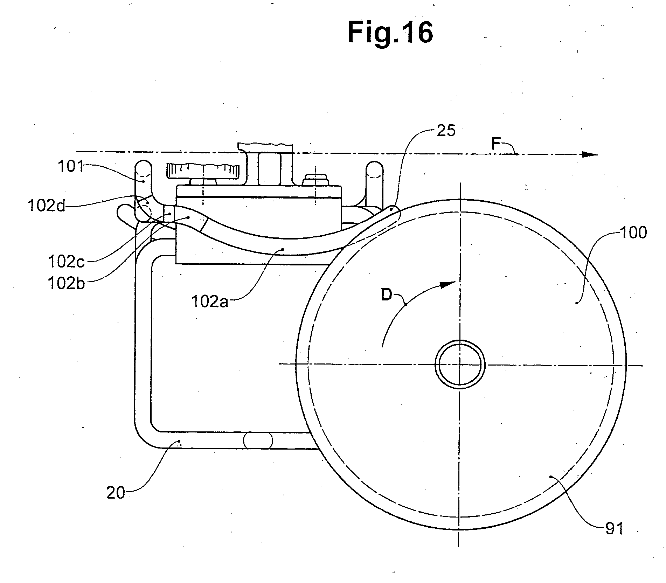

Fig. 16 zeigt denselben Greifer und dasselbe Schaltmittel wie in Fig. 15, aber in Seitenansicht dargestellt. In der Seitenansicht ist die funktionale Kontur des Steuerelements 25 klar zu erkennen. Die funktionale Kontur des Steuerelements 25 weist vier Kontursegmente 102a-102d auf. Die vier verschiedenen Kontursegmente 102a-102d unterscheiden sich durch Krümmungsradius und/oder Krümmungsrichtung voneinander.

Das erste Kontursegment 102a befindet sich an einem vom Greiferkörper 10 entfernten, freien Ende des Steuerelements 25 und weist eine gleichmässige Krümmung in entgegen gesetzter Richtung zu einer Krümmung des Schaltmittels 91 auf. Die Krümmung des ersten Kontursegments 102a weist beispielhaft etwa einen gleichen Krümmungsradius wie die Umfangseite des Schaltmittel 91 auf. Das erste Kontursegment 102a bewirkt beim Zusammenwirken des Steuerelements 25 mit dem Schaltmittel 91 eine Auslenkung der Greiferbacke 20 mit gleichmässig zunehmender Geschwindigkeit in Richtung ihres offenen Zustandes, also eine sanft beschleunigende Öffnungsbewegung der Greiferbacke 20.

Das zweite Kontursegment 102b schliesst direkt an das erste Kontursegment 102a an. Das zweite Kontursegment 102b weist eine Krümmung entgegen der Krümmung des ersten Kontursegments 102a, hier also in der Krümmungsrichtung des Schaltmittels 91, auf. Ein Krümmungsradius des zweiten Kontursegments 102b ist drei Mal kleiner als der Krümmungsradius des ersten Kontursegments 102a. Das zweite Kontursegment 102b bewirkt beim Zusammenwirken des Steuerelements 25 mit dem Schaltmittel 91 eine Auslenkung der Greiferbacke 20 mit gleichmässig abnehmender Geschwindigkeit in Richtung ihres offenen Zustandes, also eine sanft abbremsende Öffnungsbewegung der Greiferbacke 20.

Das dritte Kontursegment 102c schliesst in Richtung Greiferkörper 10 direkt an das zweite Kontursegment 102b an. Das dritte Kontursegment 102c ist gerade ausgebildet. Das dritte Kontursegment 102c bewirkt beim Zusammenwirken des Steuerelements 25 mit dem Schaltmittel 91 eine Auslenkung der Greiferbacke 20 mit gleich bleibender Geschwindigkeit in Richtung ihres offenen Zustandes, also eine Öffnungsbewegung der Greiferbacke 20 mit konstanter Geschwindigkeit.

Das vierte Kontursegment 102d schliesst in Richtung Greiferkörper 10 direkt an das dritte Kontursegment 102c an. Das vierte Kontursegment 102d weist wie das zweite Kontursegment 102b eine Krümmung in der Krümmungsrichtung des Schaltmittels 91 auf. Ein Krümmungsradius des vierten Kontursegments 102d ist vier Mal kleiner als der Krümmungsradius des ersten Kontursegments 102a. Das vierte Kontursegment 102d bewirkt beim Zusammenwirken des Steuerelements 25 mit dem Schaltmittel 91 eine Auslenkung der Greiferbacke 20 mit gleichmässig abnehmender Geschwindigkeit in Richtung ihrer geschlossenen Zustandes, also eine sanft abbremsende Schliessbewegung der Greiferbacke 20.

Die Krümmungsradien der Kontursegmente 102a-102d weisen je nach Anforderung und erwünschter Auslenkung der Greiferbacke 20 verschiedene Werte auf. So kann beispielsweise der Krümmungsradius des ersten Kontursegments 102a in einem Bereich von 5mm bis 100mm liegen, insbesondere in einem Bereich von 10mm bis 70mm und insbesondere in einem Bereich von 15mm bis 50mm. Das erste Kontursegment 102a kann aber auch gerade ausgebildet sein.

Der Krümmungsradius des zweiten Kontursegments 102b kann in einem Bereich von 5mm bis 100mm liegen, insbesondere in einem Bereich von 10mm bis 70mm und insbesondere in einem Bereich von 15mm bis 50mm. Das zweite Kontursegment 102b kann aber auch gerade ausgebildet sein.

Der Krümmungsradius des vierten Kontursegments 102d kann in einem Bereich von 5mm bis 100mm liegen, insbesondere in einem Bereich von 10mm bis 70mm und insbesondere in einem Bereich von 15mm bis 50mm. Das vierte Kontursegment 102d kann aber auch gerade ausgebildet sein.

Aber auch das dritte Kontursegment 102c kann eine Krümmung aufweisen. Dabei kann der Krümmungsradius des dritten Kontursegments 102c in einem Bereich von 5mm bis 100mm liegen, insbesondere in einem Bereich von 10mm bis 70mm und insbesondere in einem Bereich von 15mm bis 50mm.

In Richtung Greiferkörper 10 anschliessend an das vierte Kontursegment 102d ist die Nase 101 angeordnet. Die funktionale Kontur des Steuerelements 25 befindet sich am vom Greiferkörper 10 entfernten, freien Ende des Steuerelements 25. Die funktionale Kontur des Steuerelements 25 ist in Förderrichtung F vorlaufend angeordnet. Mit anderen Worten ist die funktionale Kontur des Steuerelements 25 bei Bewegung in Förderrichtung F vorlaufend bezüglich einer Stelle, an welcher das Steuerelement 25 mit der Greiferbacke 20 verbunden ist. Die funktionale Kontur des Steuerelements 25 kann aber auch nachlaufend angeordnet sein. Die funktionale Kontur des Steuerelements 25 kann auch sowohl vor- als auch nachlaufend angeordnet respektive ausgebildet sein.

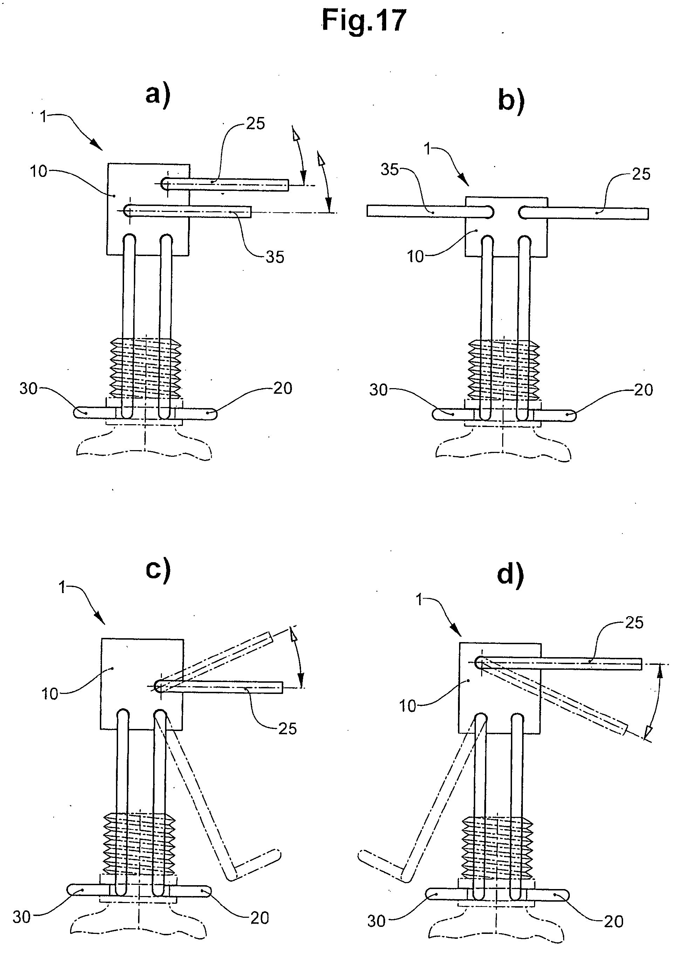

Fig. 17a-d zeigen Greifer 1 mit verschieden angeordneten Steuerelementen 25, 35. Richtungsangaben wie oben, unten, links und rechts beziehen sich auf die Zeichnungsebene der Figuren. In den Fig. 17a-d weist die nicht eingezeichnete Förderrichtung F senkrecht aus der Zeichnungsebene heraus. Fig. 17a zeigt einen Greifer 1, welcher auf derselben Seite des Greiferkörpers 10 ein erstes Steuerelement 25 und ein zweites Steuerelement 35 übereinander angeordnet aufweist. Das erste Steuerelement 25 ist oben und das das zweite Steuerelement 35 ist unten angeordnet, wobei das erste Steuerelement 25 relativ zum zweiten Steuerelement 35 leicht nach rechts verschöben ist.

Das erste Steuerelement 25 wirkt auf die rechts angeordnete erste Greiferbacke 20, und das zweite Steuerelement 35 wirkt auf die links angeordnete zweite Steuerbacke 30. Sowohl das erste Steuerelement 25 als auch das zweite Steuerelement 35 weisen in geschlossenem Zustand der Greiferbacken 20, 30 in dieselbe Richtung, genauer gesagt nach rechts, und werden beim Zusammenwirken mit einem Schaltmittel 91 zum Öffnen der Greiferbacken 20, 30 in dieselbe Richtung bewegt, hier im Gegenuhrzeigersinn gegen oben gedreht. Die erste Greiferbacke 20 dreht sich beim Öffnen im Gegenuhrzeigersinn nach rechts, und die zweite Greiferbacke 30 dreht sich beim Öffnen im Uhrzeigersinn nach links.

Fig. 17b zeigt einen Greifer 1, welcher auf derselben Seite des Greiferkörpers 10 ein erstes Steuerelement 25 und ein zweites Steuerelement 35 nebeneinander angeordnet aufweist. Ausser der Anordnung der beiden Steuerelemente 25, 35 ist der Greifer 1 in Fig. 17b gleich aufgebaut wie der Greifer in Fig. 17a. Das erste Steuerelement 25 wirkt wieder auf die erste Greiferbacke 20, und das zweite Steuerelement 35 wirkt auf die zweite Steuerbacke 30. Dabei weist das erste Steuerelement 25 in geschlossenem Zustand der Greiferbacke 20 in eine Richtung, welche der Richtung, in welche das zweite Steuerelement 35 in geschlossenem Zustand der Greiferbacke 30 weist, entgegen gesetzt ist. Das erste Steuerelement 25 zeigt hier nach rechts, das zweite Steuerelement 35 nach links.

Beim Zusammenwirken mit einem Schaltmittel 91 wird das erste Steuerelement 25 zum Öffnen der Greiferbacke 20 im Gegenuhrzeigersinn gegen oben gedreht. Beim Zusammenwirken mit einem Schaltmittel 91 wird das zweite Steuerelement 35 zum Öffnen der Greiferbacke 30 im Uhrzeigersinn gegen oben gedreht, also in eine andere Richtung gedreht als das erste Steuerelement 25. Die erste Greiferbacke 20 dreht sich beim Öffnen im Gegenuhrzeigersinn nach rechts, und die zweite Greiferbacke 30 dreht sich beim Öffnen im Uhrzeigersinn nach links.

Fig. 17c zeigt einen Greifer 1, welcher nur ein erstes Steuerelement 25 aufweist. Der Greifer 1 in Fig. 17c ist wie die Greifer 1 in den Fig. 17a und 17b aufgebaut, weist aber nur ein einziges, erstes Steuerelement 25 auf. Dabei weist das Steuerelement 25 in geschlossenem Zustand der Greiferbacke 20 nach rechts und wirkt mit der rechts angeordneten Greiferbacke 20 zusammen. Beim Zusammenwirken mit einem Schaltmittel 91 wird das erste Steuerelement 25 zum Öffnen der Greiferbacke 20 im Gegenuhrzeigersinn gegen oben gedreht. Die rechte Greiferbacke 20 dreht sich beim Öffnen im Gegenuhrzeigersinn nach rechts. Die linke Greiferbacke 30 wird durch kein Steuerelement ausgelenkt.

Fig. 17d zeigt einen Greifer 1, welcher ebenfalls nur ein einziges, allerdings das zweite Steuerelement 35 aufweist. Das zweite Steuerelement 35 wirkt auf die linke Greiferbacke 30. Dabei weist das zweite Steuerelement 35 in geschlossenem Zustand der Greiferbacke 30 nach rechts. Beim Zusammenwirken mit einem Schaltmittel 91 wird das Steuerelement 35 zum Öffnen der Greiferbacke 30 im Uhrzeigersinn nach unten gedreht. Die Greiferbacke 30 dreht sich beim Öffnen im Uhrzeigersinn nach links. Die rechte Greiferbacke 20 wird durch kein Steuerelement ausgelenkt.

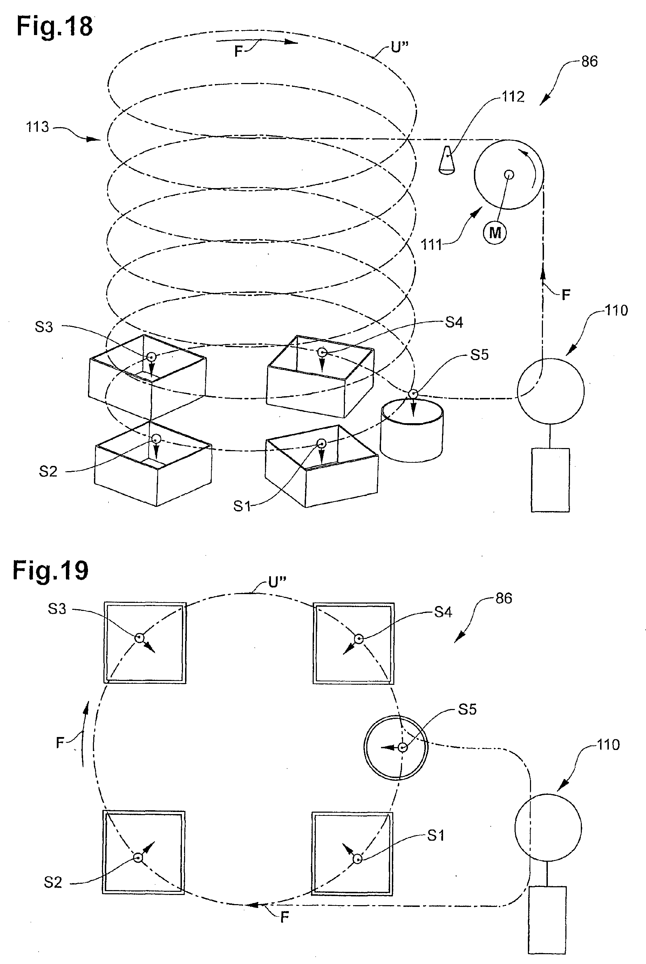

Fig. 18 zeigt als Ausführungsform zur mindestens teilweisen Lösung der Aufgabe gemäss einem zweiten Aspekt eine Förderanlage 86 mit fünf Öffnungsstellen S1-S5. Aus Gründen einer übersichtlicheren Darstellung sind die Greifer 1 und die Gegenstände 2 in Fig. 18 nicht eingezeichnet. Die Greifer 1 bewegen sich in Förderrichtung F einer geschlossenen Umlaufbahn, U" entlang. An einer Füllstation 110 ergreifen die Greifer 1 die Gegenstände 2. Die ergriffenen Gegenstände 2 passieren beim Fördern in Förderrichtung danach einerr Antrieb 111. Der Antrieb 111 weist einen Motor M auf und treibt das hier ebenfalls nicht gezeigte Antriebsorgan 82 an, an welches die Greifer 1 gekoppelt sind. In Förderrichtung F folgend passieren die Greifer 1 und die ergriffenen Gegenstände 2 danach ein Erfassungsgerät 112. Das Erfassungsgerät 112 umfasst einen Sensor, welcher Eigenschaften der an ihm vorbei geförderten Gegenstände 2 und/oder Greifer 1 misst. Das Erfassungsgerät 112 liefert der Förderanlage 86 Informationen bezüglich der Eigenschaften der Greifer 1 und/oder der geförderten Gegenstände 2.

In Förderrichtung F auf das Erfassungsgerät 112 folgend durchlaufen die ergriffenen Gegenstände 2 eine Kühlstrecke 113. Die Kühlstrecke 113 ist in Form einer Helix ausgebildet. Nach dem Durchlaufen der Kühlstrecke 113 in Förderrichtung F passieren die Greifer 1 hintereinander eine erste Öffnungsstelle S1, eine zweite Öffnungsstelle S2, eine dritte Öffnungsstelle S3, eine vierte Öffnungsstelle S4 und eine fünfte Öffnungsstelle S5. Alle Öffnungsstellen S1-S5 weisen hier nicht dargestelltes Schaltmittel 91 verschiedenen Typs auf. Die erste Öffnungsstelle S1 und die zweite Öffnungsstelle S2 weisen ein Schaltmittel 91 ersten Typs auf. Die dritte Öffnungsstelle S3 und die vierte Öffnungsstelle S4 weisen ein Schaltmittel 91 zweiten Typs auf. Die fünfte Öffnungsstelle S5 weist sowohl ein Schaltmittel 91 ersten Typs als auch ein Schaltmittel 91 zweiten Typs auf. Die Schaltmittel 91 der ersten vier Öffnungsstellen S1-S4 sind dabei durch eine Steuereinrichtung aktivierbar und deaktivierbar. Die Schaltmittel 91 der fünften Öffnungsstelle S5 sind steuereinrichtungsfrei ausgebildet, d.h. frei von Steuereinrichtungen ausgebildet. Die Schaltmittel 91 der fünften Öffnungsstelle S5 wirken also mit allen entsprechenden daran vorbei geförderten Steuerelementen 25 zusammen.

Die von den Greifern 1 ergriffenen Gegenstände 2 können nun an den Öffnungsstellen S1-S5 durch ein Öffnen der Greifer 1 freigegeben bzw. ausgeworfen werden. Dabei können an der ersten Öffnungsstelle S1, der zweiten Öffnungsstelle S2 und der fünften Öffnungsstelle S5 diejenigen Greifer 1 geöffnet werden, deren Steuerelemente mit Schaltmitteln 91 des ersten Typs zusammenwirken. An der dritten Öffnungsstelle S3, der vierten Öffnungsstelle S4 und der fünften Öffnungsstelle S5 können diejenigen Greifer 1 geöffnet werden, deren Steuerelemente mit Schaltmitteln 91 des zweiten Typs zusammenwirken.

Die fünfte Öffnungsstelle S5 dient als Auswurfstelle für Ausschuss. Ergriffene Gegenstände, deren Eigenschaften laut Informationen des Erfassungsgeräts 112 eine ungenügende Qualität aufweisen, werden an der fünften Öffnungsstelle S5 ausgeworfen. Dazu werden die Schaltmittel 91 entsprechenden Typs in den ersten vier Öffnungsstellen S1-S4 durch die Steuereinrichtung deaktiviert. Der ergriffene Gegenstand ungenügender Qualität erreicht also die fünfte Öffnungsstelle S5 und wird dort ausgeworfen, weil alle Greifer 1 an der fünften Öffnungsstelle S5 geöffnet werden. Die steuereinrichtungsfreie Ausbildung der Schaltmittel 91 an dieser Stelle verhindert auch, dass ergriffene Gegenstände 2 die Füllstation 110 passieren. Mit anderen Worten werden die Greifer 1 an der fünften Öffnungsstelle S5 auf jeden Fall geleert.

Wenn die ergriffenen Gegenstände 2 nicht als Ausschuss betrachtet werden, werden sie an einer der vier ersten Öffnungsstellen S1-S4 freigegeben bzw. ausgeworfen. Je nach Ausbildung der Greifer 1, welche die Gegenstände 2 ergreifen, werden die Gegenstände 2 an verschiedenen Öffnungsstellen S1-S5 ausgeworfen. Weist ein Greifer 1 ein Steuerelement 25 auf, welches mit Schaltmitteln 91 ersten Typs zusammenwirkt, dann wird ein Gegenstand 2 ausreichender Qualität an der ersten Öffnungsstelle S1 oder der zweite Öffnungsstelle S2 ausgeworfen. Weist ein Greifer 1 ein Steuerelement 25 auf, welches mit Schaltmitteln 91 zweiten Typs zusammenwirkt, dann wird ein Gegenstand 2 ausreichender Qualität an der dritten Öffnungsstelle S3 oder der vierten Öffnungsstelle 3 ausgeworfen.

Werden in der Füllstation 110 beispielsweise zwei verschiedene Sorten von Gegenständen 2 von den Greifern 1 ergriffen, dann werden vorteilhafterweise Gegenstände 2 einer ersten Sorte von Greifern 1 ergriffen, welche durch Schaltmittel 91 erster Art geöffnet werden, und Gegenstände 2 einer zweiten Sorte von Greifern 1 ergriffen, welche durch Schaltmittel 91 zweiter Art geöffnet werden. Auf diese Weise können Gegenstände 2 verschiedener Sorte sortiert werden. Gegenstände 2 erster Sorte werden an der ersten Öffnungsstelle S1 und der zweiten Öffnungsstelle S2 ausgeworfen, Gegenstände 2 zweiter Sorte an der dritten Öffnungsstelle S3 und der vierten Öffnungsstelle S4.

Typischerweise sind die Greifer 1 in einer vorbestimmten Reihenfolge am Antriebsorgan 82 angeordnet, abhängig davon, ob die Steuerelemente 25 der Greifer 1 mit Schaltmitteln 91 ersten oder zweiten Typs zusammenwirken. Beispielsweise sind Greifer 1 alternierend angeordnet, so dass die Steuerelemente 25 der Greifer 1 abwechselnd mit Schaltmitteln 91 erster oder zweiter Art zusammenwirken. In einem anderen Beispiel sind die Greifer 1 gruppenweise abwechselnd hintereinander derart angeordnet, dass eine erste Gruppe von Greifern 1 mit Schaltmitteln 91 erster Art zusammenwirkt, und die benachbarten Gruppen von Greifern 1 mit Schaltmittel 91 zweiter Art zusammenwirken. Durch diese Anordnung der Greifer 1 ist die Förderanlage 86 sozusagen fest programmiert. Die Förderanlage 86 weist in diesem Fall ein fest vorbestimmtes Muster auf, nach welchem vorgegeben ist, an welchen Öffnungsstellen S1-S5 welcher Greifer 1 geöffnet werden kann und an welchen nicht. Bei entsprechender Befüllung der Greifer 1 durch die Füllstation 110 können Gegenstände sortiert werden. Der Vorteil einer derart fest programmierten Förderanlage 86 besteht in tiefen Herstellungs- und Wartungskosten und einer einfachen Konstruktion und einfachen Funktionsweise.

Alternativ können auch alle Greifer 1 in der Lage sein, mit allen Schaltmitteln 91 zusammenzuwirken, und die geschalteten bzw. aktivierbaren und deaktivierbaren Schaltmittel 91 können jeweils ein gezieltes Öffnen jedes Greifers 1 erreichen. Ein Sortieren von Gegenständen 2 ist auf diese Weise auch problemlos möglich, bedingt aber eine kompliziertere Konstruktion und Funktionsweise der Förderanlage 86, was sich auch in höheren Wartungs- und Herstellungsaufwand und entsprechenden Kosten niederschlägt.

Beispielsweise können unter den Öffnungsstellen S1-S5 Behälter angeordnet sein, welche die ausgeworfenen Gegenstände 2 sammeln. Wenn ein Behälter unter der Öffnungsstelle S1 voll ist, kann das entsprechende Schaltmittel 91 deaktiviert werden, und der Behälter S2 kann bei aktiviertem entsprechenden Schaltmittel 91 befüllt werden und umgekehrt. Dasselbe gilt auch für die dritte Öffnungsstelle S3 und die vierte Öffnungsstelle S4.

Fig. 19 zeigt die Förderanlage 86 aus Fig. 18 von oben.

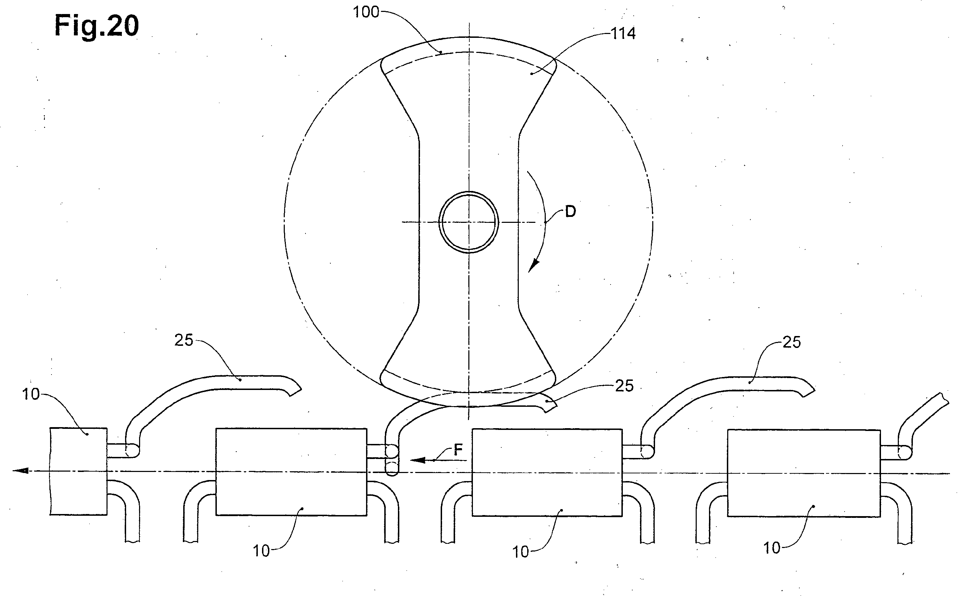

Fig. 20 zeigt ein Schaltmittel 114 mit Aussparungen. Das Schaltmittel 114 ist als drehbares Rad mit Aussparungen ausgebildet. Auf der Umfangseite des Rads ist eine Nut 100 mit halbkreisförmigem konkavem Querschnitt ausgebildet. Das Schaltmittel 114 dreht in Drehrichtung D mit einer derartigen Geschwindigkeit, dass die Nut 100 mit gleicher Geschwindigkeit bewegt wird wie an dem Schaltmittel 114 vorbei geförderte Greifer 1. Die Aussparungen der Schaltmittel 114 verlaufen von der Umfangseite des Rads in Richtung seiner Drehachse und sind derart dimensioniert und angeordnet, dass Steuerelemente 25 vorbei geförderten Greifern 1 berührungsfrei in den Aussparungen Platz finden.

In Fig. 20 sind zwei Aussparungen gezeigt, welche sich radial gegenüberliegen und je Platz für ein Steuerelement 25 bieten. Zwischen den beiden Aussparungen befinden sich zwei Nuten 100, wobei jede Nut 100 entlang der Umfangseite des Schaltmittels 114 ausreichend gross dimensioniert ist, um mit genau einem Steuerelement 25 zusammenzuwirken. Bei einer kompletten Umdrehung des Schaltmittels 114 in Drehrichtung D werden in Förderrichtung F vier Greifer 1 an dem Schaltmittel 114 vorbei gefördert, wobei das Schaltmittel 114 nur mit alternierend jedem zweiten Greifer 1 zusammenwirkt.

Verschiedene Grössen und Anordnungen der Aussparungen in den Schaltmitteln 114 können je nach Anforderungen an die Förderanlage 86 und je nach Anzahl von Typen von Schaltmitteln ausgebildet werden. Beispielsweise können Schaltmittel 114 ausgebildet werden, welche nur mit den Steuerelementen 25 jedes dritten vorbei geförderten Greifers 1 zusammenwirken. Oder beispielsweise etwa mit den Steuerelementen 25 jedes dritten vorbei geförderten Greifers 1 nicht zusammenwirken. Durch eine entsprechenden Anordnung und Grösse der Aussparungen lassen sich im Wesentlichen beliebige zeitliche Muster des Zusammenwirkens respektive Muster in der Abfolge des Zusammenwirkens erzeugen.

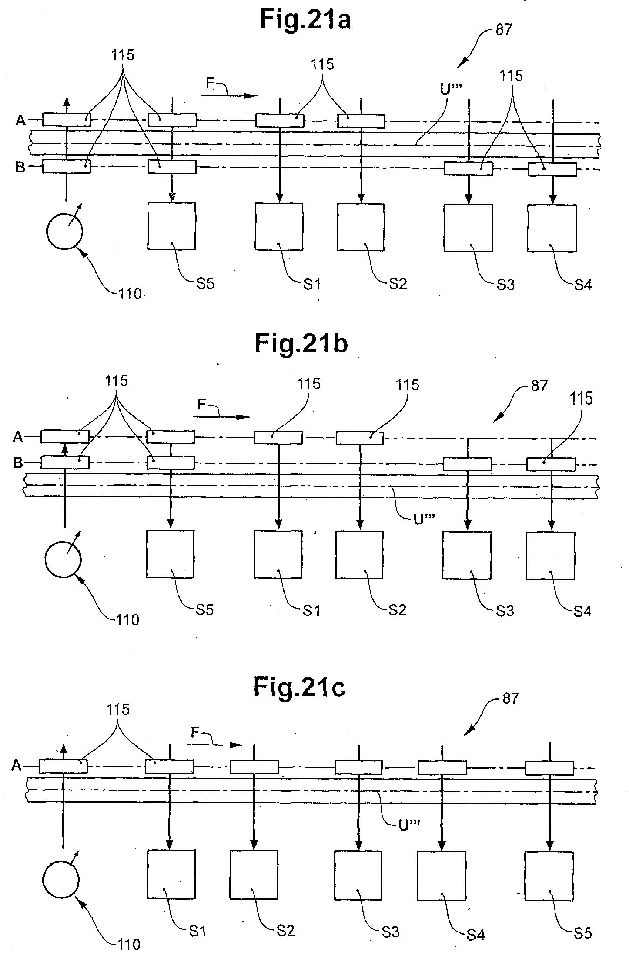

Fig. 21a-f zeigen schematisch dargestellte Anordnungen von Schaltmittel 115 entlang einer Umlaufbahn U'" einer Förderanlage 87. Dies sind alternative Anordnungen zu den oben beschriebenen Förderanlagen 80, 81, 86, welche aber nach Umständen mindestens teilweise auf diese Förderanlagen 80, 81, 86 übertragbar sind. Die Förderanlage 87 kann verschiedene Formen und Ausbildungen annehmen und ist hier nur schematisch und stark vereinfacht dargestellt, wobei auch nicht alle Komponenten gezeigt werden. Die Fig. 21a-f können auch als Ausschnitt einer Förderanlage 87 betrachtet werden, um grundlegende Funktionsweisen und prinzipielle Abläufe in Teilen der Förderanlage 87 darzustellen.

Für die Umlaufbahn U'" gilt ebenfalls, dass sie verschiedene Formen und Längen annehmen kann und dass in den Fig. 21a-f jeweils nur ein Ausschnitt gezeigt wird. Alternativ können die Fig. 21a-f auch als schematische Darstellung von eigenständigen und voll funktionstüchtigen Förderanlagen 87 betrachtet werden, welche keine weiteren Komponenten und Funktionen auf dieser schematischen Ebene aufweisen. Die Schaltmittel 115 können verschiedenartig ausgebildet sein, verschiedenen Typs sein und/oder durch Steuereinrichtungen aktivierbar und deaktivierbar oder steuereinrichtungsfrei sein.

Fig. 21a zeigt eine Förderanlage 87 mit einer Umlaufbahn U'" und acht Schaltmittel 115. Vier der Schaltmittel 115 sind ersten Typs und in der Zeichnungsebene der Figur 21a oberhalb der Umlaufbahn U'" auf einer Ebene A angeordnet. Die vier anderen Schaltmittel 115 sind zweiten Typs und in der Zeichnungsebene der Figur 21a unterhalb der Umlaufbahn U'" auf einer Ebene B angeordnet. Die Förderrichtung F verläuft von links nach rechts. Ganz links auf der Umlaufbahn U'" sind auf Höhe der Füllstation 110 Schaltmittel 115 auf beiden Ebenen A und B angeordnet, so dass ein daran vorbei geförderter Greifer 1 geöffnet wird, die Füllstation 110 den geöffneten Greifer 1 mit einem Gegenstand 2 bestücken kann und der Greifer 1 den Gegenstand 2 ergreift.

In Förderrichtung F auf die Füllstation 110 folgend wird der Greifer 1 an einer fünften Öffnungsstelle S5 vorbei gefördert, auf deren Höhe in der Umlaufbahn U"' ebenfalls Schaltmittel 115 auf beiden Ebenen A und B angeordnet sind. Diese Schaltmittel sind durch eine Steuereinrichtung aktivierbar und deaktivierbar. Auf diese Weise kann beispielsweise Ausschuss an der fünften Öffnungsstelle S5 gezielt ausgeworfen werden, beispielsweise aufgrund von Informationen eines hier nicht dargestellten Erfassungsgeräts 112. Dieses kann beispielsweise in Förderrichtung anschliessend an die Füllstation 110 angeordnet sein. In Förderrichtung F folgen auf die Öffnungsstelle S5 die erste Öffnungsstelle S1, dann die zweite Öffnungsstelle S2, daraufhin die dritte Öffnungsstelle S3 und schlussendlich die vierte Öffnungsstelle S4.

Auf der Umlaufbahn U'" sind auf der Höhe der ersten Öffnungsstelle S1 und der zweiten Öffnungsstelle S2 nur Schaltmittel 115 auf der Ebene A angeordnet. An der ersten Öffnungsstelle S1 und der zweiten Öffnungsstelle S2 werden also nur Greifer 1 geöffnet, deren Steuerelemente 25, 35 mit Schaltmitteln 115 ersten Typs zusammenwirken. Auf der Höhe der dritten Öffnungsstelle S3 und der vierten Öffnungsstelle S4 hingegen sind nur Schaltmittel 115 auf der Ebene B angeordnet. An der dritten Öffnungsstelle S3 und der vierten Öffnungsstelle S4 werden also nur Greifer 1 geöffnet, deren Steuerelemente 25, 35 mit Schaltmitteln 115 zweiten Typs zusammenwirken. Werden die Greifer 1 der Förderanlage 87 in der Füllstation 110 entsprechend bestückt (also eine erste Sorte von Gegenständen 2 in Greifer 1, welche mit Schaltmitteln 115 des ersten Typs zusammenwirken und eine zweite Sorte von Gegenständen 2 in Greifer 1, welche mit Schaltmitteln 115 des zweiten Typs zusammenwirken), können die geförderten Gegenstände 2 sortiert werden und insbesondere Ausschuss gezielt aussortiert werden.

Die Schaltmittel 115 der ersten vier Öffnungsstellen S1-S4 können durch Steuereinrichtungen aktivierbar und deaktivierbar sein. Auf diese Weise ist eine maximale Flexibilität der Förderanlage 87 gewährleistet. Die Schaltmittel 115 auf Höhe der Füllstation 110 sind steuereinrichtungsfrei ausgebildet. Wenn die Greifer 1 nach einmaligem Durchlauf aller fünf Öffnungsstellen S1-S5 geleert sein müssen, kann dies einerseits durch eine entsprechende Programmierung der Steuerungseinrichtung sichergestellt werden. Andererseits können auch die Schaltmittel 115 der zweiten Öffnungsstelle S2 und der vierten Öffnungsstelle S4 steuereinrichtungsfrei sein, wodurch die Förderanlage 87 einfacher und kostengünstiger gestaltet werden kann.

Im Prinzip ist die Funktionsweise der Förderanlage 87 in Fig. 21a der Funktionsweise der Förderanlage 86 in Fig. 18 und 19 vergleichbar, ausser dass die fünfte Öffnungsstelle S5 bezüglich der Förderrichtung F anders angeordnet ist.

In Fig. 21b ist prinzipiell dieselbe Förderanlage 87 wie in Fig. 21a gezeigt, ausser dass in Fig. 21b die Ebene B ebenfalls oberhalb der Umlaufbahn U'" angeordnet ist. Die Ebene B liegt in Fig. 21b dabei unterhalb der Ebene A. Die Ebene B weist eine geringere Distanz zur Umlaufbahn U'" auf als die Ebene A. Durch die unterschiedlichen Distanzen zur Umlaufbahn U'" unterscheiden sich Schaltmittel 115 auf den Ebenen A und B.

In Fig. 21c ist eine Förderanlage 87 mit sechs Schaltmittel 115 gleichen Typs dargestellt. Die sechs Schaltmittel 115 liegen alle auf derselben Ebene A. In Förderrichtung F folgen auf die Füllstation 110, auf deren Höhe ein steuereinrichtungsfreies Schaltmittel 115 angeordnet ist, die erste Öffnungsstelle S1, dann die zweite Öffnungsstelle S2, dann die dritte Öffnungsstelle S3, daraufhin die vierte Öffnungsstelle S4, und schlussendlich die fünfte Öffnungsstelle S5. Das Schaltmittel 115 der ersten vier Öffnungsstellen S1-S4 sind durch Steuereinrichtungen aktivierbar und deaktivierbar. Das Schaltmittel der fünften Öffnungsstelle S5 ist steuereinrichtungsfrei ausgebildet, um eine Leerung der Greifer 1 nach Durchlauf aller fünf Öffnungsstationen S1-S5 sicherzustellen. Alternativ kann das Schaltmittel der fünften Öffnungsstelle S5 aber auch mit einer Steuereinrichtung aktivierbar und deaktivierbar sein, und die Leerung wird durch eine entsprechende Programmierung gewährleistet. Eine Förderanlage 87 wie in Fig. 21c dargestellt ist wesentlich flexibler als die Förderanlagen in Fig. 21a und Fig. 21b, aber auch komplizierter und aufwendiger in Aufbau, Konstruktion, Programmierung, Unterhalt und Wartung.

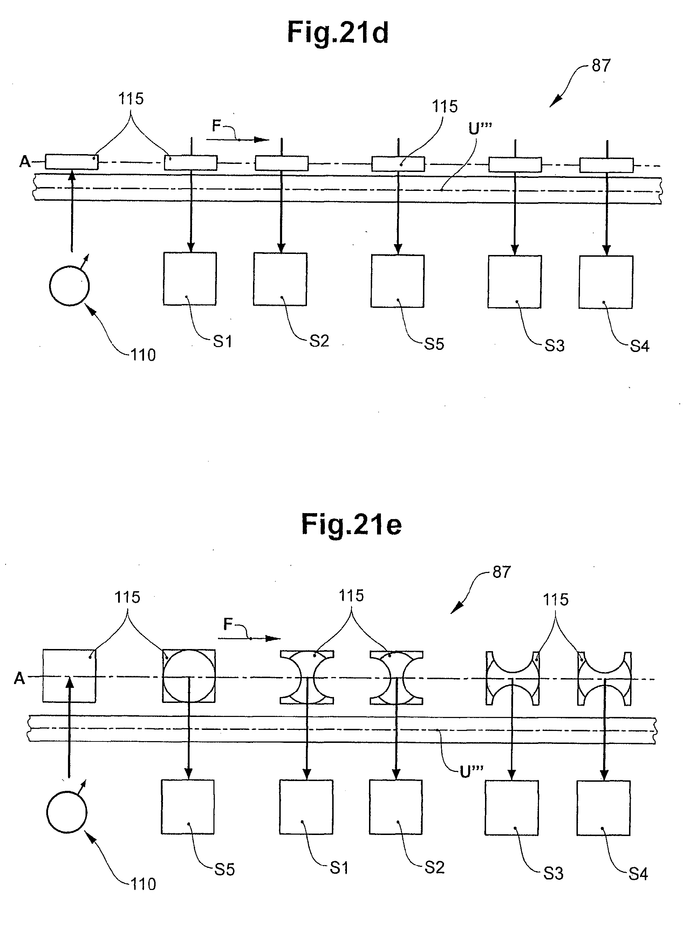

Fig. 21d zeigt eine Förderanlage 87 analog zu Fig. 21c, wobei lediglich die fünfte Öffnungsstelle S5 in Förderrichtung unterschiedlich angeordnet ist. Die fünfte Öffnungsstelle S5 befindet sich in der Förderanlage 87 in Förderrichtung F folgend auf die zweite Öffnungsstelle S2 und in Förderrichtung F vor der dritten Öffnungsstelle S3. Da auch hier wie in Fig. 21c alle Schaltmitteln 115 auf derselben Ebene A liegen, ist das Schaltmittel 115 der fünften Öffnungsstelle S5 durch eine Steuereinrichtung aktivierbar und deaktivierbar. Wäre das Schaltmittel 115 der fünften Öffnungsstelle S5 steuereinrichtungsfrei, würde sie mit allen vorbei geförderten Greifern 1 zusammenwirken, und alle Greifer würden an dieser Stelle der Umlaufbahn U'" geleert. Es würde also kein Gegenstand 2 die dritte Öffnungsstelle S3 oder die vierte Öffnungsstelle S4 erreichen. Um ein Leerung der Greifer 1 nach einmaligem Durchlauf der fünf Öffnungsstellen S1-S5 sicherzustellen, kann in dieser Anordnung das Schaltmittel 115 der vierten Öffnungsstelle S4 steuereinrichtungsfrei ausgebildet sein. Dies vereinfacht auch die Förderanlage 87 mit allen weiter oben genannten Vorteilen.

Fig. 21e zeigt eine Förderanlage 87 mit sechs Schaltmitteln 115 unterschiedlichen Typs, welche aber auf derselben Ebene A angeordnet sind. Die Schaltmittel 115 sind teilweise mit Aussparungen wie weiter oben beschrieben versehen, so dass diese Schaltmittel 115 alternierend mit jedem zweiten vorbei geförderten Steuerelement 25 zusammenwirken. In Förderrichtung F ist zuerst eine Füllstation 110 mit einem steuereinrichtungsfreien Schaltmittel 115 angeordnet. In Förderrichtung F folgend ist die fünfte Öffnungsstelle S5 mit einem ebenfalls steuereinrichtungsfreien Schaltmittel 115 angeordnet. In Förderrichtung F darauf folgend sind zuerst die erste Öffnungsstelle S1, dann die zweite Öffnungsstelle S2, daraufhin die dritte Öffnungsstelle S3 und schliesslich die vierte Öffnungsstelle S4 angeordnet. Dabei weisen diese vier ersten Öffnungsstellen S1-S4 Schaltmittel 115 mit Aussparungen auf.

Das Schaltmittel 115 der ersten Öffnungsstelle S1 und der zweiten Öffnungsstelle S2 sind derart synchronisiert, dass diese mit den Steuerelementen 25 derselben Greifer 1 zusammenwirken. Das Schaltmittel 115 der dritten Öffnungsstelle S3 und der vierten Öffnungsstelle S4 sind ebenfalls derart synchronisiert, dass diese mit den Steuerelementen 25 derselben Greifer 1 zusammenwirken, wobei dies die Steuerelemente 25 der Greifer 1 sind, mit welchen die Schaltmittel 115 der ersten Öffnungsstelle S1 und der zweiten Öffnungsstelle S2 nicht zusammenwirken. Die Schaltmittel 115 der fünf Öffnungsstellen S1-S5 können durch Steuereinrichtungen aktivierbar und deaktivierbar sein. Auf diese Weise ist eine maximale Flexibilität der Förderanlage 87 gewährleistet. Das Schaltmittel 115 der Füllstation 110 ist steuereinrichtungsfrei ausgebildet. Wenn die Greifer 1 nach einmaligem Durchlauf aller fünf Öffnungsstellen S1-S5 geleert sein müssen, kann dies einerseits durch eine entsprechende Programmierung der Steuerungseinrichtung sichergestellt werden. Andererseits können auch die Schaltmittel 115 der zweiten Öffnungsstelle S2 und der vierten Öffnungsstelle S4 steuereinrichtungsfrei sein, wodurch die Förderanlage 87 einfacher und kostengünstiger gestaltet werden kann.

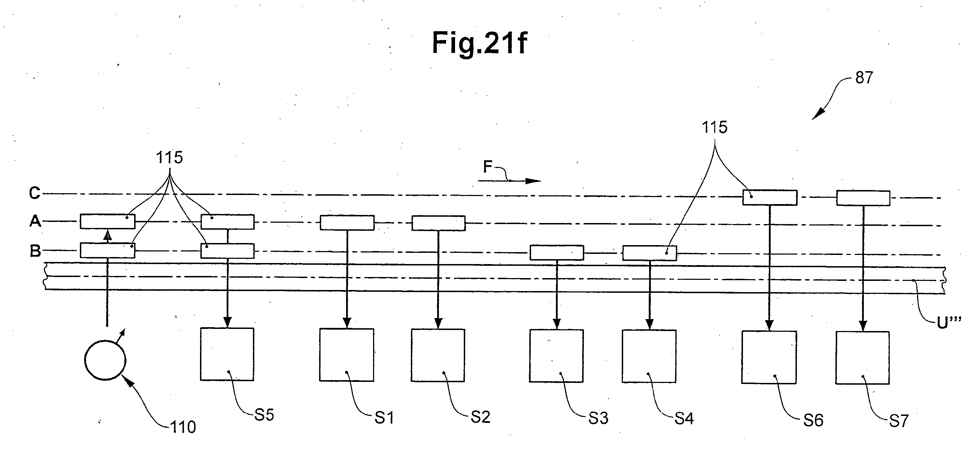

Fig. 21f zeigt dieselbe Förderanlage 87 wie Fig. 21b, wobei lediglich in Förderrichtung F folgend auf die vierte Öffnungsstelle S4 noch eine sechste Öffnungsstelle S6 sowie darauf folgend eine siebte Öffnungsstelle S7 angeordnet sind. Ausserdem weist die Förderanlage eine zusätzliche Ebene C oberhalb der Ebene A auf. Die sechste Öffnungsstelle S6 und die siebte Öffnungsstelle S7 weisen je ein Schaltmittel 115 eines dritten Typs auf, wobei diese Schaltmittel 115 dritten Typs auf der Ebene C angeordnet sind. Die Ebene C weist einen grösseren Abstand von der Umlaufbahn U'" auf als die Ebenen B und A und unterscheidet sich dadurch von diesen. Damit soll illustriert werden, dass die Förderanlagen 87 nicht auf nur zwei Ebenen beschränkt sind, sondern auch drei oder mehr Ebenen aufweisen können. Auf jeder Ebene können Schaltmittel 115 eines und/oder mehreren Typs angeordnet sein. Auf diese Weise kann die Förderanlage 87 flexibel und vielseitig eingesetzt werden.

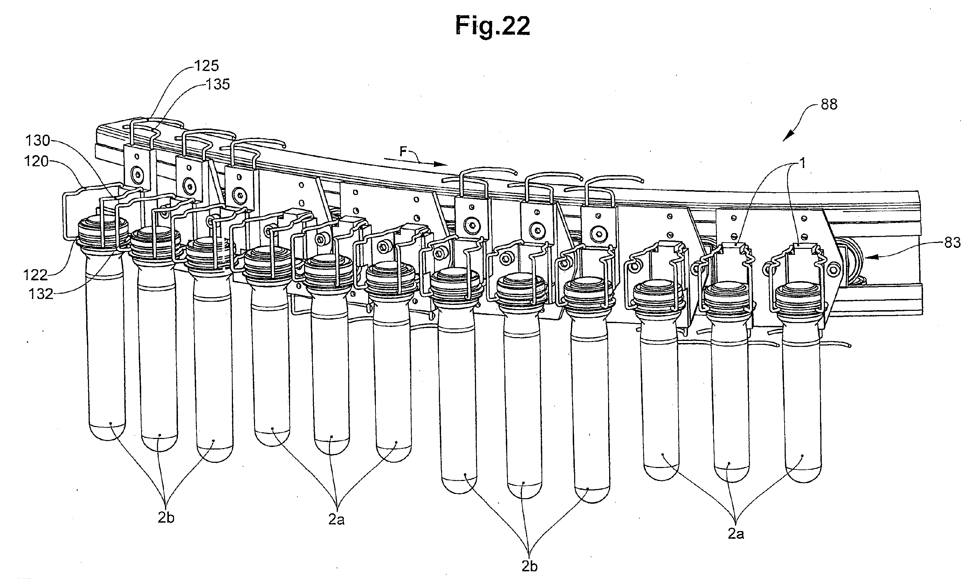

Fig. 22 zeigt gemäss einem dritten Aspekt einen Teil einer Förderanlage 88 zum Fördern von Gruppen von Gegenständen 2a, 2b gleicher Sorte, wobei sich in Förderrichtung F Gruppen von Gegenständen 2a einer ersten Sorte mit Gruppen von Gegenständen 2b einer zweiten Sorte abwechseln. Die Förderanlage 88 umfasst ein Antriebsorgan 83, welches mehrere Glieder umfasst.

Die Gruppen von Gegenständen 2a einer ersten Sorte und die Gruppen von Gegenständen 2b einer zweiten Sorte reichen über einzelne Glieder des Antriebsorgans 83 hinaus.

In Figur 22 weist ein Glied des Antrieborgans 83 je zwei Greifer 1 mit je einem Greiferbackenpaar auf. Die Gruppen der ersten Sorte von Gegenständen 2a und der zweiten Sorte von Gegenständen 2b umfassen je drei Gegenstände 2a, 2b.

Ein Greiferbackenpaar umfasst zwei Greiferbacken 120, 130 mit je einem Steuerelement 125, 135. Ein Steuerelement 125 ist in Förderrichtung F vorlaufend angeordnet, und ein Steuerelement 135 ist in Förderrichtung F nachlaufend angeordnet. Die Steuerelemente 125, 135 der Greifer 1 sind derart ausgebildet, dass sie jeweils mit entsprechenden, voneinander verschiedenen Schaltmitteln zusammenwirken können.

Die Steuerelemente 125, 135 der verschiedenen Gruppen von Gegenständen gleicher Sorte sind auf verschiedenen Seiten des Antrieborgans 83 angeordnet. Die Steuerelemente 125, 135 der Gruppen von Gegenständen 2a der ersten Sorte sind unterhalb des Antrieborgans 83 angeordnet, und die Steuerelemente 125, 135 der Gruppen von Gegenständen 2b der zweiten Sorte sind oberhalb des Antrieborgans 83 angeordnet.

Die Steuerelemente 125, 135 der verschiedenen Gruppen von Gegenständen 2a, 2b gleicher Sorte wirken jeweils nur mit entsprechenden, spezifischen und nach Gruppe verschiedenen Schaltmitteln zusammen. Jede Gruppe von Gegenständen 2a, 2b gleicher Sorte weist eigene Schaltmittel für die Steuerelemente 125, 135 der eigenen Gruppe auf.

Im Gegensatz zu den Greifern 1 der vorgehenden Figuren ergreifen die Greifer 1 der Figur 22 Gegenstände seitlich und nicht von oben, d.h. der Klemmbereich 122, 132 der Greiferbacken 120, 130 ist quer zu den Achsen A1, A1', A2, A2' der Greiferbacken 120, 130 angeordnet und nicht parallel dazu.

Die Greifer 1 der Figuren 1-7, 9-11, 14-17, 22 oder deren Verallgemeinerungen und/oder einzelne Merkmale und/oder Bestandteile dieser Greifer 1 oder deren Verallgemeinerungen können auch miteinander kombiniert werden. Auch die Förderanlagen 80, 81, 86, 87 der Figuren 8, 12-13, 18-22 oder deren Verallgemeinerungen und/oder einzelne Merkmalen und/oder Bestandteile dieser Förderanlagen 80, 81, 86, 87 können miteinander kombiniert werden.

## Patentansprüche

1. Greifer (1) zum Ergreifen und gehaltenen Fördern von Gegenständen (2), mit einer ersten Greiferbacke (20) und einer zweiten Greiferbacke (30), die relativ zueinander einen offenen und einen geschlossenen Zustand einnehmen können, und die eine Klemmkraft auf den zu ergreifenden Gegenstand (2) ausüben können, und mit wenigstens einem Steuerelement (25, 35), das auf die erste Greiferbacke (20) und/oder zweite Greiferbacke (30) wirkt, wobei das Steuerelement (25, 35) als eine Steuerkulisse ausgebildet ist, welche eine funktionale Kontur mit mindestens einem gekrümmten Kontursegment (102a-d) aufweist und welche mit einem Schaltmittel (72, 74, 91, 92, 114, 115) zusammenzuwirken imstande ist,
**dadurch gekennzeichnet, dass**
auf die erste Greiferbacke (20) und die zweite Greiferbacke (30) eine rücktreibende Kraft in Richtung des geschlossenen Zustands wirkt, und wenigstens eine der Greiferbacken (20, 30) einen Backenkörper umfasst, der elastisch verformbar ist und so an einem Greiferkörper (10) gelagert ist, dass der Backenkörper ohne Krafteinwirkung auf das Steuerelement (25, 35) eine definierte räumliche Position einnimmt und sich bei Krafteinwirkung auf das Steuerelement (25, 35) elastisch verformt.

2. Greifer (1) nach Anspruch 1, **dadurch gekennzeichnet, dass** unter Belastung, insbesondere wenn durch das Steuerelement (25, 35) ein Drehmoment auf den Backenkörper übertragen wird, der Backenkörper mindestens in einzelnen Abschnitten verdreht wird, also eine Torsion erfährt.

3. Greifer (1) nach Anspruch 1 oder 2, **dadurch gekennzeichnet, dass** der Backenkörper bei der elastischen Verformung durch geeignete Lagerung im Greiferkörper (10) über seine gesamte Ausdehnung elastisch verformt wird.

4. Greifer (1) nach einem der Ansprüche 1 bis 3, **dadurch gekennzeichnet, dass** der Backenkörper an wenigstens drei Punkten, die nicht entlang einer gemeinsamen Achse liegen, oder wenigstens zwei verschiedenen Achsen am Greiferkörper (10) gelagert ist.

5. Greifer (1) nach einem der Ansprüche 1 bis 4, **dadurch gekennzeichnet, dass** das Steuerelement (25, 35) aus einem draht- oder rohrförmigen Werkstoff ist.

6. Greifer (1) nach einem der Ansprüche 1 bis 5, **dadurch gekennzeichnet, dass** das Steuerelement (25, 35) einteilig mit einer Greiferbacke (20, 30) ausgebildet ist.

7. Greifer (1) nach einem der Ansprüche 1 bis 6, **dadurch gekennzeichnet, dass** die funktionale Kontur des Steuerelements (25, 35) im Wesentlichen in einer Ebene liegt.

8. Vorrichtung, aufweisend einen Greifer (1) nach einem der Ansprüche 1 bis 7 und ein Schaltmittel (72, 74, 91, 92, 114, 115), wobei die funktionale Kontur des Greifers (1) mit dem Schaltmittel (72, 74, 91, 92, 114, 115) zusammenzuwirken imstande ist, und wobei das Schaltmittel (72, 74, 91, 92, 114, 115) geometrisch einfach ausgebildet ist.

9. Vorrichtung nach Anspruch 8, **dadurch gekennzeichnet, dass** die funktionale Kontur des Steuerelements (25, 35) ein erstes Kontursegment (102a-d) umfasst, dessen funktionale Kontur derart ausgebildet ist, dass sie beim Zusammenwirken mit dem Schaltmittel (72, 74, 91, 92, 114, 115) ein Lösen einer Klemmkraft mindestens einer Greiferbacke (20, 30) mit einer ersten Geschwindigkeit bewirkt, und ein zweites Kontursegment (102a-d) umfasst, dessen funktionale Kontur derart ausgebildet ist, dass sie beim Zusammenwirken mit dem Schaltmittel (72, 74, 91, 92, 114, 115) ein Öffnen der mindestens einen Greiferbacke (20, 30) mit einer zweiten Geschwindigkeit bewirkt, wobei das Öffnen der mindestens einen Greiferbacke (20, 30) zeitlich auf das Lösen der Klemmkraft der mindestens einen Greiferbacke (20, 30) folgt und wobei insbesondere die zweite Geschwindigkeit höher oder tiefer als die erste Geschwindigkeit ist.

10. Vorrichtung nach Anspruch 8 oder 9, **dadurch gekennzeichnet, dass** die funktionale Kontur des Steuerelements (25, 35) ein erstes Kontursegment (102a-d) umfasst, dessen funktionale Kontur derart ausgebildet ist, dass sie beim Zusammenwirken mit dem Schaltmittel (72, 74, 91, 92, 114, 115) ein Schliessen mindestens einer Greiferbacke (20, 30) mit einer ersten Geschwindigkeit bewirkt, und ein zweites Kontursegment (102a-d) umfasst, dessen funktionale Kontur derart ausgebildet ist, dass sie beim Zusammenwirken mit dem Schaltmittel (72, 74, 91, 92, 114, 115) ein Anlegen einer Klemmkraft der mindestens einen Greiferbacke (20, 30) mit einer zweiten Geschwindigkeit bewirkt, wobei das Anlegen der Klemmkraft der mindestens einen Greiferbacke (20, 30) zeitlich auf das Schliessen der mindestens einen Greiferbacke (20, 30) folgt und wobei insbesondere die zweite Geschwindigkeit kleiner oder grösser als die erste Geschwindigkeit ist.

11. Vorrichtung nach einem der Ansprüche 8 bis 10, **dadurch gekennzeichnet, dass** die funktionale Kontur des Steuerelements (25, 35) mindestens ein Kontursegment (102a-d) und insbesondere mindestens zwei Kontursegmente (102a-d) umfasst, deren funktionale Kontur derart ausgebildet ist, dass sie beim Zusammenwirken mit dem Schaltmittel (72, 74, 91, 92, 114, 115) in einem Bereich zu Beginn und/oder einem Bereich am Ende einer Krafteinwirkung auf das Steuerelement (25, 35) eine kontinuierliche Zunahme oder eine kontinuierliche Verringerung der Geschwindigkeit der Auslenkung mindestens einer Greiferbacke (20, 30) bewirkt.

12. Vorrichtung nach einem der Ansprüche 8 bis 11, **dadurch gekennzeichnet, dass** die funktionale Kontur des Steuerelements (25, 35) mindestens ein Kontursegment (102a-d) umfasst, dessen funktionale Kontur derart ausgebildet ist, dass sie beim Zusammenwirken mit dem Schaltmittel (72, 74, 91, 92, 114, 115) physische Veränderungen des Steuerelements (25, 35) bei einer Krafteinwirkung auf das Steuerelement (25, 35) in seiner Formgebung berücksichtigt und insbesondere ein Verbiegen des Steuerelements (25, 35) bei der Krafteinwirkung auf das Steuerelements (25, 35) in seiner Formgebung berücksichtigt.

13. Vorrichtung nach einem der Ansprüche 8 bis 12, **dadurch gekennzeichnet, dass** das geometrisch einfach ausgebildete Schaltmittel (72, 74, 91, 92, 114, 115) eine Stange, ein Platte, ein Quader, ein abgerundetes Element, eine Kugel, eine Scheibe oder ein Rad ist.

14. Vorrichtung nach einem der Ansprüche 8 bis 13, **dadurch gekennzeichnet, dass** das Schaltmittel (72, 74, 91, 92, 114, 115) in einer Fördervorrichtung starr und unbeweglich befestigt, beweglich (insbesondere drehbar) befestigt oder gefedert befestigt sein.

15. Vorrichtung, aufweisend einen Greifer (1) nach einem der Ansprüche 1 bis 7 und ein Schaltmittel (72, 74, 91, 92, 114, 115), oder eine Vorrichtung nach einem der Ansprüche 8 bis 14, **dadurch gekennzeichnet, dass** das Schaltmittel (72, 74, 91, 92, 114) eine Scheibe und insbesondere ein Rad aufweist, welches mit der funktionalen Kontur des Steuerelements (25, 35) zusammenwirkt und das Schaltmittel (72, 74, 91, 92, 114) als ein Rad mit einer Nut (100) auf der Umfangseite ausgebildet ist.

16. Vorrichtung nach einem der Ansprüche 8 bis 15, **dadurch gekennzeichnet, dass** viele Greifer mit wenigen Schaltmitteln zusammenwirken.

## Claims

1. A gripper (1) for the gripping and held conveying of objects (2), with a first gripper jaw (20) and with a second gripper jaw (30), which can assume an open and a closed condition relative to one another and which can exert a clamping force onto the object (2) to be gripped, and with at least one control element (25, 35) which acts upon the first gripper jaw (20) and/or the second gripper jaw (30), wherein the control element (25, 35) is designed as a cam guide which comprises a functional contour with at least one arcuate contour segment (102a-d) and which is capable of interacting with a switch means (72, 74, 91, 92, 114, 115),
**characterised in that**
a restoring force in direction of the closed condition acts onto the first gripper jaw (20) and the second gripper jaw (30), and
at least one of the gripper jaws (20, 30) comprises a jaw body which is elastically deformable and is mounted on the gripper body (10) such that the jaw body assumes a defined, spatial position without a force action upon the control element (25, 35), and elastically deforms given the application of a force onto the control element (25, 35).

2. A gripper (1) according to claim 1, **characterised in that** the jaw body is twisted, i.e. experiences a torsion, at least in individual sections under loading, in particular when a torque is transmitted onto the jaw body by the control element (25, 35).

3. A gripper (1) according to claim 1 or 2, **characterised in that** the jaw body during its elastic deformation is deformed elastically over its whole extent due to a suitable mounting in the gripper body (10).

4. A gripper (1) according to one of the claims 1 to 3, **characterised in that** the jaw body is mounted on the gripper body (10) at least at three points which do not lie along a common axis, or at least two different axes.

5. A gripper (1) according to one of the claims 1 to 4, **characterised in that** the control element (25, 35) is of a wire-like or tubular material.

6. A gripper (1) according to one of the claims 1 to 5, **characterised in that** the control element (25, 35) is designed in a single-part manner with a gripper jaw (20, 30).

7. A gripper (1) according to one of the claims 1 to 6, **characterised in that** the functional contour of the control element (25, 35) lies essentially in one plane.

8. A device comprising a gripper (1) according to one of the claims 1 to 7, and a switch means (72, 74, 91, 92, 114, 115), wherein the functional contour of the gripper (1) is capable of interacting with the switch means (72, 74, 91, 92, 114, 115), and wherein the switch means (72, 74, 91, 92, 114, 115) is designed in a simple geometric manner.

9. A device according to claim 8, **characterised in that** the functional contour of the control element (25, 35) comprises a first contour segment (102a-d) whose functional contour is designed in a manner such that during interaction with the switch means (72, 74, 91, 92, 114, 115) it effects a release of a clamping force of at least one gripper jaw (20, 30) at a first speed, and a second contour segment (102a-d) whose functional contour is designed in a manner such that during interaction with the switch means (72, 74, 91, 92, 114, 115) it effects an opening of the at least one gripper jaw (20, 30) at a second speed, wherein the opening of the at least one gripper jaw (20, 30) is temporally successive to the release of the clamping force of the at least one gripper jaw (20, 30) and wherein in particular the second speed is greater or lower than the first speed.

10. A device according to claim 8 or 9, **characterised in that** the functional contour of the control element (25, 35) comprises a first contour segment (102a-d), whose functional contour is designed in a manner such that during interaction with the switch means (72, 74, 91, 92, 114, 115) it effects a closure of at least one gripper jaw (20, 30) at a first speed, and a second contour segment (102a-d) whose functional contour is designed in a manner such that during interaction with the switch means (72, 74, 91, 92, 114, 115) it effects an application of a clamping force of the at least one gripper jaw (20, 30) at a second speed, wherein the application of the clamping force of the at least one gripper jaw (20, 30) is temporally successive to the closure of the at least one gripper jaw (20, 30) and wherein in particular the second speed is smaller or larger than the first speed.

11. A device according to one of the claims 8 to 10, **characterised in that** the functional contour of the control element (25, 35) comprises at least one contour segment (102a-d) and in particular at least two contour segments (102a-d) whose functional contour is designed in a manner such that during its interaction with the switch means (72, 74, 91, 92, 114, 115) in the region at the beginning and/or a region at the end of a force action upon the control element (25, 35) effects a continuous increase or a continuous reduction of the speed of the deflection of at least one gripper jaw (20, 30).

12. A device according to one of the claims 8 to 11, **characterised in that** the functional contour of the control element (25, 35) comprises at least one contour segment (102a-d) whose functional contour is designed in a manner such that during interaction with the switch means (72, 74, 91, 92, 114, 115) it takes into account physical changes of the control element (25, 35) in its shaping given a force action upon the control element (25, 35), and in particular with regard to its shaping takes into account a bending of the control element (25, 35) given a force action upon the control element (25, 35).

13. A device according to one of the claims 8 to 12, **characterised in that** the switch means (72, 74, 91, 92, 114, 115) designed in a simple geometric manner is a rod, a plate, a cuboid, a rounded element, a ball, a disc or a wheel.

14. A device according to one of the claims 8 to 13, **characterised in that** the switch means (72, 74, 91, 92, 114, 115) is rigidly and immovably fastened, movably (in particular rotatably) fastened or resiliently fastened, in a conveying device.

15. A device comprising a gripper (1) according to one of the claims 1 to 7, and a switch means (72, 74, 91, 92, 114, 115), or a device according to one of the claims 8 to 14, **characterised in that** the switch means (72, 74, 91, 92, 114) comprises a disc and in particular a wheel, which interacts with the functional contour of the control element (25, 35),and that the switch means (72, 74, 91, 92, 114) is designed as a wheel with a groove (100) on the peripheral side.

16. A device according to one of the claims 8 to 15, **characterised in that** many grippers interact with few switch means

## Revendications

1. Pince (1) destinée à saisir et à transporter des objets (2) en les retenant et présentant
une première mâchoire (20) de pince et une deuxième mâchoire (30) de pince qui peuvent prendre l'une par rapport à l'autre une position ouverte et une position fermée et qui peuvent exercer une force de serrage sur l'objet (2) à saisir et
au moins un élément de commande (25, 35) qui agit sur la première mâchoire (20) de pince et/ou sur la deuxième mâchoire (30) de pince,
l'élément de commande (25, 35) étant configuré comme coulisseau de commande qui présente un contour fonctionnel doté d'au moins un segment courbe (102a-d) et apte à coopérer avec un moyen de commutation (72, 74, 91, 92, 114, 115),
**caractérisée en ce que**
une force de rétraction agit en direction de la position fermée sur la première mâchoire (20) de pince et la deuxième mâchoire (30) de pince et
**en ce qu'**au moins l'une des mâchoires (20, 30) de pince comporte un corps de mâchoire élastiquement déformable monté sur un corps (10) de pince de telle sorte que le corps de mâchoire prenne une position spatiale définie en l'absence d'action d'une force sur l'élément de commande (25, 35) et qu'il se déforme élastiquement sous l'action d'une force sur l'élément de commande (25, 35).

2. Pince (1) selon la revendication 1, **caractérisée en ce qu'**en charge et en particulier lorsqu'un couple de rotation est transmis sur le corps de mâchoire par l'élément de commande (25, 35), le corps de mâchoire est tourné au moins dans certaines parties et subit ainsi une torsion.

3. Pince (1) selon les revendications 1 ou 2, **caractérisée en ce que** grâce à un montage approprié dans le corps (10) de pince, le corps de mâchoire est déformé élastiquement sur toute son extension lors de la déformation élastique.

4. Pince (1) selon l'une des revendications 1 à 3, **caractérisée en ce que** le corps de mâchoire est monté sur le corps (10) de pince en au moins trois points qui ne sont pas situés le long d'un axe commun, ou selon au moins deux axes différents.

5. Pince (1) selon l'une des revendications 1 à 4, **caractérisée en ce que** l'élément de commande (25, 35) est réalisé en un matériau en forme de fil ou de tube.

6. Pince (1) selon l'une des revendications 1 à 5, **caractérisée en ce que** l'élément de commande (25, 35) est configuré d'un seul tenant avec une mâchoire (20, 30) de pince.

7. Pince (1) selon l'une des revendications 1 à 6, **caractérisée en ce que** le contour fonctionnel de l'élément de commande (25, 35) est situé essentiellement dans un plan.

8. Ensemble présentant une pince (1) selon l'une des revendications 1 à 7 et un moyen de commutation (72, 74, 91, 92, 114, 115), dans lequel le contour fonctionnel de la pince (1) est en mesure de coopérer avec le moyen de commutation (72, 74, 91, 92, 114, 115), le moyen de commutation (72, 74, 91, 92, 114, 115) ayant une forme géométrique simple.

9. Ensemble selon la revendication 8, **caractérisé en ce que** le contour fonctionnel de l'élément de commande (25, 35) comporte un premier segment de contour (102a-d) dont le contour fonctionnel est configuré de telle sorte que lors de la coopération avec le moyen de commutation (72, 74, 91, 92, 114, 115), il a pour effet la libération à une première vitesse d'une force de serrage d'au moins une mâchoire (20, 30) de la pince, et un deuxième segment de contour (102a-d) dont le contour fonctionnel est configuré de telle sorte que lors de la coopération avec le moyen de commutation (72, 74, 91, 92, 114, 115), il a pour effet une ouverture de la ou des mâchoires (20, 30) de la pince à une deuxième vitesse, l'ouverture de la ou des mâchoires (20, 30) de la pince suivant la libération de la force de serrage de la ou des mâchoires (20, 35) de la pince, la deuxième vitesse étant en particulier plus élevée ou plus basse que la première vitesse.

10. Ensemble selon les revendications 8 ou 9, **caractérisé en ce que** le contour fonctionnel de l'élément de commande (25, 35) présente un premier segment de contour (102a-d) dont le contour fonctionnel est configuré de telle sorte que lors d'une coopération avec le moyen de commutation (72, 74, 91, 92, 114, 115), il a pour effet une fermeture d'au moins une mâchoire (20, 30) de la pince à une première vitesse et un deuxième segment de contour (102a-d) dont le contour fonctionnel est configuré de telle sorte que lors de la coopération avec le moyen de commutation (72, 74, 91, 92, 114, 115), il a pour effet une application d'une force de serrage par la ou les mâchoires (20, 30) de la pince à une deuxième vitesse, l'application de la force de serrage par la ou les mâchoires (20, 30) de la pince suivant la fermeture de la ou des mâchoires (20, 30) de la pince, la deuxième vitesse étant en particulier inférieure ou supérieure à la première vitesse.

11. Ensemble selon l'une des revendications 8 à 10, **caractérisé en ce que** le contour fonctionnel de l'élément de commande (25, 35) présente au moins un segment de contour (102a-d) et en particulier au moins deux segments de contour (102a-d) dont le contour fonctionnel est configuré de telle sorte que la coopération avec le moyen de commutation (72, 74, 91, 92, 114, 115) dans une partie située au début et/ou à la fin de l'action d'une force sur l'élément de commande (25, 35) a pour effet une augmentation continue ou une diminution continue de la vitesse de la déviation d'au moins une mâchoire (20, 30) de la pince.

12. Ensemble selon l'une des revendications 8 à 11, **caractérisé en ce que** le contour fonctionnel de l'élément de commande (25, 35) présente au moins un segment de contour (102a-d) dont le contour fonctionnel est configuré de telle sorte que lors d'une coopération avec le moyen de commutation (72, 74, 91, 92, 114, 115), la mise en forme du contour fonctionnel tient compte de modifications physiques de l'élément de commande (25, 35) lors de l'action d'une force sur la forme de l'élément de commande (72, 74, 91, 92, 114, 115) et en particulier la mise en forme du contour fonctionnel tient compte d'une flexion de l'élément de commande (25, 35) lors de l'action d'une force sur l'élément de commande (25, 35).

13. Ensemble selon l'une des revendications 8 à 12, **caractérisé en ce que** le moyen de commutation (72, 74, 91, 92, 114, 115) de configuration géométrique simple est une tringle, une plaque, un parallélépipède, un élément arrondi, une bille, un disque ou une roue.

14. Ensemble selon l'une des revendications 8 à 13, **caractérisé en ce que** le moyen de commutation (72, 74, 91, 92, 114, 115) est fixé dans un ensemble de transport de manière rigide et immobile, y est fixé de manière mobile (en particulier rotative) ou y est fixé de manière élastique.

15. Ensemble présentant une pince (1) selon l'une des revendications 1 à 7 et un moyen de commutation (72, 74, 91, 92, 114, 115) ou ensemble selon l'une des revendications 8 à 14, **caractérisé en ce que** le moyen de commutation (72, 74, 91, 92, 114) présente une plaque et en particulier une roue qui coopère avec le contour fonctionnel de l'élément de commande (25, 35) et **en ce que** le moyen de commutation (72, 74, 91, 92, 114) est configuré comme roue dotée d'une rainure (100) sur son côté périphérique.

16. Ensemble selon l'une des revendications 8 à 15, **caractérisé en ce que** de nombreuses pinces coopèrent avec un petit nombre de moyens de commutation.
